(19) Europäisches Patentamt
European Patent Office
Office européen des brevets

(11) **EP 3 445 691 B1**

(12) **EUROPÄISCHE PATENTSCHRIFT**

(45) Veröffentlichungstag und Bekanntmachung des Hinweises auf die Patenterteilung:
**08.12.2021** **Patentblatt 2021/49**

(21) Anmeldenummer: **17709595.7**

(22) Anmeldetag: **21.02.2017**

(51) Int Cl.:
**B65G 47/08** (2006.01)

(86) Internationale Anmeldenummer:
**PCT/EP2017/053858**

(87) Internationale Veröffentlichungsnummer:
**WO 2017/182169 (26.10.2017 Gazette 2017/43)**

(54) **VERFAHREN UND VORRICHTUNG ZUM UMGANG MIT IN MINDESTENS EINER REIHE HINTEREINANDER BEWEGTEN STUECKGUETERN**

METHOD AND DEVICE FOR HANDLING PIECE GOODS MOVED ONE AFTER THE OTHER IN AT LEAST ONE ROW

PROCÉDÉ ET DISPOSITIF POUR LA MANUTENTION DE MARCHANDISES DE DÉTAIL DÉPLACÉES LES UNES DERRIÈRE LES AUTRES EN AU MOINS UNE RANGÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2016 DE 102016206667**

(43) Veröffentlichungstag der Anmeldung:
**27.02.2019 Patentblatt 2019/09**

(73) Patentinhaber: **Krones Aktiengesellschaft**
**93073 Neutraubling (DE)**

(72) Erfinder:
• **ASTNER, Michael**
**93073 Neutraubling (DE)**
• **BEER, Erhard**
**93073 Neutraubling (DE)**
• **KOLLMUSS, Manuel**
**93073 Neutraubling (DE)**
• **MEHDI, Arsalan**
**93073 Neutraubling (DE)**

(74) Vertreter: **Benninger, Johannes**
**Benninger Patentanwaltskanzlei**
**Dr.-Leo-Ritter-Strasse 5**
**93049 Regensburg (DE)**

(56) Entgegenhaltungen:
EP-A1- 1 382 532      WO-A1-2010/106529
DE-A1- 1 486 012      DE-A1- 3 151 997
DE-A1-102008 003 157   DE-A1-102013 204 095
US-A1- 2005 230 221

**EP 3 445 691 B1**

**Beschreibung**

Die vorliegende Erfindung betrifft ein Verfahren zum Umgang mit in mindestens einer Reihe hintereinander bewegten Stückgütern mit den Merkmalen des unabhängigen Verfahrensanspruchs 1. Zudem betrifft die Erfindung eine Vorrichtung zum Umgang mit hintereinander bewegten Stückgütern mit den Merkmalen des unabhängigen Vorrichtungsanspruchs 13.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Das Dokument EP 1 456 101 A2 offenbart eine Vorrichtung zur Reihenbildung von Packgütern für Gebindepalletierer. Der Gebindepalletierer umfasst mindestens eine Lagenstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit Steuer- und regelbaren Antrieben besitzt. Mit den Steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere Schrumpfpacks, zur Schichtenbildung, umfassend einen kontinuierlich antreibbaren Förderer, einen dem Förderer nachgeordneten taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Der anhand von unterschiedlichen Dokumenten veranschaulichte bekannte Stand der Technik kann in der Praxis mehrere Nachteile mit sich bringen. Beim Lückenziehen oder Übergeben der Stückgüter zwischen Zuteilband, Transportband und ggf. auch Lagenbildungsband entsteht das Risiko, durch die jeweiligen Geschwindigkeitsunterschiede und hohen Beschleunigungs- und/oder entsprechend steilen Verzögerungsrampen die Stückgüter nicht in der anzustrebenden exakten Weise übergeben zu können. Einzelne Stückgüter können sich sogar von ihren vorgegebenen Positionen ab- oder wegdrehen. Eine nicht zu vernachlässigende Rolle spielt kommt zudem dem Reibwiderstand zwischen dem jeweiligen Förder- oder Transportband und der Unterseite des jeweiligen Stückgutes zu, was dazu führt, dass die Lücken zwischen den Takten nicht exakt reproduzierbar sind, sondern unterschiedlich ausfallen können. Zusätzlich kann ein Leistungsverlust entstehen, der sich durch den zurückzulegenden Weg der einzelnen Lücken beim sog. Eintakten vom Zuteilband auf das Transportband ergibt. Alle diese Effekte erhöhen die Zeitdauer, die für die Erstellung einer Palette benötigt wird.

Um diese Nachteile zu vermeiden, werden in der EP 2 107 018 A1 ein Verfahren und eine Vorrichtung vorgeschlagen, mit denen eine sichere, schnelle und qualitativ hochwertige Bereitstellung von Takten aus Gebinden und/oder Gebindegruppen möglich sein sollen, um solchermaßen die Reihen für die Lagen einer Palette auf effektive Weise erstellen zu können. Die vorgeschlagene Vorrichtung dient dem Zusammenstellen und Ausrichten von Gebindegruppen, wobei die Vorrichtung ein Zuteilband, ein Transportband und ein Reihen- oder Lagenbildungsband umfasst. Das Zuteilband, das Transportband und das Reihen- oder Lagenbildungsband ist zum Antrieb mit jeweils einem eigenen Motor versehen. Mittels einer Steuerung wird die Geschwindigkeit des Zuteilbandes reguliert, damit die auf dem Zuteilband Stoß an Stoß transportierten Gebinde bzw. Gebindegruppen auf dem Transportband in mehrere Takte aus Gebinden bzw. Gebindegruppen aufgeteilt werden können. Zwischen den einzelnen Takten werden vordefinierte Lücken gebildet. Dem Reihen- oder Lagenbildungsband kann ein Roboter zugeordnet sein, der die vom Transportband einlaufenden Takte zur Lagenbildung in Transportrichtung oder quer zur Transportrichtung verschieben und/oder drehen kann. Zudem soll das Lagenbildungsband die Erzeugung einer aus mehreren Reihen gebildeten Lage ermöglichen.

Aus der DE 10 2011 080 812 A1 ist weiterhin ein Verfahren zur Bildung von palettierfähigen Lagen aus nebeneinander stehenden Stückgütern auf einem Lagenbildungsplatz bekannt. Dem Lagenbildungsplatz ist ein programmgesteuerter Manipulator zum Abholen und/oder Überführen einzelner oder mehrerer Stückgüter an wenigstens zwei räumlich voneinander entfernten und/oder räumlich versetzten Zuführstationen und zum Positionieren durch Drehen und/oder Verschieben der Stückgüter in vorgebbare Freigabepositionen auf dem Lagenbildungsplatz zugeordnet.

Solche Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Weiterhin beschreibt EP 1382532 A1 eine Verpackungslinie, in der Flaschen kontinuierlich zugeführt werden und vermittels einer Vorrichtung zu Gruppen geordnet werden. Hierbei ist ein Förderband stromabwärts einer Zuführstation angeordnet, aus der die Flaschen austreten, und ein Trennsystem, das in Verbindung mit dem Förderband arbeitet. Die vorrückenden Flaschen werden durch erste und zweite flexible Bänder in Gruppen unterteilt. EP 1382532 A1 beschreibt die Merkmale der Oberbegriffe der Ansprüche 1 und 13.

Das Dokument DE 3151997 A1 beschreibt eine Vorrichtung zur Gruppierung von Flaschen oder dergleichen unter Verwendung von Einteilfingern bzw. Sprossen, die jeweils an Kettenpaaren angeordnet sind. Die Sprossen können zur Bildung von Gegenstandsgruppen zwischen die Gegenstände eintreten. Die derart abgeteilte Gegenstandgruppe wird über einen Transportabschnitt mit erhöhter Geschwindigkeit von den nachfolgenden Gegenständen beabstandet. Hierbei werden alle Flaschen/Gegenstände der Gruppe zeitweise zwischen zwei Einteilfingern erfasst.

US 2005/230221 beschreibt ein Abtrennen von Dosengruppen, welche jeweils zwischen Einteilern erfasst und von nachfolgenden Dosen abgetrennt werden. Dabei wird, die jeweils letzte Dose der Gruppe von einem Einteiler kontaktiert, der dann die gesamte Gruppe in Transportrichtung beschleunigt und dadurch abtrennt.

DE 1486012 offenbart eine Vorrichtung zur Herstellung von Verpackungseinheiten durch eine mechanische Gruppierung einer Anzahl von Behältern und zum mechanischen Zusammenfalten eines Hüllenschnitts um die entsprechende Behältergruppe. Die Abtrennung der vorab eingeteilten Gruppen erfolgt durch einen Haken, der dabei an dem jeweilig hinteren Behälter angreift.

DE 102013204095 A1 beschreibt eine Vorrichtung zum Ausrichten und/oder Gruppieren einer Anzahl von Stückgütern innerhalb eines definierten Bewegungsraumes mit einer Manipulationsvorrichtung, zum Verschieben und7oder Drehen der Stückgüter. Die Manipulationsvorrichtung umfasst ein bewegliches und/oder rotierbares Schieberelement zur Kontaktierung der Stückgüter an wenigstens zwei aneinandergrenzenden Seitenflächen.

Hauptziel aller bekannten Handhabungssysteme ist es, eine präzise Positionierung von Stückgütern, Paketen, Gebinden und/oder Artikeln für eine möglichst störungsfreie und zuverlässige Lagenbildungs-, Palettierungs- und/oder Verpackungsvorbereitung zu ermöglichen. Ein Nebenziel, das jedoch zunehmend wichtiger wird, besteht darin, hierbei die Taktzeiten zu reduzieren, ohne den bereits erreichten Grad an Präzision zu reduzieren oder Einbußen hinsichtlich der bereits erreichten Zuverlässigkeit in Kauf nehmen zu müssen. Das Verfahren soll die Verarbeitung von Stückgütern ermöglichen, die in mindestens einer Reihe befördert bzw. transportiert werden. Zudem soll das Verfahren mit höherer Geschwindigkeit ablaufen können als dies bisher möglich war, ohne dass damit Nachteile hinsichtlich der Positionierungspräzision und/oder der Zuverlässigkeit der Manipulation der Stückgüter in Kauf zu nehmen sind. Die entsprechende Vorrichtung soll schneller betreibbar sein als die aus dem Stand der Technik bekannten Manipulationsvorrichtungen, und dies bei zumindest annähernd gleicher Zuverlässigkeit und annähernd gleicher Stellpräzision.

Diese Ziele der Erfindung werden mit den Gegenständen der unabhängigen Ansprüche, d.h. mit einem Verfahren und mit einer Vorrichtung zum Umgang mit in mindestens einer Reihe hintereinander bewegten Stückgütern erreicht, welche die Merkmale der unabhängigen Patentansprüche umfassen. Merkmale vorteilhafter Weiterbildungen der Erfindung ergeben sich aus den jeweiligen abhängigen Ansprüchen.

Die Erfindung bezieht sich auf ein Verfahren und eine Vorrichtung bzw. Handhabungsvorrichtung zum Umgang mit in mindestens einer Reihe hintereinander bewegt Stückgütern. Wenn also im Zusammenhang der vorliegenden Beschreibung nur noch von einem Verfahren, einer Verfahrensvariante, dem erfindungsgemäßen Verfahren o. dgl. die Rede ist, so ist damit generell das genannte Verfahren zum Umgang mit in mindestens einer Reihe hintereinander bewegten Stückgütern gemeint. Wenn zudem im Zusammenhang der vorliegenden Beschreibung nur noch von einer Vorrichtung, einer Handhabungsvorrichtung, einer Vorrichtungsvariante, der erfindungsgemäßen Vorrichtung o. dgl. die Rede ist, so ist damit generell die genannte Vorrichtung zum Umgang mit in mindestens einer Reihe hintereinander bewegten Stückgütern gemeint. Wenn hier, in den Ausführungsbeispielen, in den Ansprüchen und/oder im Zusammenhang mit der gesamten Beschreibungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, die in einem Erfassungsraum bzw. Erfassungsbereich angeordnet sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung die Rede ist, so ist damit im Zusammenhang mit der vorliegend beschriebenen Vorrichtung insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das klemmende Greifen eines Stückgutes oder gleichzeitig mehrerer Stückgüter sowie deren bzw. dessen Handhabung bis zur Erreichung der Zielposition und/oder Zielausrichtung gemeint.

Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in Reihe hintereinander bewegten Stückgüter können dabei je nach Anforderung von nachfolgenden Handhabungsvorrichtungen gleich oder unterschiedlich ausgebildet sein.

Die in einer Reihe ohne Abstände oder mit minimalen Abständen bewegten und/oder zu einem - insbesondere Manipulationsbereich bzw. Erfassungsbereich genannten - Bereich beförderten, mindestens zwei unmittelbar aufeinanderfolgenden Stückgüter werden als geschlossene Formation transportiert. Mit dem Begriff der geschlossenen Formation ist eine weitgehend lückenlose Aufeinanderfolge von Stückgütern gemeint, die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos- Formation transportiert werden, die keine Unterbrechung aufweist und eine beliebige Anzahl von Stückgütern umfasst. Aus dieser geschlossenen Formation wird wenigstens ein transportiertes Stückgut klemmend erfasst, von der geschlossenen Formation räumlich abgetrennt und in eine definierte relative Zielposition und/oder Zielausrichtung gegenüber nachfolgenden Stückgütern der Formation gebracht. Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein.

Als abweichende Option, die sich gleichwohl auf einige Ausführungsvarianten des erfindungsgemäßen Verfahrens zum Umgang mit in mindestens einer Reihe hintereinander bewegten Stückgütern und/oder der erfindungsgemäßen Vorrichtung zum Umgang mit in mindestens einer Reihe hintereinander bewegten Stückgütern oder auch auf mehrere Ausführungsvarianten dieses Verfahrens bzw. dieser Vorrichtung beziehen kann, können die in definierten Reihen ohne jeweilige Abstände oder mit minimalen jeweiligen Abständen voneinander bewegten und/oder zu einem - insbesondere Manipulationsbereich bzw. Erfassungsbereich genannten - Bereich beförderten, mindestens zwei unmittelbar aufeinanderfolgenden Stückgüter jeweils in getakteten Formationen befördert bzw. transportiert werden. Mit dem Begriff der getakteten Formation und/oder des getakteten Zulaufs ist eine weitgehend regelmäßige Aufeinanderfolge von definierten Reihen von Stückgütern gemeint, die in den definierten Reihen hintereinander transportiert werden, wobei jedoch zwischen aufeinander folgenden Reihen die definierten Lücken auftreten können, was den Begriff der Taktung des Zulaufs bzw. der Taktung der Formationen meint. Die geschlossenen und/oder lückenlosen Reihen im Sinne der vorliegenden Erfindung können jeweils eine endliche Länge haben und eine begrenzte Zahl von Stückgütern umfassen, wonach eine Lücke und einer solchen Lücke ggf. eine weitere solche Reihe mit jeweils lückenlos aufeinander folgenden Stückgütern folgen kann, die nachfolgend transportiert wird. Eine solche Abfolge kann sich wiederholen, ggf. auch mehrfach, vielfach oder in unbestimmter Zahl, vorzugsweise in regelmäßiger Abfolge, ggf. jedoch auch in zyklisch regelmäßigen Mustern oder auch in unregelmäßiger Aufeinanderfolge. Die geschlossenen Reihen einer solchermaßen getakteten Formation können grundsätzlich jeweils eine beliebige Anzahl von Stückgütern umfassen. Aus diesen geschlossenen Reihen der getakteten Formationen wird jeweils wenigstens ein transportiertes Stückgut klemmend erfasst, von der lückenlosen Reihe der getakteten Formation räumlich abgetrennt und in eine definierte relative Zielposition und/oder Zielausrichtung gegenüber nachfolgenden Stückgütern der Formation gebracht, wobei meist ein zuvorderst befindliches Stückgut der jeweiligen Reihe mittels des Manipulators erfasst und von der Reihe abgegriffen wird.

Als weitere, auch von den zuvor genannten Varianten abweichende Option, die sich gleichwohl auf einige Ausführungsvarianten des erfindungsgemäßen Verfahrens zum Umgang mit in mindestens einer Reihe hintereinander bewegten Stückgütern und/oder der erfindungsgemäßen Vorrichtung zum Umgang mit in mindestens einer Reihe hintereinander bewegten Stückgütern oder auch auf mehrere Ausführungsvarianten dieses Verfahrens bzw. dieser Vorrichtung beziehen kann, können die in definierten Reihen mit darin jeweils definierten Lücken zwischen den einzelnen Stückgütern bewegten und/oder zu einem - insbesondere Manipulationsbereich bzw. Erfassungsbereich genannten - Bereich beförderten, mindestens zwei unmittelbar aufeinanderfolgenden Stückgüter jeweils in getakteten Formationen befördert bzw. transportiert werden. Mit dem Begriff der getakteten Formation und/oder des getakteten Zulaufs ist eine weitgehend regelmäßige Aufeinanderfolge von in Reihe beförderten Stückgütern gemeint, die jeweils mit definierten Lücken voneinander in Reihe hintereinander transportiert werden. Die mit definierten Lücken zwischen den Stückgütern beaufschlagten Reihen im Sinne der vorliegenden Erfindung können jeweils eine endliche Länge haben und eine begrenzte Zahl von Stückgütern umfassen, wonach ggf. eine größere Lücke und einer solchen größeren Lücke ggf. eine weitere solche Reihe mit jeweils in definierten Lücken aufeinander folgenden Stückgütern folgen kann, die nachfolgend transportiert wird. Eine solche Abfolge kann sich wiederholen, ggf. auch mehrfach, vielfach oder in unbestimmter Zahl, vorzugsweise in regelmäßiger Abfolge, ggf. jedoch auch in zyklisch regelmäßigen Mustern oder auch in unregelmäßiger Aufeinanderfolge. Die mit definierten Lücken zwischen aufeinander folgenden Stückgütern innerhalb einer Reihe ausgestatteten getakteten Formationen können grundsätzlich jeweils eine beliebige Anzahl von Stückgütern umfassen. Aus diesen Reihen der getakteten Formation wird jeweils wenigstens ein transportiertes Stückgut klemmend erfasst, von der getakteten Formation räumlich abgetrennt und in eine definierte relative Zielposition und/oder Zielausrichtung gegenüber nachfolgenden Stückgütern der Formation gebracht, wobei meist ein zuvorderst befindliches Stückgut der jeweiligen Reihe mittels des Manipulators erfasst und von der Reihe abgegriffen wird.

Vorzugsweise ist vorgesehen, dass zu dem Zeitpunkt des Erfassens mindestens eines Stückgutes zwischen diesem und den direkt nachfolgenden Stückgütern der Formation kein Staudruck oder allenfalls ein sehr geringer Staudruck besteht bzw. herrscht. Sollte sich beim Heranführen der Stückgüter dennoch ein Staudruck aufgebaut haben, so ist dieser vorzugsweise vor dem Erfassen mindestens eines Stückgutes durch geeignete Mittel abzubauen; beispielsweise kann dies durch Auswahl einer geeigneten Oberfläche der Transporteinrichtung für die in Reihe hintereinander bewegten Stückgütern erreicht werden. Insbesondere kann vorgesehen sein, dass die Oberfläche der Transporteinrichtung gummiert ist, um ein Verrutschen der Stückgüter auf der Transporteinrichtung zu verhindern bzw. um den Staudruck der ständig nachgeförderten Formation bzw. Stückgutreihe abzubauen bzw. zumindest signifikant zu reduzieren.

Bei dem Erfassen des mindestens einen Stückgutes aus der Formation wird dieses in seiner Bewegung in Transportrichtung der Stückgutreihe normalerweise nicht abgebremst. Stattdessen erhält das mindestens eine Stückgut nach dem Erfassen durch den Manipulator der Vorrichtung mindestens eine zusätzliche Geschwindigkeits- und/oder Richtungskomponente, wobei die Geschwindigkeitskomponente nicht negativ gegenüber der Geschwindigkeit der Stückgüter in der Formation sein darf und die Richtungskomponente nicht entgegen der Transportrichtung der Stückgüter in der Formation gerichtet sein darf. Ansonsten bestünde eine Kollisionsgefahr zwischen dem erfassten Stückgut und dem nachfolgenden, nunmehr zuvorderst befindlichen Stückgut der geschlossenen Formation.

Weiterhin kann das Verfahren bzw. eine Variante des Verfahrens wahlweise vorsehen, dass die jeweils ohne Abstände oder mit minimalen Abständen unmittelbar aufeinanderfolgenden Stückgüter in mehreren Reihen, insbesondere in mindesten zwei Reihen, jeweils als geschlossene Formationen transportiert werden, und dass mindestens ein Stückgut aus einer dieser mindesten zwei jeweilig geschlossenen Formationen klemmend erfasst, von der geschlossenen Formation räumlich abgetrennt und von einem Manipulator in die jeweilige Zielposition und/oder Zielausrichtung gegenüber nachfolgenden Stückgütern gebracht wird. Insbesondere wird das mindestens eine Stückgut von einer der mindestens zwei einlaufenden Formationen über genau einen Manipulator in Abhängigkeit von einer jeweiligen Bereitstellungssituation erfasst, von der geschlossenen Formation räumlich abgetrennt und von dem genau einen Manipulator in die jeweilige Zielposition und/oder Zielausrichtung gegenüber nachfolgenden Stückgütern gebracht wird. Vorzugsweise sind bei dieser Ausführungsform des Verfahrens mehr Stückgüter zuführende Reihen als Manipulatoren vorgesehen. Insbesondere muss mindestens ein Manipulator somit mindestens zwei Reihen von Stückgütern bzw. Formationen bearbeiten. Außerdem kann das Verfahren wahlweise oder zusätzlich vorsehen, dass das wenigstens eine Stückgut bei Erreichen oder unmittelbar nach Erreichen seiner Zielposition und/oder Zielausrichtung ohne Unterbrechung und/oder Geschwindigkeits- und/oder Richtungsänderung weitertransportiert werden kann.

Alternativ kann eine weitere Ausführungsvariante des Verfahrens vorsehen, dass die in mindestens einer Reihe, vorzugsweise in mehreren Reihen, jeweils ohne Abstände oder mit minimalen Abständen unmittelbar aufeinanderfolgende Stückgüter als geschlossene Formationen transportiert werden, wobei die Stückgüter bzw. einzelne oder mehrere Stückgüter aus der mindestens einen geschlossenen Formation über mehrere Manipulatoren klemmend erfasst, von der geschlossenen Formation jeweils räumlich abgetrennt und von den mehreren Manipulatoren hierbei zeitlich überlagert in eine jeweilige definierte relative Zielposition und/oder Zielausrichtung gegenüber nachfolgenden Stückgütern gebracht werden. Beispielsweise kann vorgesehen sein, dass die Stückgüter in einer Reihe ankommen und in den jeweiligen Erfassungsbereich von mindestens zwei oder mehr nebeneinander und/oder parallel nebeneinander angeordneten Manipulatoren übertreten, die beide jeweils auf die Stückgüter der einen Reihe zugreifen und diese in die jeweiligen Zielpositionen und/oder -ausrichtungen verbringen. Hierbei kann insbesondere vorgesehen sein, dass die mindestens zwei Manipulatoren dieselben Erfassungsbereiche aufweisen. Alternativ kann vorgesehen sein, dass die Stückgüter in mindestens zwei Reihen in jeweiligen geschlossenen Formationen zu den mehreren Manipulatoren transportiert werden. Außerdem kann eine Variante dieses Verfahrens vorsehen, dass mittels der zwei oder mehr Manipulatoren jeweils wenigstens ein zuvorderst transportiertes Stückgut aus der jeweiligen geschlossenen Formation klemmend und/oder form- bzw. kraftschlüssig erfasst, von der jeweiligen geschlossenen Formation räumlich abgetrennt und in die jeweilige definierte relative Zielposition und/oder Zielausrichtung gegenüber jeweils nachfolgenden Stückgütern gebracht wird. Mittels eines Einsatzes von zwei oder mehr Manipulatoren können höhere Verarbeitungs- und/oder Positionierungsgeschwindigkeiten und damit kürzere Taktzeiten realisiert werden. Insbesondere bei zwei oder mehr vorzugsweise parallelen Reihen bzw. geschlossenen Formationen können zwei oder mehr Manipulatoren diese vorzugsweise parallelen Reihen bzw. geschlossenen Formationen schneller verarbeiten, so dass deutlich höhere Transportgeschwindigkeiten realisierbar sind als bei einem Einsatz nur eines Manipulators.

Diese zwei oder mehr in Transportrichtung der Stückgüter nebeneinander oder parallel angeordnete Manipulatoren können ggf. phasenweise mit überschneidenden bzw. zumindest teilweise ineinandergreifenden Bewegungsräumen und/oder Erfassungsbereichen für die Stückgüter arbeiten, wobei die Steuervorschriften für die Bewegungssteuerungen der Manipulatoren Maßnahmen zur Kollisionsvermeidung enthalten sollten. Solche sich überschneidenden Arbeits- oder Erfassungsbereiche sind insbesondere bei Gruppierungen oder Lagenbildungen aus den Stückgütern sinnvoll, die aus mehreren Reihen eine Gesamtanordnung bzw. ein gemeinsames Lagenbild zur nachfolgenden Verpackung, Palettierung etc. bilden. Da insbesondere die mittleren Bereiche eines solchen Lagenbildes eine exakte Vorhersage und Zuordnung einer Position zum Bewegungsraum eines von zwei benachbarten Manipulatoren erschweren, da diese mittleren Positionen von beiden benachbarten Manipulatoren gleichermaßen erreicht werden können, sind zumindest temporär zeitliche Überschneidungen der Bewegungsräume für die Stellbewegungen der Manipulatoren sinnvoll. Wichtig ist hierbei, dass das Bewegungsmuster der Manipulatoren derart aufeinander abgestimmt ist, dass es bei Erfassen und Positionieren der Stückgüter nicht zu einer Kollision der Manipulatoren kommt.

Bei einer weiteren alternativen oder wahlweise auch mit den zuvor beschriebenen Varianten kombinierbaren Ausführungsvariante des Verfahrens wird in mehreren zeitlich aufeinanderfolgenden Schritten jeweils wenigstens ein transportiertes Stückgut aus der geschlossenen Formation klemmend erfasst, von der geschlossenen Formation durch seitliche Rotation aus einer geradlinigen Bewegungsbahn der geschlossenen Formation jeweils räumlich abgetrennt und in eine jeweilige definierte relative Zielposition und/oder Zielausrichtung gegenüber nachfolgenden Stückgütern gebracht, woraus resultierend aus den in zeitlich aufeinanderfolgenden Schritten in ihre jeweilige Zielposition und/oder Zielausrichtung gebrachten und/oder gedrehten Stückgütern eine palettierfähige Lage bzw. Lagenanordnung oder eine Vorgruppierung für eine palettierfähige Lage bzw. Lagenanordnung gebildet werden kann.

Wenn in diesem Zusammenhang oder auch im Zusammenhang der gesamten Beschreibung von Vorgruppierungen, von einer palettierfähigen Lage oder von einer palettierfähigen Lagenanordnung die Rede ist, so sind damit generell alle Stückgut-Zusammenstellungen innerhalb einer horizontalen Ebene - ggf. auch in zwei oder drei Ebenen übereinander gestapelt - gemeint, die in Richtung von nachgeordneten Handhabungs- und/oder Palettierungs- und/oder Verpackungsstationen weitertransportiert werden können. Generell ist bei den erfindungsgemäßen Verfahren davon auszugehen, dass zunächst ein hoher Ordnungsgrad der Stückgüter vorliegt, da diese in geschlossenen Formationen als Reihe bzw. Reihen zum Manipulator oder zu den Manipulatoren befördert werden. Dort wird diese Ordnung zunächst weitgehend aufgelöst, da die Stückgüter an unterschiedliche Positionen gebracht werden, wodurch jedoch der Ordnungsgrad der Stückgüter untereinander in Transportrichtung allmählich wieder zunimmt. Im weiteren, hier nicht mehr detailliert erläuterten Transportverlauf, kann der Ordnungsgrad nochmals deutlich stärker zunehmen, indem Abstände der Lagenanordnungen oder Vorgruppierungen durch deren Aneinanderfügen und/oder Zusammenschieben aufgehoben und die Lagenanordnungen als weitgehend geschlossene Lagen wahlweise zusammengefasst werden, bspw. durch geeignete Umverpackungen. Wahlweise jedoch können die zusammengestellten Stückgüter auch in der jeweiligen Lagenanordnung gestapelt und/oder palettiert und erst anschließend mit Umverpackungen umhüllt bzw. ausgestattet werden.

Außerdem sei darauf hingewiesen, dass der Begriff der palettierfähigen Lage bzw. der palettierfähigen Lagenanordnung immer auch die Teillage bzw. Teillagenanordnung umfasst und umgekehrt.

Bei einer Variante dieses Verfahrens kann zum Bilden der palettierfähigen Lage oder der Vorgruppierung für eine palettierfähige Lage bei wenigstens zwei zeitlich aufeinanderfolgenden Schritten das jeweils wenigstens eine klemmend erfasste Stückgut von der geschlossenen Formation durch seitliche Rotation aus der geradlinigen Bewegungsbahn der geschlossenen Formation jeweils räumlich abgetrennt und in eine jeweilige definierte relative Zielposition und/oder Zielausrichtung gegenüber den nachfolgenden Stückgütern gebracht werden, wobei vorgesehen ist, dass das wenigstens eine Stückgut bei einer Verbringung zur rechten Seite der geradlinigen Bewegungsbahn der geschlossenen Formation mittels einer Rechtsdrehung (rechtsseitiger Drehsinn bzw. Drehung im Uhrzeigersinn, insbesondere bei Drehung um eine vertikale Drehachse) bewegt wird, während das wenigstens eine Stückgut und/oder ein weiteres Stückgut bei einer Verbringung zur linken Seite der geradlinigen Bewegungsbahn der geschlossenen Formation mittels einer Linksdrehung (linksseitiger Drehsinn bzw. Drehung entgegen dem Uhrzeigersinn, insbesondere bei Drehung um eine vertikale Drehachse) bewegt wird. Diese unterschiedlichen Drehbewegungen können bei direkt aufeinanderfolgenden oder auch bei entfernt aufeinanderfolgenden Manipulierungsschritten jeweils unterschiedlich ablaufen.

Darüber hinaus kann das Verfahren vorsehen, dass zum Bilden der palettierfähigen Lage oder der Vorgruppierung für eine palettierfähige Lage bei wenigstens zwei zeitlich - unmittelbar oder beabstandet - aufeinanderfolgenden Schritten das jeweils wenigstens eine klemmend erfasste Stückgut von der geschlossenen Formation durch seitliche Rotation aus der geradlinigen Bewegungsbahn der geschlossenen Formation jeweils räumlich abgetrennt und in eine jeweilige definierte relative Zielposition und/oder Zielausrichtung gegenüber den nachfolgenden Stückgütern gebracht wird, wobei das wenigstens eine Stückgut im Rahmen eines ersten der wenigstens zwei zeitlich aufeinanderfolgenden Schritte bei einer Verbringung zur rechten Seite der geradlinigen Bewegungsbahn der geschlossenen Formation mittels einer Rechtsdrehung bewegt wird, und wobei das wenigstens eine Stückgut im Rahmen eines zweiten der wenigstens zwei zeitlich aufeinanderfolgenden Schritte bei einer Verbringung zur linken Seite der geradlinigen Bewegungsbahn der geschlossenen Formation mittels einer Linksdrehung bewegt wird.

Allerdings kann es, wie an anderer Stelle anhand einer anderen Ausführungsvariante des erfindungsgemäßen Verfahrens noch ausführlicher beschrieben wird, eine sinnvolle alternative Option sein, die zuvorderst befindlichen und zu erfassenden Stückgüter zunächst mittels einer relativ kurzzeitigen Beschleunigungsphase in Transportrichtung bzw. mit einer zur Transportrichtung parallelen Bewegungskomponente von den nachfolgenden Stückgütern der nachfolgen, geschlossenen Formation zu distanzieren, insbesondere unmittelbar vor oder bei Einleitung seiner Rotation, wodurch die Drehrichtung einer anschließenden Positionierung, bei der eine überlagerte Drehbewegung der erfassten Stückgüter notwendig bzw. sinnvoll ist, nach anderen Zweckmäßigkeitserwägungen in Linksdrehung oder in Rechtsdrehung erfolgen kann. Für manche anzustrebenden Lagenbilder bzw. Produktschemen kann eine solche Option vorteilhafter sein als eine schematische und/oder rein programmgesteuerte Entscheidung für eine Links- oder Rechtsdrehung, die in erster Linie nach dem Kriterium der Bewegungsrichtung - mit gegenüber der Bewegungsbahn nach links oder nach rechts zu verschiebenden Stückgütern - erfolgen soll. Gleichermaßen kann es eine sinnvolle alternative Option sein, ein einzelnes zuvorderst befindliches und zu erfassendes Stückgut zunächst mittels einer relativ kurzzeitigen Beschleunigungsphase in Transportrichtung bzw. mit einer zur Transportrichtung parallelen Bewegungskomponente von den nachfolgenden Stückgütern der nachfolgenden geschlossenen Formation zu distanzieren, bevor eine Drehbewegung eingeleitet wird, wodurch die Drehrichtung einer anschließenden Positionierung, bei der eine überlagerte Drehbewegung des einzelnen erfassten Stückgutes notwendig bzw. sinnvoll ist, nach anderen Zweckmäßigkeitserwägungen in Linksdrehung oder in Rechtsdrehung erfolgen kann. Für manche anzustrebenden Lagenbilder bzw. Produktschemen kann eine solche Option vorteilhafter sein als eine schematische und/oder rein programmgesteuerte Entscheidung für eine Links- oder Rechtsdrehung, die in erster Linie nach dem Kriterium der Bewegungsrichtung - mit gegenüber der Bewegungsbahn nach links oder nach rechts zu verschiebendem Stückgut - erfolgen soll.

Das Verfahren kann zudem vorsehen, dass zum Bilden der palettierfähigen Lage oder der Vorgruppierung für eine palettierfähige Lage bei wenigstens einem der zeitlich aufeinanderfolgenden Schritte zumindest näherungsweise zeitgleich wenigstens zwei Stückgüter erfasst, hierauf folgend von der geschlossenen Formation durch seitliche Rotation aus der geradlinigen Bewegungsbahn der geschlossenen Formation räumlich abgetrennt und gemeinsam in ihre jeweilige definierte relative Zielposition und/oder Zielausrichtung gegenüber den nachfolgenden Stückgütern gebracht werden. Diese erwähnte zeitgleiche Erfassung mehrerer Stückgüter meint in der Praxis den gemeinsamen Manipulationsschritt zweier oder mehrerer von der Formation abgenommener Stückgüter, die während des Manipulationsschrittes in ihrer ursprünglichen benachbarten Anordnung verbleiben, die sie schon in der Reihe der Formation hatten. Diese benachbarte Anordnung bleibt normalerweise auch in der Vorgruppierung bzw. in der Lagenanordnung bestehen, kann aber ggf. auch aufgehoben werden, bspw. durch einen separaten Verschiebe- und/oder Drehvorgang, dem eines oder mehrere dieser Stückgüter unterzogen werden können.

Zum Bilden der palettierfähigen Lage oder der Vorgruppierung für eine palettierfähige Lage können wahlweise bei wenigstens zwei zeitlich aufeinanderfolgenden Schritten eine unterschiedliche oder jeweils gleiche Anzahl an Stückgütern klemmend erfasst, von der geschlossenen Formation durch seitliche Rotation aus der geradlinigen Bewegungsbahn der geschlossenen Formation jeweils räumlich abgetrennt und in eine jeweilige definierte relative Zielposition und/oder Zielausrichtung gegenüber den nachfolgenden Stückgütern gebracht werden. Außerdem kann bzw. können in den wenigstens zwei zeitlich aufeinanderfolgenden Schritten jeweils ein zuvorderst in der geschlossenen Formation transportiertes Stückgut oder mehrere zuvorderst in der geschlossenen Formation transportierte Stückgüter erfasst werden.

Das Verfahren kann in vorteilhafter Weise realisiert werden, indem die wenigstens zwei zeitlich aufeinanderfolgenden Schritte über einen bestimmten und vorzugsweise als Deltakinematik- Roboter ausgebildeten Manipulator umgesetzt werden. Weiterhin kann es bei dem Verfahren von Vorteil sein, wenn die jeweilige Anzahl an Stückgütern in den wenigstens zwei zeitlich aufeinanderfolgenden Schritten jeweils durch mindestens zwei sich gegenüberliegende Klemm- und/oder Greifmittel des bestimmten Manipulators klemmend erfasst und nach Verbringen in ihre jeweilige definierte Zielposition mittels der mindestens zwei sich gegenüberliegenden Klemm- und/oder Greifmittel freigegeben werden. Diese Klemm- und/oder Greifmittel sind bspw. als gegeneinander zustellbare Greifbacken o. dgl. gebildet, die ein schnelles Erfassen, Verschieben, Positionieren und Freigeben der Stückgüter in der gewünschten Geschwindigkeit mit der gewünschten Stellpräzision erlauben.

Bei einer weiteren alternativen oder wahlweise auch mit den zuvor beschriebenen Varianten kombinierbaren Ausführungsvariante eines erfindungsgemäßen Verfahrens werden die als geschlossene Formation in Reihe aufeinanderfolgenden Stückgüter zu einem Erfassungsbereich des Manipulators transportiert. Wie bereits erwähnt, liegt dieser Erfassungsbereich innerhalb des Bewegungsraumes des Manipulators bzw. kann ggf. auch mit diesem übereinstimmen. Zudem wird bei dem Verfahren im Erfassungsbereich wenigstens ein transportiertes Stückgut mittels mindestens zwei, dem wenigstens einen Manipulator zugeordneten, gegenüberliegend angeordneten Klemm- und/oder Greifmittel aus der geschlossenen Formation klemmend erfasst, von der geschlossenen Formation durch Distanzierung in Transportrichtung und durch zumindest kurzzeitige Beschleunigung mit einer Bewegungskomponente parallel zur geradlinigen Bewegungsbahn der geschlossenen Formation räumlich abgetrennt und in die definierte relative Zielposition und/oder Zielausrichtung gegenüber nachfolgenden Stückgütern gebracht.

Dabei ist vorgesehen, dass wenigstens eine, durch das mindestens zwei Klemm- und/oder Greifmitteln des wenigstens einen Manipulators erfasste Stückgut definierte erste vertikale und in etwa senkrecht zu einer Transportrichtung der Stückgüter und/oder einer Längserstreckungsrichtung der geschlossenen Formation orientierte Symmetrieebene beabstandet ist von einer hierzu in etwa parallel ausgerichteten zweiten vertikalen Symmetrieebene, die durch den Manipulator bzw. durch dessen Klemm- und/oder Greifmittel definiert ist. Damit kann insbesondere definiert sein, dass das eine vom Manipulator erfasste Stückgut dort nicht mittig bzw. symmetrisch zur vertikalen Mittel- und/oder Drehachse des Manipulators bzw. dessen Klemm- und/oder Greifmittel erfasst und positioniert ist, während es verschoben und/oder in Richtung der Zielposition gebracht wird, ggf. unter gleichzeitiger Rotation. Dies gilt gleichermaßen für zwei oder mehr erfasste Stückgüter, die in Zusammenschau ebenfalls außermittig bzw. unsymmetrisch im Manipulator geklemmt sein können.

Dieses beschriebene Auftreten einer Distanz zwischen den beschriebenen vertikalen Symmetrieebenen kann auch als asynchrones Abgreifen bzw. als asynchrones Erfassen bzw. generell als asynchrone Verarbeitung der zu erfassenden und/oder zu positionierenden und/oder auszurichtenden Stückgüter bezeichnet werden, und zwar insbesondere deshalb, weil hierbei keine vollständige Beladung des Manipulators bzw. keine vollständige Beladung bzw. Beanspruchung des zwischen den Greiferbacken oder innerhalb des Greiferkopfes maximal zur Verfügung stehenden Raumes für aufzunehmende und/oder zu greifende Stückgüter erfolgt, sondern nur eine Teilbeladung, Teilerfassung und/oder teilweise Beanspruchung der Beladungs- und/oder Aufnahmekapazität des Manipulators bzw. seiner Klemm- und/oder Greifelemente.

Dennoch sei darauf hingewiesen, dass grundsätzlich eine solche Teilbeladung und/oder Teilbeanspruchung des im Manipulator zur Verfügung stehenden Raumes oder Platzes für zu erfassende Stückgüter nicht zwingend mit einer Distanzierung zwischen den Symmetrieebenen durch die insgesamt je Erfassungsvorgang aufgenommenen Stückgüter und durch den Manipulator bzw. dessen Klemm- und/oder Greifmittel einhergehen muss, dass die erfassten Stückgüter auch jeweils mittig im Manipulator bzw. mittig zwischen dessen Klemm- und/oder Greifmittel positioniert sein können, so dass an beiden Schmalseiten eines Stückgutes oder den nach außen weisenden Schmalseiten einer Gruppe von zwei oder drei Stückgütern ein verbleibender, ggf. ungenutzter Raum verbleiben kann, der nicht mit Stückgütern besetzt ist.

Unter Umständen kann innerhalb des Verfahrens, d.h. zwischen zwei oder mehr Verfahrensschritten, immer auch wieder eine Variante auftreten bzw. sinnvoll sein, bei der diese erwähnten Symmetrieebenen zusammenfallen oder nahezu zusammenfallen. Dieses nichtsynchrone Abgreifen wird jedoch meist nicht gesondert erwähnt, weil die vollständige und/oder symmetrische Beladung des Manipulators mit mehreren Stückgütern den Regelfall darstellt, auf den die meisten der im Zusammenhang der vorliegenden Beschreibung skizzierten Verfahrensaspekte zutreffen.

Die normalerweise in dieser Reihenfolge aufeinanderfolgenden Manipulationsschritte des Abgreifens eines Stückgutes oder mehrerer Stückgüter, ihres Abtrennens von der geschlossenen Formation, ihres Verschiebens und des Abgebens des Stückgutes oder der mehreren Stückgüter findet im Erfassungsbereich des Manipulators statt, und findet damit vorzugsweise auch innerhalb der äußeren Grenzen des maximalen Bewegungsraumes des Manipulators bzw. dessen beweglicher Teile statt. Der Manipulator bildet bzw. dessen bewegliche Teile bilden innerhalb des Erfassungsbereiches die Takte. Diese werden im vorliegenden Zusammenhang auch als Vorgruppierungen bzw. Lagenanordnungen und/oder Teillagenanordnungen bezeichnet.

Wenn im vorliegenden Zusammenhang, insbesondere im Zusammenhang mit einem sog. asynchronen Abgreifen von vertikalen Symmetrieebenen die Rede ist, die sich in erster Linie auf die Positionierungen der Stückgüter bzw. deren Relativpositionen zum Manipulator bzw. zu dessen Klemm- und/oder Greifmitteln beziehen, so sind diese vertikalen Symmetrieebenen definitionsgemäß senkrecht oder ungefähr senkrecht zur Horizontalfördereben einer Horizontalfördereinrichtung orientiert. Sinnvollerweise sind diese Symmetrieebenen, d.h. die erste Symmetrieebene, zweite und ggf. weitere Symmetrieebenen, auch senkrecht zur horizontal verlaufenden Transportrichtung und/oder in etwa senkrecht zu einer Längserstreckungsrichtung der geschlossenen Formation orientiert. Sofern sich der Leser diese Transportrichtung als horizontalen Vektorpfeil vergegenwärtigt, der parallel zur horizontalen Auflageebene der Horizontalfördereinrichtung sowie parallel zur normalerweise ebenfalls horizontal oder abschnittsweise horizontal verlaufenden Transporteinrichtung verläuft, so durchstößt dieser Vektorpfeil die senkrecht stehenden Symmetrieebenen ebenfalls im Wesentlichen senkrecht. Wie erwähnt, sind diese mindestens zwei Symmetrieebenen - eine bezieht sich auf die Stückgüter, die andere auf den Manipulator - in einem gewissen Abstand, sofern der Manipulator unsymmetrisch oder einseitig beladen ist. Falls die Symmetrieebenen zusammenfallen oder ungefähr zusammenfallen, liegt der Sonderfall des vollständig beladenen und/oder symmetrisch bzw. mittig beladenen Manipulators vor.

Es sei an dieser Stelle ergänzend erwähnt, dass es sich bei den Stückgütern, auf die sich die erwähnte erste vertikale Symmetrieebenen bezieht, insbesondere um die jeweilige Gesamtheit von Stückgütern handeln kann, die sich in dem jeweils betreffenden Arbeitstakt im Manipulator bzw. zwischen dessen beiden Klemmbacken befinden. Diese Gesamtheit der Stückgüter kann somit ggf. auch durch das Gesamtvolumen und/oder den Masseschwerpunkt der insgesamt im Manipulator befindlichen und vom Manipulator erfassten Stückgüter charakterisiert werden, sofern dies im Einzelfall zweckmäßig ist. In entsprechender Weise handelt es sich bei der zweiten vertikalen Symmetrieebene, die dem Manipulator zugeordnet ist, sinnvollerweise um diejenige Symmetrieebene, die durch den Mittelpunkt der Gesamtheit an Stückgütern verläuft, wenn der Manipulator vollständig beladen bzw. entsprechend seiner maximalen Erfassungskapazität beladen ist, was normalerweise auch eine mittige, symmetrische und/oder gleichmäßige Beladung mit Stückgütern impliziert. Wenn im Zusammenhang der Lokalisierung der zweiten vertikalen Symmetrieebene von einem Mittelpunkt der Gesamtheit an Stückgütern die Rede ist, so kann dies je nach Ausgestaltung der Stückgüter bspw. der Massenschwerpunkt der Gesamtheit an im Manipulator erfassten Stückgütern oder auch der volumetrische Mittelpunkt dieser Gesamtheit an Stückgütern sein.

Darüber hinaus sei ergänzend klargestellt, dass die sich auf den Manipulator beziehende zweite Symmetrieebene gleichermaßen auf dessen gegeneinander zustellbare Klemmbacken bezogen sein kann, so dass von einer mittigen bzw. außermittigen Anordnung der Stückgüter bzw. der jeweiligen Gesamtheit an gleichzeitig zwischen den Klemmbacken erfassten Stückgütern die Rede sein kann, sofern die auf die Stückgüter bzw. die Gesamtheit an jeweils erfassten Stückgütern bezogene erste Symmetrieebene mit der zweiten Symmetrieebene zusammenfällt bzw. von dieser beabstandet ist.

Auf alle die zuvor erwähnten Varianten der symmetrischen bzw. unsymmetrischen Anordnung der Stückgüter und/oder der synchronen bzw. asynchronen Beladung des Manipulators mit Stückgütern bezogen sei an dieser Stelle zudem klargestellt, dass die sich auf den Manipulator bzw. auf dessen Klemm- und/oder Greifelemente beziehende zweite Symmetrieebene nicht zwingend durch eine in etwa vertikale Rotationsachse des Manipulators verlaufen muss, da der Manipulator nicht zwangsläufig rotationssymmetrisch ausgestaltet sein muss, sondern ggf. auch eine unsymmetrische Gestaltung aufweisen kann, sofern dies aus konstruktiven und/oder aus dynamikbezogenen Gründen zweckmäßig sein sollte.

Ein asymmetrisches Greifen oder Erfassen der Stückgüter im Manipulator kann bspw. auch dadurch charakterisiert sein, dass die Länge der insgesamt erfassten Stückgüter in Transportrichtung geringer ist als die Gesamtlänge der gegeneinander zustellbaren Greif- und/oder Klemmelemente des Manipulators, wenn dieser bei der Erfassung der Stückgüter so ausgerichtet ist, dass die Längserstreckungsrichtungen seiner Greif- und/oder Klemmelemente in etwa parallel zur Transportrichtung orientiert sind, und dass eine nicht belegte Länge der Greif- und/oder Klemmelemente des Manipulators an einer Stirnseite der Stückgüter größer oder kleiner ist als der gegenüberliegenden anderen Stirnseite. Dagegen stimmen diese nicht belegten Längenmaße bei symmetrischer Beladung des Manipulators ungefähr überein.

Zum besseren Verständnis wird der genannte Zusammenhang nochmals mit Hilfe von anderen Bezeichnungen und anhand der nachfolgenden Gleichungs- und Ungleichungszusammenhänge beschrieben. In den Gleichungen bzw. Ungleichungen bezeichnet L22 die Gesamtlänge der Klemmbacken des Manipulators. L2 sei die Länge eines Stückgutes, das sich aktuell zwischen den Klemmbacken des Manipulators befindet. Dementsprechend sei LR die jeweils nicht von Stückgütern besetzte Restlänge oder Leerlänge zwischen den Klemmbacken des Manipulators. Bei einer Klemmbackenlänge L22, die der dreifachen Länge einer Stückgutlänge L2 entspricht, gilt der generelle Zusammenhang:

$$LR = (3 - x) \cdot L2,$$

wobei x die Anzahl der jeweils zwischen den Klemmbacken geklemmten, d.h. aktuell im Manipulator befindlichen Stückgüter ist. Demzufolge gilt bei nur einem im Manipulator befindlichen Stückgut:

$$x = 1,$$

folgender Sonderfall:

$$LR = (3 - x) \cdot L2 = 2 \cdot L2$$

In entsprechender Weise gilt bei zwei unsymmetrisch im Manipulator befindlichen Stückgütern:

$$x = 2,$$

folgender Sonderfall:

$$LR = (3 - x) \cdot L2 = 1 \cdot L2 = L2$$

Bei dem Sonderfall der symmetrischen Beladung des Manipulators mit insgesamt drei Stückgütern, bei dem die oben beschriebenen Symmetrieebenen zusammenfallen, gilt folglich:

$$x = 3,$$

woraus sich für die Restlänge LR ein Wert von Null errechnet:

$$LR = (3 - x) \cdot L2 = 0 \cdot L2 = 0$$

Bei diesem Überlegungen wird generell von einer unsymmetrischen Beladung des Manipulators bzw. von einem asymmetrischen Greifen ausgegangen, wobei die zwischen den Klemmbacken befindlichen Stückgüter an einem Rand der Klemmbacken angeordnet sind, so dass die nicht belegte Restlänge LR immer nur einseitig auftritt, nicht jedoch beidseitig der zwischen den Klemmbacken 22 befindlichen Stückgüter. Aus diesem Grund lässt sich weiterhin feststellen, dass eine unsymmetrische Beladung des Manipulators bzw. ein asymmetrisches Greifen immer dann gegeben ist, wenn beide der folgenden Bedingungen gelten:

$$L22 > x \cdot L2,$$

und

$$LR \geq (L22 - x \cdot L2) \cdot \tfrac{1}{2}$$

wobei x generell die Werte Null, Eins, Zwei oder Drei annehmen kann, während x zur Erfüllung der obigen Ungleichungen bei unsymmetrischer Beladung bzw. bei asymmetrischem Greifen im gezeigten Ausführungsbeispiel lediglich die Werte Eins (x = 1) oder Zwei (x = 2) annehmen darf, da ansonsten ein leerer Manipulator (bei x = 0) oder ein voll beladener und symmetrisch beladener Manipulator 5 (bei x = 3) gegeben wäre.
Es sei an dieser Stelle der Vollständigkeit halber erwähnt, dass auch ein Fall eines symmetrischen Greifens mit nicht voll besetztem Manipulator denkbar wäre, so dass zwischen den Klemmbacken beispielsweise zwei Stückgüter mittig angeordnet sein könnten, so dass auch die jeweiligen Symmetrieebenen der Stückgüter und des Manipulators zusammenfallen könnten. Dieser Fall wäre mit den obigen Formeln nicht darstellbar, da hierbei zwar die obige Ungleichung (L22 > x . L2) gelten würde. Allerdings wäre bei einer solchen Greifsituation die gesamte Restlänge LR zu gleichen Teilen auf beide Randabschnitte zwischen den Klemmbacken verteilt, so dass die untere Ungleichung [LR ≥ (L22 - x . L2) . ½] nicht erfüllt wäre.

Auch wenn in der vorliegenden Beschreibung häufig von einer maximalen Aufnahmekapazität von bis zu drei Stückgütern je Manipulator bzw. Greiferkopf gesprochen wird, so sind die genannten Überlegungen auch auf Manipulatoren mit geringerer oder größerer maximaler Aufnahmekapazität analog anwendbar.
Bei einer Ausführungsform des Verfahrens kann vorgesehen sein, dass in mehreren zeitlich aufeinanderfolgenden Schritten, insbesondere in wenigstens zwei zeitlich aufeinanderfolgenden Schritten, jeweils wenigstens ein transportiertes Stückgut aus der geschlossenen Formation klemmend erfasst, von der geschlossenen Formation durch seitliche Rotation aus einer geradlinigen Bewegungsbahn der geschlossenen Formation jeweils räumlich abgetrennt und in eine jeweilige definierte relative Zielposition und/oder Zielausrichtung gegenüber nachfolgenden Stückgütern gebracht wird. Beispielsweise erfolgt das Abtrennen durch eine Distanzierung in Transportrichtung, ggfl. durch zumindest kurzzeitige Beschleunigung mit einer Bewegungskomponente parallel zur geradlinigen Bewegungsbahn der geschlossenen Formation und in Richtung einer jeweils definierten relativen Zielposition und/oder Zielausrichtung gegenüber nachfolgenden Stückgütern. Dabei werden die entsprechenden Stückgüter in mehreren zeitlich aufeinanderfolgenden Schritten in ihre jeweilige Zielposition und/oder Zielausrichtung gebrachten, wobei ggf. eine Drehung der vom Manipulator erfassten Stückgüter erfolgen kann und somit beispielsweise eine palettierfähige Lage oder eine Vorgruppierung für eine palettierfähige Lage, ggf. auch für eine optionale Teillage gebildet wird.
Alternativ oder zusätzlich werden aus den in zeitlich aufeinanderfolgenden Schritten in ihre jeweilige Zielposition und/oder Zielausrichtung gebrachten Stückgütern, insbesondere im Erfassungsbereich mindestens eines Manipulators der Vorrichtung zwei oder mehr weiterverarbeitbare und/oder einer Verpackungsstation zuführbare bzw. jeweils oder gemeinsam palettierfähige Reihen mit Stückgütern gebildet. Hierbei können einzelne, mehrere oder alle Stückgüter jeweils verdreht werden, insbesondere um jeweils einen Drehwinkel um eine Vertikale von 90°. Dieser Fall bildet jedoch nicht den Regelfall, sondern dürfte seltener auftreten, da er sich auf die nicht als Regelfall anzusehende Option bezieht, anstelle einer palettierfähigen Lage zwei Reihen oder mehr als zwei Reihen zu bilden, ggf. unter jeweiliger 90°-Drehung der Stückgüter. Dennoch kann dieser Fall in einigen Sondersituationen der Lagen- und/oder Reihenbildung eine sinnvolle Option darstellen.
Gemäß einer Ausführungsform der Erfindung werden zum Bilden der palettierfähigen Lage oder der Vorgruppierung für eine palettierfähige Lage bei wenigstens einem der zeitlich aufeinanderfolgenden Schritte zumindest näherungsweise zeitgleich wenigstens zwei Stückgüter erfasst. Diese wenigstens zwei Stückgüter werden hierauf folgend gemeinsam von der geschlossenen Formation räumlich abgetrennt und gemeinsam in ihre jeweilige definierte relative Zielposition und/oder Zielausrichtung gegenüber den nachfolgenden Stückgütern der Formation gebracht.

Vorzugsweise werden zum Bilden der palettierfähigen Lage oder der Vorgruppierung für eine palettierfähige Lage bei wenigstens zwei oder mehr zeitlich aufeinanderfolgenden Schritten eine unterschiedliche Anzahl an Stückgütern klemmend erfasst, von der geschlossenen Formationen jeweils räumlich abgetrennt und in eine jeweilige definierte relative Zielposition und/oder Zielausrichtung gegenüber nachfolgenden Stückgütern gebracht. Diese Verfahrensphase kann einen wichtigen Schritt im Zusammenhang mit der asymmetrischen Erfassung von Stückgütern bzw. mit dem asynchronen Abgreifen von Stückgütern bilden. Hierbei kann vorgesehen sein, dass zunächst eine erste Anzahl von Stückgütern erfasst und zu den Zielpositionen überführt werden, beispielsweise nur ein Stückgut, zwei, drei oder mehr Stückgüter, worauf folgend eine weitere Anzahl, die sich von der ersten Anzahl unterscheiden kann, erfasst, überführt und in den Zielpositionen abgelegt bzw. dort positioniert wird.

Gemäß einer Ausführungsform der Erfindung wird zum Bilden der palettierfähigen Lage oder der Vorgruppierung für eine palettierfähige Lage bei wenigstens zwei oder mehr zeitlich aufeinanderfolgenden Schritten jeweils immer ein einzelnes Stückgut klemmend erfasst, von der geschlossenen Formation jeweils räumlich abgetrennt und in eine jeweilige definierte relative Zielposition und/oder Zielausrichtung gegenüber den nachfolgenden Stückgütern der Formation gebracht wird. Dieses alternativ, als Abwandlung und/oder als Zusatzoption zu einigen der zuvor beschriebenen Ausführungsvarianten zu verstehende, Ausführungsbeispiel bezieht sich insbesondere auf die Option, durch Abgreifen immer nur eines einzelnen Stückguts palettierfähige Lagen zu bilden.

Vorzugsweise werden bei dem beschriebenen Verfahren durch den mindestens einen Manipulator der Vorrichtung in den wenigstens zwei zeitlich aufeinanderfolgenden Schritten jeweils ein zuvorderst in der geschlossenen Formation transportiertes Stückgut oder mehrere zuvorderst in der geschlossenen Formation transportierte Stückgüter erfasst, von der Formation abgetrennt und neu positioniert.

Der oben beschriebene Sonderfall des vollständig beladenen und/oder symmetrisch bzw. mittig beladenen Manipulators kann zwar sehr häufig auftreten, verlangt aber keine gesonderten Entscheidungen hinsichtlich einer bevorzugten Drehrichtungen des Manipulators beim Positionieren der Stückgüter, insbesondere unter der zusätzlichen Berücksichtigung der genannten Kriterien der Weg- und/oder Zeitoptimierung bzw. der Weg- und/oder Zeitminimierung.

Eine Entscheidung für eine Linksdrehung oder eine Rechtsdrehung bei einer Positionierung des wenigsten einen Stückguts unter dessen gleichzeitiger Drehung kann insbesondere nach dem vorrangig verarbeiteten Kriterium der Wegminimierung getroffen werden. Wahlweise kann eine Entscheidung für eine Linksdrehung oder eine Rechtsdrehung bei einer Positionierung des wenigsten einen Stückguts unter dessen gleichzeitiger Drehung auch nach dem vorrangig verarbeiteten Kriterium der Zeitoptimierung bzw. Zeitminimierung für die jeweilige Positionierung und/oder nach dem vorrangig verarbeiteten Kriterium der Zeitoptimierung bzw. Zeitminimierung für die Bildung der Lagenanordnung bzw. Vorgruppierung getroffen werden, wobei dieses Kriterium der Zeitoptimierung oder Zeitminimierung dem zuvor genannten Kriterium der Wegoptimierung bzw. Wegminimierung dominant, gleichberechtigt oder untergeordnet überlagert sein kann. Die Rangfolge (dominant, gleichberechtigt oder untergeordnet) der verschiedenen Kriterien zueinander kann sich auch bedarfsweise ändern, ggf. auch innerhalb eines Lagenbildungsvorganges, wobei hierfür weitere Kriterien herangezogen werden können. Diese weiteren Kriterien können bspw. in einer variablen Stellpräzision, in einer Reduzierung von Beschleunigungsspitzen für die Stellbewegungen oder anderen äußeren Bedingungen liegen. Unter Umständen kann es sinnvoll sein, im Interesse einer hohen Verarbeitungsgeschwindigkeit auf einen gewissen Präzisionsgrad bei der Positionierung der Stückgüter zu verzichten. Andererseits kann es sinnvoll sein, empfindliche Stückgüter keiner zu hohen mechanischen Belastung auszusetzen, was ggf. durch Reduzierung der maximal zulässigen Beschleunigungswerte erreicht werden kann.

Wahlweise oder zusätzlich kann das Verfahren auch vorsehen, dass zum Bilden der palettierfähigen Lage oder der Vorgruppierung für eine palettierfähige Lage bei wenigstens einem der zeitlich aufeinanderfolgenden Schritte zumindest näherungsweise zeitgleich wenigstens zwei Stückgüter erfasst, hierauf folgend von der geschlossenen Formation durch seitliche Rotation aus der geradlinigen Bewegungsbahn der geschlossenen Formation räumlich abgetrennt und gemeinsam in ihre jeweilige definierte relative Zielposition und/oder Zielausrichtung gegenüber den nachfolgenden Stückgütern gebracht werden, wobei eine Entscheidung für eine Linksdrehung oder eine Rechtsdrehung bei einer Positionierung der zwei oder mehr Stückgüter unter deren gleichzeitiger Drehung nach den vorrangig verarbeiteten Kriterien der Wegminimierung und/oder der Zeitminimierung getroffen wird.

Es kann auch vorgesehen sein, dass zum Bilden der palettierfähigen Lage oder der Vorgruppierung für eine palettierfähige Lage bei wenigstens zwei zeitlich aufeinanderfolgenden Schritten das jeweils wenigstens eine klemmend erfasste Stückgut von der geschlossenen Formation durch seitliche Rotation aus der geradlinigen Bewegungsbahn der geschlossenen Formation jeweils räumlich abgetrennt und in eine jeweilige definierte relative Zielposition und/oder Zielausrichtung gegenüber den nachfolgenden Stückgütern gebracht wird, wobei das wenigstens eine Stückgut bei einer Verbringung zur rechten Seite der geradlinigen Bewegungsbahn der geschlossenen Formation mittels einer Linksdrehung unter der Randbedingung einer minimierten Gesamtstrecke zwischen der jeweiligen Erfassungsposition und der jeweiliger Zielposition bewegt wird.

Bei diesen beschriebenen Verfahrensvarianten kann insbesondere vorgesehen sein, dass das wenigstens eine Stückgut, das in Transportrichtung gesehen mit seiner ersten vertikalen Symmetrieebene gegenüber der zweiten vertikalen Symmetrieebene des Manipulators bzw. dessen Klemm- und/oder Greifmittel nach hinten versetzt erfasst ist, bei einer Verbringung zur rechten Seite der geradlinigen Bewegungsbahn der geschlossenen Formation bei gleichzeitiger Linksdrehung zwischen der Erfassungsposition und der Zielposition bewegt wird.

Außerdem kann bei einer weiteren Variante des Verfahrens vorgesehen sein, dass zum Bilden der palettierfähigen Lage oder der Vorgruppierung für eine palettierfähige Lage bei wenigstens zwei zeitlich aufeinanderfolgenden Schritten das jeweils wenigstens eine klemmend erfasste Stückgut von der geschlossenen Formation durch seitliche Rotation aus der geradlinigen Bewegungsbahn der geschlossenen Formation jeweils räumlich abgetrennt und in eine jeweilige definierte relative Zielposition und/oder Zielausrichtung gegenüber den nachfolgenden Stückgütern gebracht wird, wobei das wenigstens eine Stückgut bei einer Verbringung zur linken Seite der geradlinigen Bewegungsbahn der geschlossenen Formation mittels einer Rechtsdrehung unter der Randbedingung einer minimierten Gesamtstrecke zwischen der jeweiligen Erfassungsposition und der jeweiligen Zielposition bewegt wird.

Zudem kann das wenigstens eine Stückgut, das in Transportrichtung gesehen mit seiner ersten vertikalen Symmetrieebene gegenüber der zweiten vertikalen Symmetrieebene des Manipulators bzw. dessen Klemm- und/oder Greifmittel nach hinten versetzt erfasst ist, bei einer Verbringung zur linken Seite der geradlinigen Bewegungsbahn der geschlossenen Formation bei gleichzeitiger Rechtsdrehung zwischen der jeweiligen Erfassungsposition und der jeweiligen Zielposition bewegt werden.

Wahlweise kann das Verfahren weiterhin vorsehen, dass in wenigstens zwei zeitlich aufeinanderfolgenden Schritten jeweils ein zuvorderst in der geschlossenen Formation transportiertes Stückgut erfasst wird oder dass mehrere zuvorderst in der geschlossenen Formation transportierte Stückgüter erfasst werden.

Bei dem Verfahren können die wenigstens zwei zeitlich aufeinanderfolgenden Schritte über einen bestimmten und vorzugsweise als Deltakinematik- Roboter ausgebildeten Manipulator umgesetzt werden. Wahlweise können die jeweilige Anzahl an Stückgütern in den wenigstens zwei zeitlich aufeinanderfolgenden Schritten jeweils durch mindestens zwei sich gegenüberliegende Klemm- und/oder Greifmittel des bestimmten Manipulators klemmend erfasst und nach Bringen in ihre jeweilige definierte Zielposition mittels der mindestens zwei sich gegenüberliegenden Klemm- und/oder Greifmittel freigegeben werden. Wahlweise können auch andere Manipulatoren verwendet werden, bspw. solche, die als Portalroboter oder als Teile von solchen Portalrobotern ausgebildet sind. Auch andere Manipulatoren können vorteilhaft eingesetzt werden, bspw. solche, die als Mehrachsroboter oder als Teile von solchen Mehrachsrobotern ausgebildet sind.

Eine weitere vorteilhafte Option kann darin bestehen, eine erweiterte Bewegungsoption des Manipulators, insbesondere des als Deltakinematik-Roboter ausgebildeten Manipulator oder einen Teil eines Deltakinematik-Roboters bildenden Manipulators, zu nutzen, die umfangreicher sein kann als dies bisher dargelegt wurde bzw. als dies aus dem Zusammenhang der vorliegenden Beschreibung hervorgeht. So kann es für manche Positionierungs- und/oder Ausrichtungsoptionen sinnvoll sein, den Manipulator bzw. dessen Klemm- und/oder Greifmittel um eine im Wesentlichen vertikale Achse um einen Rotationswinkel von ca. 180° zu drehen, wodurch bspw. die zunächst in Transportrichtung in hinteren Bereichen des Greiferkopfes des Manipulators befindlichen Stückgüter in Transportrichtung nach vorne gedreht werden.

Sofern der Manipulator und/oder seine die Stückgüter erfassenden beweglichen Teile - diese können bspw. Teile des Greiferkopfes des Manipulators sein - um mindestens 180° um die vertikale Drehachse rotierbar sind, kann diese Option bedarfsweise genutzt werden, wodurch sich auch effektive Wege für die Stückgüter, insbesondere jedoch für den Manipulator einsparen lassen, der damit in kürzerer Zeit gleichartige Positionierungs- und/oder Ausrichtungsvorgänge ausführen kann, da sich auf diese Weise zumindest einzelne Phasen seiner komplexen Stellbewegungen mit geringeren Auslenkungen ausführen lassen, was insgesamt zu einer effektiven Hubreduzierung bei den komplexen Stellbewegungen des Manipulators bzw. dessen Greiferkopfes führen kann. Da die Stellbewegungen des Manipulators durch eine Vielzahl von sich überlagernden Bewegungs- und/oder Rotationskomponenten zusammengesetzt sind, kann eine Hubreduzierung einzelner oder mehrerer dieser Bewegungskomponenten bzw. von Teilabschnitten dieser Bewegungskomponenten eine effektive Zeitersparnis durch eine Zyklusverkürzung bedeuten.

Gemäß einer weiteren Verfahrensvariante kann es sinnvoll sein, dass in mindestens einem Schritt von mehreren zeitlich aufeinanderfolgenden Manipulationsschritten jeweils wenigstens ein transportiertes Stückgut erfasst und durch eine Rotation um eine vertikale Achse mit einem Rotationswinkel von mindestens 90°, insbesondere jedoch von ungefähr 180°, von seiner geradlinigen Bewegungsbahn in ursprünglicher Transportrichtung jeweils räumlich abgetrennt und in eine jeweilige definierte relative Zielposition und/oder Zielausrichtung gegenüber den nachfolgenden Stückgütern gebracht werden kann. Insbesondere kann es sinnvoll sein, den Manipulator bzw. dessen mindestens zwei Klemm- und/oder Greifmittel nach einer Rotation um eine vertikale Achse von etwa 180°, nach Erreichung einer jeweiligen Zielposition und/oder -ausrichtung sowie nach Freigabe des dort positionierten mindestens einen Stückgutes ohne Rückdrehung und/oder ohne weitere Rotation der mindestens zwei Klemm- und/oder Greifmittel wenigstens ein weiteres zu positionierendes und/oder neu auszurichtendes Stückgut von der Reihe bzw. der geschlossenen Formation erfassen zu lassen und anschließend dieses wenigstens eine erfasste Stückgut mit oder ohne Rotation des Manipulators bzw. der Klemm- und/oder Greifmittel um eine vertikale Achse in eine weitere Zielposition und/oder -ausrichtung innerhalb des Erfassungsbereiches zu verbringen. Insbesondere diese optionale Verfahrensvariante, bei welcher der Manipulator bei aufeinanderfolgenden Manipulationsschritten immer wieder um 180° weitergedreht werden kann, ohne dass zeit- und/oder platzraubende Rückdrehungen notwendig sind, erlaubt material- und zeitschonende Manipulationsabläufe, bei denen zudem die Bewegungsfolgen des Manipulators und/oder seiner Klemm- und/oder Greifmittel hinsichtlich des zur Verfügung stehenden Raumes innerhalb des Erfassungsbereichs und insbesondere hinsichtlich der Vermeidung aller störenden Kollisionen mit Stückgütern optimiert werden können. Jede eingesparte Rückdrehung des Manipulators bzw. seiner Klemm- und/oder Greifmittel ermöglicht eine engere Vorbeiführung an Stückgütern, ohne dass hierdurch eine Kollisionsgefahr besteht, da insbesondere bei Manipulatoren mit größeren Aufnahmekapazitäten für bspw. drei oder vier hintereinander angeordnete Stückgüter ein relativ großer Platzbedarf für allfällige Rotationsbewegungen der relativ ausladenden Klemm- und/oder Greifmittel beseht, was bei Rückdrehungen des Greiferkopfes um jeweils 180° nach jeder vorhergehenden Positionierung, die eine 180°-Drehung umfasste, zu einer deutlichen Erhöhung der Kollisionsgefahr mit im Erfassungsbereich befindlichen Stückgütern führte. Um diese Kollisionsgefahr auszuschließen, muss der Manipulator bei Rückbewegungen zur Aufnahme neuer Stückgüter an vorderer Position der nachtransportierten Reihe oder Formation größere Ausweichbewegungen machen, die zu einer unerwünschten Zeitverzögerung für die Rückbewegungen und -drehungen führen.

Eine weitere vorteilhafte Option der Drehbeweglichkeit des Manipulators bzw. dessen bewegter und/oder beweglicher Teile, die im Zusammenhang mit der Erfassung der Stückgüter stehen können, kann in einer Vergrößerung des maximalen Drehwinkels des rotierbaren Greiferkopfes bzw. der die Stückgüter erfassenden Abschnitte des Manipulators bestehen. Dieser rotierbare Abschnitt kann entweder unbegrenzt in jede beliebige Drehrichtung - d.h. in Linksdrehung oder Rechtsdrehung - mit nahezu beliebigem oder beliebigem Drehwinkel rotieren, um die jeweils optimale Drehrichtung in Kombination mit der optimierten Wegeauswahl und dem jeweils optimalen Drehwinkel zu wählen, um auf diese Weise in kürzest möglicher Zeit und/oder auf kürzest möglichem Weg die Stückgüter an der jeweils gewünschten und/oder einer ausgewählten optimalen Stelle des Lagenbildes zu positionieren und/oder auszurichten. Sofern mechanische Gründe dafür sprechen, kann der maximale Drehwinkel auch begrenzt sein, bspw. auf einen Winkel von weniger als 720°, auf ca. 360° oder weniger als 360° oder auf einen anderen sinnvollen Wert, der bspw. zwischen ca. 180° und ca. 360° liegen kann.

Bei allen diesen beschriebenen Verfahrensvarianten kann es jeweils von Vorteil sein, wenn jeweils nicht erfasste Stückgüter von verbleibenden in einer Reihe bewegten Stückgütern während der klemmenden und/oder form- und/oder kraftschlüssigen Erfassung, der räumlichen Abtrennung und/oder und der Überführung des wenigstens einen Stückgutes in eine definierte relative Zielposition und/oder Zielausrichtung unterbrechungsfrei und/oder mit unveränderter Transportgeschwindigkeit weitertransportiert werden.

Nachfolgend sind weitere Ausführungsvarianten des erfindungsgemäßen Verfahrens beschrieben, die alternativ oder kumulativ zu/mit den übrigen Verfahrensvarianten gesehen und/oder kombiniert werden können. So sieht eine solche weitere Variante des erfindungsgemäßen Verfahrens vor, dass dem wenigstens einen Stückgut bei klemmender Erfassung mindestens ein weiteres nicht erfasstes und aus der geschlossenen Formation nicht abgetrenntes Stückgut vorauseilt, wobei das wenigstens eine klemmend erfasste Stückgut von der geschlossenen Formation räumlich abgetrennt und in eine definierte relative Zielposition und/oder Zielausrichtung gegenüber nachfolgenden Stückgütern gebracht wird und hieraus resultierend mit dem wenigstens einen Stückgut gemeinsam das mindestens eine weitere Stückgut in eine jeweilige mindestens eine weitere Zielposition und/oder Zielausrichtung geschoben wird. Diese Verfahrensvariante eröffnet weitere Positionierungsmöglichkeiten, bei denen der Manipulator und/oder das aktuell von ihm erfasste mindestens eine Stückgut bspw. auch als Schieber für bereits zuvor manipulierte Stückgüter eingesetzt und genutzt werden kann. Es sind sogar Verfahrensvarianten denkbar, bei denen der Manipulator nicht das zuvorderst transportierte Stückgut der Formation abgreift, sondern eines dahinter oder ein weiter hinten befindliches Stückgut, das in diesem Fall herausgehoben oder präzise seitlich zur Transportrichtung aus der Reihe herausbewegt werden muss.

Außerdem kann eine Variante des erfindungsgemäßen Verfahrens vorsehen, dass das wenigstens eine Stückgut durch eine Bewegung in linearer Richtung in die Zielposition und/oder Zielausrichtung gelangt und hierbei das mindestens eine weitere Stückgut in identischer linearer Richtung in die mindestens eine weitere Zielposition und/oder Zielausrichtung geschoben wird. Hierbei kann vorzugsweise vorgesehen sein, dass die lineare Richtung und eine Transportrichtung der geschlossenen Formation miteinander fluchten.

Das mindestens eine weitere Stückgut kann wahlweise unter Oberflächenkontakt vom wenigstens einen Stückgut in die mindestens eine weitere Zielposition und/oder Zielausrichtung geschoben werden. Zudem kann es von Vorteil sein, wenn das wenigstens eine Stückgut und das mindestens eine weitere Stückgut ihren Oberflächenkontakt nach Erreichen der Zielposition und/oder Zielausrichtung beibehalten.

Weiterhin kann eine Verfahrensvariante vorsehen, dass zwei oder mehr als zwei hintereinander transportierte Stückgüter aus der geschlossenen Formation erfasst, gemeinsam räumlich abgetrennt und in eine definierte relative Zielposition und/oder Zielausrichtung gegenüber nachfolgenden Stückgütern gebracht werden und hieraus resultierend mit den zwei oder mehr als zwei hintereinander transportierten Stückgütern gemeinsam das mindestens eine weitere Stückgut in eine jeweilige weitere Zielposition und/oder Zielausrichtung geschoben werden.

Gemäß einer weiteren Ausführungsform kann vorgesehen sein, dass der Manipulator nach Verschieben einer Gruppe von erfassten Stückgüter und mindestens einem vom Manipulator nicht erfassten Stückgut, das in Oberflächenkontakt mit einem vom Manipulator erfassten Stückgut steht, sich von der Gruppe löst, anschließend erneut mindestens ein Stückgut dieser Gruppe erfasst und dieses dreht und / oder gegenüber der gerade manipulierten Gruppe von Stückgütern verschiebt o.ä.

Gemäß eine weiteren Ausführungsform kann vorgesehen sein, dass ein bereits in einem ersten Schritt mittels des Manipulators erfasstes und in eine erste Position bzw. Zwischenposition gebrachtes Stückgut und/oder ein durch Verschieben mittels eines weiteren Stückgutes in die erste Position bzw. Zwischenposition gebrachtes Stückgut durch erneutes Erfassen mittels des Manipulators in die definierte Zielposition und/oder - ausrichtung gebracht wird. Zwischen dem Absetzen dieses Stückgutes und seinem erneuten Erfassen und Umsetzen, um die Zielposition zu erreichen, kann der Manipulator bspw. andere Stückgüter erfassen, verschieben, verdrehen etc. oder auch weitere Stückgüter durch die zwischenzeitlich erfassten und/oder gegriffenen Stückgüter verschieben

Ebenso können gleichzeitig mehrere Stückgüter zunächst in die erste Position bzw. Zwischenposition gebracht und durch erneutes Erfassen mittels des Manipulators in die jeweilige definierte Zielposition und/oder -ausrichtung gebracht werden. Auch hierbei ist es denkbar, dass der Manipulator zwischen dem Absetzen dieser Stückgüter und ihrem erneuten Erfassen und Umsetzen, um für sie die jeweiligen Zielpositionen zu erreichen, andere Stückgüter erfassen, verschieben, verdrehen etc. oder auch weitere Stückgüter unter Verwendung der zwischenzeitlich erfassten und/oder gegriffenen Stückgüter verschieben kann.

Weiterhin kann vorgesehen sein, dass wenigstens ein vom Manipulator erfasstes Stückgut zum Verschieben wenigstens eines weiteren Stückgutes in eine auf dieses weitere Stückgut bezogene definierte Zielposition und/oder -ausrichtung eingesetzt wird. Anschließend wird das weiterhin im Manipulator befindliche Stückgut in seine jeweilige definierte Zielposition und/oder -ausrichtung gebracht. Dabei kann es beispielsweise seitlich gegenüber zu dem vom Manipulator nicht erfassten Stückgut verschoben werden und / oder gedreht werden o.ä. Analog dazu können durch den Manipulator gleichzeitig mehrere Stückgüter erfasst und zum Verschieben eines weiteren Stückgutes bzw. weiterer Stückgüter in seine jeweilige definierte Zielposition) und/oder -ausrichtung bzw. in deren jeweilige definierte Zielpositionen und/oder -ausrichtungen eingesetzt und anschließend die weiterhin im Manipulator befindlichen Stückgüter in ihre jeweilige definierten Zielpositionen und/oder -ausrichtungen gebracht werden.

Der beschriebene Verfahrensschritt bzw. die zuvor beschriebenen Verfahrensschritte oder auch einzelne der zuvor beschriebenen Verfahrensschritte erfolgen insbesondere mittels einer erfindungsgemäßen Vorrichtung, insbesondere mittels einer Handhabungsvorrichtung, die dem Umgang mit in mindestens einer Reihe von hintereinander bewegten Stückgütern dient/dienen, welche Vorrichtung wenigstens eine erste Transporteinrichtung und mindestens einen Manipulator umfasst. Die wenigstens eine erste Transporteinrichtung dient der Zuführung der in einer Reihe unmittelbar aufeinanderfolgenden, insbesondere annähernd ohne Beabstandung als geschlossene Formation angeordneten bzw. bewegten Stückgüter zu einem Erfassungsbereich des mindestens einen Manipulators.

Der mindestens eine Manipulator ist erfindungsgemäß zum klemmenden Erfassen und/oder Entgegennehmen mindestens eines Stückgutes der Formation innerhalb seines Erfassungsbereiches sowie zum Abtrennen und Überführen des mindestens einen Stückgutes der Formation in eine Zielposition innerhalb seines Erfassungsbereiches ausgebildet. Der Manipulator kann beispielsweise als Parallelkinematik- Roboter ausgebildet oder Teil eines solchen sein, insbesondere als Tripod oder Portalroboter, Mehrachsroboter etc.

Gemäß einer Ausführungsform können dem mindestens einen Manipulator wenigstens zwei gegenüberliegend, insbesondere paarweise gegenüberliegend angeordnete Klemm- und/oder Greifelemente zugeordnet sein, welche zum klemmenden Erfassen sowie zum Abtrennen und Überführen des jeweiligen mindestens einen Stückgutes bzw. der mehreren erfassten Stückgüter in die Zielposition und/oder Zielausrichtung miteinander, insbesondere jeweils paarweise miteinander zusammenwirken. Diese Definition der Klemm- und Greifelemente des Manipulators umfasst bspw. auch Doppelgreifer oder Mehrfachgreifer o. dgl., die mehrere Greifpaare aufweisen können, deren Greifpaare jedoch insbesondere paarweise zusammenwirken, um bspw. Stückgütern in mehreren parallelen, insbesondere voneinander beabstandeten Reihen aufnehmen, erfassen und/oder greifen zu können. Es sei somit festgehalten, dass die Zahl von wenigstens zwei gegenüberliegend angeordneten Klemm- und/oder Greifelementen ein Minimum definiert. Es ist damit nicht ausgeschlossen, dass ggf. mehrere Klemm- und/oder Greifelemente in der definierten Weise ausgestaltet sind; zudem ist nicht ausgeschlossen, dass mehr als zwei Elemente vorhanden sind. Der Manipulator weist somit gemäß einer Ausführungsform mindestens einen Greiferkopf mit starren, beweglichen und/oder gegeneinander zustellbaren Klemmbacken auf, zwischen denen das mindestens eine Stückgut geklemmt und dadurch entsprechend zur Zielposition bewegt werden kann.

Bei der Vorrichtung bzw. Handhabungsvorrichtung zum Umgang mit in mindestens einer Reihe hintereinander bewegten Stückgütern ist zudem vorgesehen, dass mindestens eines von zwei gegenüberliegend angeordneten Klemm- und/oder Greifelementen des mindestens einen Manipulators zum kraft- und/oder formschlüssigen Erfassen des mindestens einen Stückgutes ausgebildet ist. Da zudem in der vorliegenden Beschreibung neben der formschlüssigen Erfassung der Stückgüter auch oftmals von einer klemmenden Erfassung der Stückgüter die Rede ist, sei an dieser Stelle erwähnt, dass damit auch eine kraftschlüssige Erfassung mitumfasst sein soll, da bei den einzelnen Greifvorgängen in aller Regel nicht exakt bestimmbar und insbesondere nicht exakt voneinander abgrenzbar ist, wie die eigentliche Kraftübertragung von den Greifelementen auf die Stückgüter, die Gebinde etc. erfolgt. Eine formschlüssige Erfassung bei gleichzeitiger leichter Klemmung enthält in aller Regel auch einen zumindest leichten Kraftschluss.

Bei der Vorrichtung bzw. Handhabungsvorrichtung kann weiterhin vorgesehen sein, dass mindestens eines von zwei gegenüberliegend angeordneten Klemm- und/oder Greifelementen des mindestens einen Manipulators zumindest bereichsweise mit einer Außenkontur zumindest an einer Kontaktfläche und/oder an den Kontaktbereichen des wenigstens einen kraft- und/oder formschlüssig zu erfassenden Stückgutes korrespondiert. Mit diesen korrespondierenden Konturen kann insbesondere gemeint sein, dass die Konturen zumindest abschnittsweise aneinander angepasst sind und einen Formschluss zwischen den Kontaktflächen und/oder Kontaktbereichen des jeweils erfassten Stückgutes und den zu den Stückgütern weisenden Flächen der Klemm- und/oder Greifelemente zumindest abschnittsweise begünstigen, indem die jeweiligen Flächen aneinander angepasst sind bzw. flächig oder linienförmig aneinander liegen.

Weiterhin kann die Vorrichtung dergestalt ausgebildet sein, dass mindestens eines von zwei gegenüberliegend angeordneten Klemm- und/oder Greifelementen zum kraft- und/oder formschlüssigen Erfassen des mindestens einen Stückgutes wenigstens eine Kontaktfläche, wenigstens ein Kontaktflächenpaar und/oder wenigstens einen Kontaktbereich für das mindestens eine kraft- und/oder formschlüssig zu erfassende Stückgut ausbildet. Diese Kontaktfläche, dieses Kontaktflächenpaar und/oder dieser wenigstens eine Kontaktbereich ist bei der Erfassung des mindestens einen Stückgutes mit dessen zylindrischer, kegelförmiger und/oder konkav oder mehreckig gewölbter bzw. ggf. auch anderweitig konturierter Außenmantelfläche flächig und/oder streifenförmig und/oder linienförmig und/oder punktuell in Anlage bringbar. Es sei an dieser Stelle betont, dass die mit den Stückgütern in Kontakt gebrachten bzw. zu diesen weisenden Flächen der Klemm- und/oder Greifelemente keineswegs konvexe Konturen aufweisen müssen, sondern es gilt, dass vielmehr alle denkbaren und/oder sinnvollen Konturvarianten für diese Kontaktflächen oder Kontaktflächenpaare oder Kontaktbereiche möglich sind und hiermit als offenbart gelten sollen. Die Konturen können durchaus in Teilen konvex oder in Abschnitten konvex etc. sein. Ebenso denkbar sind zahllose andere Varianten, z.B. stufenförmige, treppenförmige, dreieckige usw. Konturen, die wichtig sein können für mehreckige oder unregelmäßige Außenkonturen z.B. von Behältern. Hierbei können auch kleinere Kanten in treppenförmiger Anordnung oder in paarweiser Anordnung sinnvoll sein, die nur an die Ecken greifen.

Bei einer Ausführungsvariante der hier beschriebenen Vorrichtung bildet mindestens eines von zwei gegenüberliegend angeordneten Klemm- und/oder Greifelementen zum kraft- und/oder formschlüssigen Erfassen des mindestens einen Stückgutes wenigstens zwei Kontaktflächen, wenigstens zwei Kontaktflächenpaare und/oder wenigstens zwei Kontaktbereiche für das mindestens eine kraft- und/oder formschlüssig zu erfassende Stückgut, insbesondere für zwei oder mehr kraft- und/oder formschlüssig zu erfassende Stückgüter aus, die entfernt voneinander an gegenüberliegenden Endbereichen des jeweiligen mindestens einen der zwei gegenüberliegend angeordneten Klemm- und/oder Greifelemente angeordnet sind. Mit diesen entfernt voneinander angeordneten Endbereichen der Klemm- und/oder Greifelementen sind insbesondere die in Längserstreckungsrichtung der jeweiligen Greifbacken befindlichen endseitigen Konturbereiche gemeint, wie sie oben zur form- und/oder kraftschlüssigen Erfassung der Stückgüter definiert wurden. Zwischen diesen endseitigen Abschnitten, die definitionsgemäß voneinander beabstandet sind, können Bereiche ohne solche Konturen oder mit schwächer ausgebildeten Konturen angeordnet sein, da die Stückgüter sich aufgrund ihrer Kontaktierung gegenseitig abstützen und stabilisieren, insbesondere beim gleichzeitigen Erfassen von mehreren Stückgütern, insbesondere von drei oder mehr Stückgütern.

Die Klemm- und/oder Greifelemente des Manipulators können insbesondere Gegenflächen aufweisen oder solche Gegenflächen ausbilden, die weitgehend alle auftretenden Kräfte und Momente beim Beschleunigen während des Umsetzens des jeweiligen Stückgutes aufnehmen bzw. die sich und/oder das Stückgut gegenseitig abstützen.

Von Vorteil kann es sein, wenn mindestens eines von zwei gegenüberliegend angeordneten Klemm- und/oder Greifelementen wenigstens ein Funktionselement aufweist, das reversibel elastisch verformbar ausgebildet ist und einen Anlagebereich zum klemmenden Erfassen des mindestens einen Stückgutes bereitstellt. Auch kombinierte Bauteile sind hierfür bzw. für das Funktionselement denkbar, so z.B. solche mit konkaven Flächen mit elastischen Bereichen, geeignet geformte Gummielemente etc. Weiterhin kann es von Vorteil sein, wenn der Anlagebereich des wenigstens einen Funktionselementes des mindestens einen Klemm- und/oder Greifelements sich über einen Anteil von mindestens 30%, insbesondere von mindestens 50% einer Länge in Längserstreckung des jeweiligen Klemm- und/oder Greifelements erstreckt.

Schließlich kann die Vorrichtung eine Ausführungsvariante umfassen, bei welcher der Anlagebereich zwischen den wenigstens zwei Kontaktflächen, zwischen den wenigstens zwei Kontaktflächenpaaren und/oder zwischen den wenigstens zwei Kontaktbereichen für das mindestens eine kraft- und/oder formschlüssig zu erfassende Stückgut, insbesondere für zwei oder mehr kraft- und/oder formschlüssig zu erfassende Stückgüter angeordnet ist. Diese wenigstens zwei Kontaktflächen, Kontaktflächenpaare und/oder Kontaktbereiche sind vorzugsweise jeweils entfernt voneinander an gegenüberliegenden Endbereichen des jeweiligen mindestens einen von zwei gegenüberliegend angeordneten Klemm- und/oder Greifelementen ausgebildet.

Wenn im vorliegenden Zusammenhang von gegenüberliegend angeordneten Klemm- und/oder Greifelementen die Rede ist, so können damit insbesondere gegeneinander zustellbare Klemmbacken eines Greifkopfes o. dgl. gemeint sein, die das Stückgut an dessen Längsseiten erfassen. Es sind jedoch auch zahlreiche andere Greif- und/oder Erfassungsprinzipien sinnvoll, ggf. auch kombinierte. So kann wahlweise auch ein Unterdruckgreifer zur Unterstützung zum Einsatz kommen, der bspw. mit beweglichen mechanischen Greifelementen kombiniert sein kann. Grundsätzlich umfasst der Begriff des Manipulators bzw. der Begriff der Klemm- und/oder Greifelemente jegliche Erfassungs- und/oder Manipulationselemente, die zur beschriebenen Wechselwirkung mit den Stückgütern geeignet sein können und entsprechend ausgestattet sind.

Weiterhin wird ein Verfahren zum Umgang mit in mindestens einer Reihe hintereinander bewegten Stückgütern beschrieben, bei dem die in einer Reihe ohne Abstände oder mit minimalen Abständen unmittelbar aufeinanderfolgende Stückgüter als geschlossene Formation transportiert werden und mindestens ein transportiertes Stückgut aus der geschlossenen Formation mittels wenigstens zwei gegenüberliegend angeordneter, insbesondere paarweise gegenüberliegend angeordneter Klemm- und/oder Greifelemente klemmend erfasst, von der geschlossenen Formation räumlich abgetrennt und in eine definierte relative Zielposition und/oder Zielausrichtung gegenüber nachfolgenden Stückgütern gebracht wird. Es sollte allerdings nicht unerwähnt bleiben, dass die Erfassung nur eines Stückguts den etwas weniger häufigen Fall, ggf. auch den Ausnahmefall darstellt, während der etwas häufiger auftretende Fall bzw. der als Normalfall zu bezeichnende Fall die gleichzeitige Erfassung von zwei, drei oder mehr hintereinander in geschlossener Formation transportierten Stückgütern ist, wobei hierbei in aller Regel die jeweils zuvorderst zum Manipulator gelangenden Stückgüter der Reihe erfasst werden.

Bei dem Verfahren wird das mindestens eine transportierte Stückgut durch eine Zustellbewegung der wenigstens zwei gegenüberliegend und/oder paarweise gegenüberliegend angeordneten Klemm- und/oder Greifelemente klemmend erfasst, wonach das Stückgut bzw. die Mehrzahl von Stückgütern durch eine gemeinsame Bewegung der wenigstens zwei Klemm- und/oder Greifelemente von der geschlossenen Formation räumlich abgetrennt wird und über die wenigstens zwei Klemm- und/oder Greifelemente in die definierte relative Zielposition und/oder Zielausrichtung gegenüber nachfolgenden Stückgütern gebracht wird.

Bei dem Verfahren ist vorzugsweise vorgesehen, dass bei dem Erfassungsvorgang zwischen dem mindestens einen Stückgut und mindestens einem der wenigstens zwei gegenüberliegend angeordneten Klemm- und/oder Greifelemente eine kraft- und/oder formschlüssige Verbindung ausgebildet und zumindest solange aufrechterhalten wird, bis das mindestens eine Stückgut in die Zielposition und/oder Zielausrichtung gebracht ist. Wahlweise kann diese kraft- und/oder formschlüssige Verbindung auch vor Erreichung der Zielposition gelockert oder aufgehoben werden, was insbesondere dann der Fall sein kann, wenn die endgültige Zielposition und/oder die endgültige Ausrichtung für das Stückgut oder für die Mehrzahl von Stückgütern erst durch weitergehende Manipulationsschritte, bspw. durch ein Verschieben innerhalb des Erfassungsbereichs mit Hilfe von anderen Stückgütern erreicht werden sollen. Bei solchen mehrstufigen Positionierungsvorgängen kann der Manipulator gleichzeitig oder in zeitlich aufeinanderfolgenden Phasen als Greifer und/oder als Schieber eingesetzt werden.

Bei dem Verfahren ist vorzugsweise vorgesehen, dass beim Ausbilden der kraft- und/oder formschlüssigen Verbindung mindestens eines von zwei gegenüberliegend angeordneten Klemm- und/oder Greifelementen mit einer Außenkontur zumindest an einer Kontaktfläche und/oder an den Kontaktbereichen des wenigstens einen kraft- und/oder formschlüssig zu erfassenden Stückgutes korrespondiert. Wahlweise kann zum Ausbilden der kraft- und/oder formschlüssigen Verbindung wenigstens eine Kontaktfläche, wenigstens ein Kontaktflächenpaar und/oder wenigstens ein Kontaktbereich des mindestens einen von zwei gegenüberliegend angeordneten Klemm- und/oder Greifelementen mit einer korrespondierenden zylindrischen, kegelförmigen und/oder konkav oder mehreckig gewölbten bzw. konturierten Außenmantelfläche des mindestens einen Stückgutes flächig und/oder streifenförmig und/oder linienförmig und/oder punktuell in Anlage gebracht werden.

In diesem Zusammenhang kann es weiterhin sinnvoll sein, wenn bei einer Ausführungsform des Verfahrens zum Ausbilden oder bei der Ausbildung der kraft- und/oder formschlüssigen Verbindung wenigstens eine Kontaktfläche, wenigstens ein Kontaktflächenpaar und/oder wenigstens ein Kontaktbereich eines ersten Klemm- und/oder Greifelementes sowie eine weitere Kontaktfläche, ein weiteres Kontaktflächenpaar und/oder ein weiterer Kontaktbereich eines dem ersten Klemm- und/oder Greifelementes gegenüberliegenden zweiten Klemm- und/oder Greifelementes jeweils mit einer korrespondierenden zylindrischen, kegelförmigen und/oder konkav oder mehreckig gewölbten bzw. konturierten Außenmantelfläche des mindestens einen Stückgutes flächig und/oder streifenförmig und/oder linienförmig und/oder punktuell in Anlage gebracht wird bzw. in Anlage gebracht werden.

Diese sehr weit gefassten Begriffe der korrespondierenden Konturen bzw. der abschnittsweise korrespondierenden Konturen meint im Wesentlichen zueinander passende bzw. aufeinander abgestimmte Formen der Greifbacken, Klemm- und/oder Greifelemente des Manipulators sowie der zu erfassenden Stückgüter. Wenn diese Konturen nicht zueinander passen, können die Stückgüter nicht mit der angestrebten Präzision und mit der erforderlichen Zuverlässigkeit erfasst und manipuliert werden. Andererseits können die Stückgüter, die bspw. durch Gebindeformationen mit nahezu beliebig geformten Einzelartikeln gebildet sein können, ggf. auch durch ungewöhnlich und/oder unregelmäßig geformte Stückgüter, die unterschiedlichsten Konturen, Außenmantelflächen, Neigungen, Hinterschnitte etc. aufweisen, die für regelmäßig geformte, auf herkömmliche bzw. bekannte Weise ausgestaltete Klemmbacken, Greiferelemente oder Klemmelemente des Manipulators unter Umständen schwer zu erfassen sein können. Um auch diese unterschiedlichen Konturen der Stückgüter für den erfindungsgemäßen Manipulator handhabbar zu machen, sind dessen Klemm- und/oder Greifelemente in der beschriebenen Weise ausgestattet und/oder ausgestaltet, was auch die Auswechselbarkeit der greifenden Teile mit umfasst, wenn ein Produktwechsel in der Verarbeitungsfolge stattfindet, d.h. wenn Stückgüter mit anderen Konturen verarbeitet werden müssen als dies in vorhergehenden Verarbeitungsphasen der Fall war.

Außerdem kann das Verfahren vorsehen, dass das mindestens eine Stückgut über die wenigstens zwei sich gegenüberliegenden Klemm- und/oder Greifelemente klemmend erfasst wird, wobei das mindestens eine Stückgut mit einem Anlagebereich wenigstens eines Funktionselementes der zwei sich gegenüberliegenden Klemm- und/oder Greifelemente in Kontakt tritt. Wobei gleichzeitig das wenigstens eine Funktionselement aufgrund dieser klemmenden Erfassung reversibel elastisch verformt wird. Der Kontakt und die reversible elastische Verformung werden vorzugsweise beibehalten, bis das mindestens eine Stückgut in die Zielposition und/oder Zielausrichtung gebracht ist. Dieses wenigstens eine elastische Element bzw. das reversibel elastische Element kann bspw. durch ein Gummielement oder durch einen Verbundwerkstoff mit den gewünschten elastischen Eigenschaften gebildet sein, der ausreichende Anteile eines Elastomermaterials aufweist. Die reversibel elastischen Eigenschaften dienen in erster Linie einer noch besseren Anpassung der aneinander gefügten Konturen, was damit auch dem besseren Halt und der besseren Verankerung der erfassten Stückgüter zwischen den Klemm- und/oder Greifelementen dient und deren Herausfallen aus den geklemmten Greifbacken des Manipulators und/oder deren Verrutschen dort verhindern kann.

Eine weitere Ausführungsvariante des erfindungsgemäßen Verfahrens sieht vor, dass bei der oder während der Erfassung, zumindest jedoch in einer Phase der Erfassung zwischen dem mindestens einen Stückgut und mindestens einem von zwei gegenüberliegend angeordneten Klemm- und/oder Greifelementen eine formschlüssige Verbindung ausgebildet wird. Diese formschlüssige Verbindung wird vorzugsweise aufrechterhalten oder beibehalten, bis das mindestens eine Stückgut in die Zielposition und/oder Zielausrichtung gebracht ist, kann jedoch ggf. auch etwas früher aufgehoben werden, wenn bspw. die oben erwähnten Bedingungen für ein abschnittsweises Schieben von einzelnen Stückgütern gegeben sind. Bei dem Verfahren ist weiterhin vorgesehen, dass das mindestens eine Stückgut über die zwei sich gegenüberliegenden Klemm- und/oder Greifelemente klemmend erfasst wird, wobei das mindestens eine Stückgut mit einem Anlagebereich wenigstens eines Funktionselementes der zwei sich gegenüberliegenden Klemm- und/oder Greifelemente in Kontakt tritt. Dieses wenigstens eine Funktionselement wird aufgrund der klemmenden Erfassung resultierend reversibel elastisch verformt. Der Kontakt und die reversible elastische Verformung werden zumindest solange beibehalten, bis das mindestens eine Stückgut in die Zielposition und/oder Zielausrichtung gebracht ist.

Der im Zusammenhang mit der vorliegenden Beschreibung verwendete Begriff des Manipulators meint im Wesentlichen eine Handhabungseinrichtung, die zum Greifen, Verschieben, Drehen und/oder Versetzen von Stückgütern, Artikeln oder Gebinden geeignet ist, und die insbesondere auf einem sog. Deltaroboter oder Parallelkinematik-Roboter basieren kann, welcher in einer dreiarmigen Ausführung, wie sie in der Praxis zunehmend eingesetzt wird auch als Tripod bezeichnet werden kann. Jeder der Arme eines solchen Tripods oder Deltaroboters besteht aus einem an der Basis um eine gestellfeste Schwenkachse angetrieben verschwenkbar angeordneten Oberarm und einem mit dem Oberarm und dem Koppelelement gelenkig verbundenen Unterarm.

Der Unterarm ist hierbei meist passiv, frei von einem Antrieb zu dessen Verschwenkung gegenüber dem Oberarm oder dem Koppelelement ausgeführt. Einer oder mehrere der Unterarme können bspw. über Kugelgelenke mit den jeweils zugehörigen Oberarmen und dem Koppelelement verbunden sein. Ein solcher einzelner Unterarm ist frei schwenkbar und besitzt keine Eigenstabilität. Alle Oberarme eines Deltaroboters sind jeweils um vorzugsweise innerhalb einer gemeinsamen Ebene liegende Schwenkachsen verschwenkbar gelagert und können allesamt angetrieben und mit separaten Antriebsmotoren ausgestattet sein. Drei mit dem Koppelelement und jeweils mit ihrem zugehörigen Oberarm verbundene Unterarme bilden in jeder Position ein Kraftdreieck, das sich nur bewegen lässt, wenn die drei Oberarme jeweils synchron bzw. gleichzeitig die für sie berechneten Schwenkbewegungen um deren gestellfeste Schwenkachsen ausführen. Zwei oder mehr Schwenkachsen können parallel verlaufen; in der Regel weisen alle Schwenkachsen zwei Schnittpunkte mit anderen Schwenkachsen auf.

Wenigstens einer der Unterarme kann aus zwei auch als Elle und Speiche bezeichneten, ein Parallelogrammgestänge bildenden Gestängeelementen bestehen, um das Koppelelement in zumindest einer vorgegebenen Ausrichtung relativ zur Basis zu führen. Das Koppelelement dient dabei als Arbeitsplattform, die in der Praxis auch als Tool-Center-Point (TCP) bezeichnet wird. An diesem TCP kann ein Manipulator angeordnet sein, bspw. in Gestalt von gegeneinander zustellbaren Greifarmen o. dgl. Handhabungseinrichtungen, so dass damit Artikel, Gebinde o. dgl. Stückgüter ergriffen und gedreht, verschoben oder von einer Auflagefläche angehoben werden können.

Der an der Arbeitsplattform bzw. dem TCP angeordnete Manipulator kann wahlweise drehbar gelagert sein, um den Manipulator ausrichten oder eine gewünschte Drehung der Artikel oder Stückgüter ausführen zu können. Anstelle einer antreibbar drehbaren Lagerung des Manipulators am Koppelelement ist grundsätzlich auch denkbar, den Manipulator unverdrehbar am Koppelelement anzuordnen und das gesamte Koppelelement unter entsprechender Ausgleichbewegung der Arme mit Hilfe einer Teleskopwelle gegenüber der Basis zu verdrehen. Damit einhergehend ist jedoch der Nachteil eines nur eingeschränkten Drehwinkels des Koppelelements. Die Einschränkung ergibt sich durch das Erreichen von Endanschlägen der gelenkigen Verbindungen der Oberarme und/oder des Koppelelements mit den Unterarmen und/oder dem gegenseitigen Kontakt benachbarter Unterarme. Verschiedene Aspekte ähnlicher Handhabungseinrichtungen mit Tripoden gehen bereits aus dem Stand der Technik hervor, so etwa aus der DE 10 2010 006 155 A1, aus der DE 10 2013 208 082 A1 sowie aus der US 8 210 068 B1.

Die bekannten Parallelkinematik-Roboter bzw. sog. Tripoden können einen für den jeweiligen Roboter verfügbaren Arbeitsraum abdecken, der sich aus der Länge der Oberarme, dem Abstand der Befestigung der Oberarme zum Mittelpunkt einer gestellfesten Basis, der Länge der Unterarme, dem Abstand der Befestigung der Unterarme zum Mittelpunkt des sog. Tool-Center-Points am Werkzeugträger und dem maximalen Schwenkbereich der Oberarme ergibt. Dieser Arbeitsraum ist bezogen auf den Tool-Center-Point in z-Richtung ein Zylinder, an dessen unteren Rand sich ein Kugelsegment anschließt. Ferner wird der Arbeitsraum am oberen Rand gegebenenfalls noch eingeschränkt durch maximale Schwenkwinkel kardanischer Teleskop-Antriebswellen. Dieser Arbeitsraum kann in etwa dem Erfassungsbereich entsprechen, kann aber auch kleiner oder größer als der sog. Erfassungsbereich im Sinne der vorliegenden Erfindung sein. Um die innerhalb des Erfassungsbereichs befindlichen Stückgüter erfassen, greifen und manipulieren zu können, ist es sinnvoll, den Arbeitsraum, in dem sich der TCP des Tripods bewegen kann, etwa größer als den Erfassungsbereich zu wählen.

Die bekannten Deltakinematik-Roboter bzw. sog. Tripode besitzen eine hohe Genauigkeit und können darüber hinaus zur Handhabung der jeweiligen Stückgüter mit hoher Geschwindigkeit bewegt und verfahren werden. Um die jeweiligen Stückgüter entgegennehmen und nach der Handhabung bzw. Positionierung wieder freigeben zu können, weisen bekannte Tripode bewegbare und steuerbare Manipulatoren auf. So können diese Manipulatoren bspw. pneumatisch, hydraulisch oder elektrisch angesteuert werden, so dass hierzu mit dem entsprechenden Manipulator Leitungsverbindungen gekoppelt sind. Allerdings können diese Leitungsverbindungen geeignet sein, die Bewegungsfreiheit des Tripods einzuschränken. Zudem müssen die Leitungsverbindungen sicher verlegt werden, so dass das Risiko einer Beschädigung von Leitungsverbindungen bei Betrieb des Tripods ausgeschlossen werden kann. Nicht zuletzt aus diesem Grunde besitzen bisher eingesetzte Deltakinematik-Roboter aufgrund der umständlichen Koppelung zwischen einem Manipulator und einem zugeordneten Aktor einen komplexen Aufbau und eine teilweise eingeschränkte Bewegungsfreiheit.

Demgegenüber sieht die vorliegende Erfindung in einem weiteren Ausführungsbeispiel eine Vorrichtung zur Handhabung und/oder zum Manipulieren von Artikeln, Gruppierungen, Gebinden oder Stückgütern vor, die nachfolgend anhand verschiedener Ausführungsdetails beschrieben wird. Außerdem sieht eine Ausführungsvariante der Erfindung ein Verfahren zur Handhabung und/oder zum Manipulieren von Artikeln, Gruppierungen, Gebinden oder Stückgütern vor, das mit einer solchen Vorrichtung durchgeführt wird, die eine obere Aufhängung aufweist, an welcher wenigstens drei drehbar angetriebene Stellarme befestigt sind, wobei die wenigstens drei Stellarme jeweils aus wenigstens zwei relativ zueinander schwenkbaren Armabschnitten bestehen und unabhängig voneinander betätigt werden können. Die Vorrichtung umfasst weiterhin einen Manipulator, der ein oder mehrere Mittel zum Greifen der Artikel umfasst und mit den wenigstens drei Stellarmen mechanisch gekoppelt ist, so dass durch eine Bewegung eines oder mehrerer der wenigstens drei Stellarme eine Position des Manipulators vorgegeben werden kann. Außerdem sieht die Vorrichtung eine Linearführung vor, die mit dem Manipulator und der Aufhängung über jeweils ein kardanisch wirkendes Gelenk in Verbindung steht, wobei die Linearführung als drehbare erste Welle ausgebildet ist, die mit dem Manipulator drehfest in Verbindung steht und wobei der Manipulator durch eine Rotationsbewegung der ersten Welle gemeinsam mit dieser Welle gedreht wird. Zudem ist eine als zweite Welle ausgebildete Betätigungseinrichtung vorgesehen, welche die Linearführung durchsetzt und über welche die ein oder mehreren Mittel zum temporären Greifen und Freigeben von Artikeln angesteuert werden können, wobei die als zweite Welle ausgebildete Betätigungseinrichtung zur Ansteuerung der ein oder mehreren Mittel relativ zur Linearführung gedreht wird, und wobei die zweite Welle bei einer Drehung der ersten Welle, die mit dem rotierbaren Manipulator drehfest in Verbindung steht, in Abhängigkeit von einem Status der Mittel zum temporären Greifen und Freigeben der Artikel entweder eine gleichsinnige, wahlweise eine synchrone Drehung mit der ersten Welle oder eine Ausgleichs- oder Gegendrehbewegung zu dieser ausführt.

Auf diese Weise kann sichergestellt werden, dass je nach Bedarf eine Drehung der ersten Welle, durch die der Manipulator gedreht wird, zur Aufrechterhaltung der Betätigung oder Freigabe der Mittel zum temporären Greifen und Freigeben der Artikel eine Ausgleichs- oder Gegendrehbewegung der zweiten Welle bedingt. Ebenso ist es dadurch ermöglicht, dass eine Drehung der ersten Welle, durch die der Manipulator gedreht wird, zur Änderung eines Betätigungs- oder Freigabestatus der Mittel zum temporären Greifen und Freigeben der Artikel eine gleichsinnige oder synchrone Drehbewegung der zweiten Welle bedingt.

Der Manipulator kann durch eine Rotationsbewegung der ersten Welle vorzugsweise um bis zu 360°, bevorzugt jedoch auch um mehr als 360° gedreht werden. Die als zweite Welle ausgebildete Betätigungseinrichtung kann insbesondere eine zur Linearführung ungefähr konzentrische Orientierung besitzen, wobei diese bei einer Positionierung des Manipulators über einen oder mehrere der wenigstens drei Stellarme durchgehend beibehalten wird. Durch die beschriebene Anordnung kann der Manipulator nahezu beliebig in jede gewünschte Drehrichtung rotieren, und zwar mit nahezu beliebigen bzw. unbeschränkten Drehwinkeln von Mehrfachen bzw. Vielfachen von 360°.

Außerdem kann eine Variante des erfindungsgemäßen Verfahrens vorsehen, dass die als zweite Welle ausgebildete Betätigungseinrichtung mit den ein oder mehreren Mitteln über ein Getriebe mit wenigstens einer Übersetzungsstufe in Verbindung steht, wobei das Getriebe ein Drehmoment der als zweiten Welle ausgebildeten Betätigungseinrichtung auf eine Stellbewegung der ein oder mehreren Mittel überträgt. Die die ein oder mehreren Mittel können bspw. wenigstens zwei gegenüberliegende Klemmbacken umfassen, die bei relativer Drehbewegung zwischen der als zweiten Welle ausgebildeten Betätigungseinrichtung und Linearführung relativ zueinander verfahren werden, wodurch Artikel, Stückgüter oder Gebinde gegriffen und verschoben, gedreht oder gehoben und versetzt werden können.

Wahlweise kann die wenigstens eine als zweite Welle ausgebildete Betätigungseinrichtung über einen separaten Aktor angesteuert werden, der drehfest auf der oberen Aufhängung aufsitzt.

Mit dieser Erfindungsvariante wird eine Möglichkeit geschaffen, bei Tripoden oder ähnlichen Robotern zusätzliche Antriebsmöglichkeiten in den sog. Tool-Center-Point bzw. in den Werkzeugträger einzubringen, ohne dass dies zu Nachteilen in der Betätigungslogik führen muss. Bei einer Ausführungsvariante, bei der zwischen dem Zentrum der Aufhängung und dem Tool-Center-Point zwei ineinander laufende Wellen angebracht sind, können zwei oder mehr Betätigungsmöglichkeiten bzw. Stellmöglichkeiten, bspw. in Form von Drehbewegungen, in den Tool-Center-Point übertragen werden. So kann zum Beispiel eine Drehbewegung einer Welle zum Schließen von Klemmbacken verwendet werden, während eine davon unabhängige Drehbewegung einer koaxialen Welle zum Drehen eines kompletten Greifers verwendet werden kann. Soll dabei jeweils nur eine Drehbewegung durchgeführt werden, so z.B. eine Drehung des Greifers, so öffnen oder schließen sich die Klemmbacken durch einen Stillstand der jeweils anderen Welle zur erstgenannten, da dadurch eine Relativbewegung zwischen den beiden Wellen erfolgt.

Gemäß einer Ausführungsvariante des erfindungsgemäßen Verfahrens muss die zweite Welle, welche zum Schließen und Öffnen des Greifers dient, bei einer Drehung des Greifers durch Betätigung der ersten Welle eine Ausgleichsbewegung durchführen. Diese Ausgleichsbewegung erfolgt als Relativbewegung gegenüber der ersten Welle im Gleichlauf, im Gegenlauf oder synchron. Die Richtung der Ausgleichsbewegung hat je nach gewünschter Funktion zu erfolgen. Werden z.B. die Greifer durch eine Drehbewegung entgegen dem Uhrzeigersinn geschlossen und der Greifer entgegen dem Uhrzeigersinn gedreht, so muss die zweite Welle bei der Drehung des Greifers ebenfalls eine Drehung entgegen dem Uhrzeigersinn durchführen, um zu verhindern, dass sich die Klemmbacken öffnen. Analog dazu ist eine Drehung im Uhrzeigersinn umzusetzen. Die erforderlichen Drehrichtungen der Wellen sind abhängig von der technischen Ausführung der Umsetzung der Drehbewegung der zweiten Welle in eine Linearbewegung der Klemmbacken. Insgesamt kann durch das Durchführen einer Ausgleichsbewegung die gewünschte Funktion des Werkzeuges, z.B. des Greifers, erreicht und gewährleistet werden.

Bei bevorzugten Ausführungsformen können die Stückgüter oder Artikel während ihrer Handhabung auf einer Horizontalfördereinrichtung transportiert werden und hierbei vom Manipulator gegriffen werden. Nach dem Greifen kann der Manipulator ein Drehen und/oder einen seitlichen Versatz schräg zur Transportrichtung der Horizontalfördereinrichtung und/oder eine Verzögerung und/oder Beschleunigung der jeweiligen gegriffenen Artikel gegenüber einer Transportgeschwindigkeit der Horizontalfördereinrichtung bewirken.

Jedem der wenigsten drei Stellarme der Vorrichtung kann zum Zwecke seines jeweiligen Antriebs ein eigener Aktor zugeordnet sein, der bevorzugt als Elektromotor ausgebildet ist und eine drehende Bewegung der Stellarme bewirkt. Die Stellarme können direkt an ihren jeweils zugeordneten Aktor angeflanscht sein. Die Aktoren können von der oberen Aufhängung getragen werden. Insbesondere kann es sein, dass die Aktoren hierbei hängend an der oberen Aufhängung angeordnet sind. Die Drehachsen der wenigstens drei Stellarme können parallel zueinander verlaufen. Die Aktoren der wenigsten drei Stellarme können mit einer Steuerungseinheit in Verbindung stehen, welche eine Bewegung eines oder mehrerer der wenigstens drei Stellarme zur bestimmten Positionierung des nachfolgend noch näher beschriebenen Manipulators vorgibt.

Der zuvor bereits erwähnte Manipulator der erfindungsgemäßen Vorrichtung umfasst ein oder mehrere Mittel zum Greifen der Artikel und ist mit den wenigstens drei Stellarmen mechanisch gekoppelt. Hierbei kann sinnvollerweise den wenigstens drei Stellarmen und dem Manipulator jeweils wenigstens ein Gelenk zwischengeordnet sein. So kann durch eine Bewegung eines oder mehrerer der wenigstens drei Stellarme eine Position des Manipulators vorgegeben werden. In besonders bevorzugten Ausführungsformen sind die wenigstens drei Stellarme mit einem Tragring gelenkig verbunden, welcher um die Linearführung sowie eine als Welle ausgebildete Betätigungseinrichtung geführt ist und mit dem Manipulator mechanisch gekoppelt in Verbindung steht. Die mechanische Koppelung zwischen dem Tragring und dem Manipulator kann eine relative Verdrehung des Manipulators gegenüber dem Tragring erlauben.

Auch kann eine Ausführungsvariante der erfindungsgemäßen Vorrichtung eine Linearführung umfassen, die mit dem Manipulator und der Aufhängung über jeweils ein kardanisch wirkendes Gelenk in Verbindung steht. Die Position der Linearführung kann in besonders bevorzugten Ausführungsformen derart gewählt sein, dass sich die Linearführung zwischen sämtlichen der wenigstens drei Stellarme befindet bzw. dass sämtliche der wenigstens drei Stellarme um die Linearführung angeordnet sind. Das jeweilige kardanisch wirkende Gelenk kann in einfachen Ausführungsformen als Kardangelenk ausgebildet sein. Der Begriff ist jedoch breit zu verstehen, so dass beispielsweise auch Kugelgelenke und/oder weitere kardanisch wirkende Gelenke im Rahmen denkbarer Ausführungsformen der erfindungsgemäßen Vorrichtung vorgesehen sein können.

Zudem ist mindestens eine Betätigungseinrichtung als Bestandteil der Vorrichtung vorgesehen. Über diese mindestens eine Betätigungseinrichtung können die ein oder mehreren Mittel zum temporären Greifen und Freigeben von Artikeln angesteuert werden. Die ein oder mehreren Mittel können hierzu mit der mindestens einen Betätigungseinrichtung in mechanischem Eingriff stehen. Normalerweise ist die mindestens eine Betätigungseinrichtung als Welle ausgebildet, welche die Linearführung durchsetzt und für die Ansteuerung der ein oder mehreren Mittel relativ zur Linearführung gedreht werden kann. In besonders bevorzugten Ausführungsformen kann die als Welle ausgebildete mindestens eine Betätigungseinrichtung die Linearführung vollständig durchsetzen. Zur drehenden Bewegung der als Welle ausgebildeten mindestens einen Betätigungseinrichtung kann der als Welle ausgebildeten mindestens einen Betätigungseinrichtung ein eigener Aktor zugeordnet sein, welcher ggf. mit der vorherig bereits erwähnten Steuerungseinheit in Verbindung steht. Durch eine solche Anordnung der als Welle ausgebildeten Betätigungseinrichtung und eine Ansteuerung der ein oder mehreren Mittel über eine Drehbewegung der Welle relativ zur Linearführung besteht die Möglichkeit, auf umständliche Leitungsverbindungen im Bereich des Manipulators zu verzichten.

Weiterhin ist es sinnvoll, die Linearführung und die als Welle ausgebildete Betätigungseinrichtung konzentrisch zueinander anzuordnen. Die konzentrische Anordnung zwischen der wenigstens einen als Welle ausgebildeten Betätigungseinrichtung und der Linearführung kann auch bei Positionierung des Manipulators bzw. bei Bewegung der wenigsten drei Stellarme durchgehend beibehalten werden.

Wahlweise kann die Linearführung wenigstens zwei teleskopierbare bzw. teleskopierbar miteinander verbundene Gehäuseteile umfassen, wobei diese wenigstens zwei teleskopierbar miteinander verbundenen Gehäuseteile von der mindestens einen als Welle ausgebildeten Betätigungseinrichtung durchsetzt werden. Für den angesprochenen Fachmann ist klar, dass in denkbaren weiteren Ausführungsformen die Linearführung auch aus drei, vier oder mehr als vier teleskopierbaren bzw. teleskopierbar miteinander in Verbindung stehenden Gehäuseteilen gebildet sein kann. Insbesondere können die wenigstens zwei teleskopierbaren Gehäuseteile jeweils zumindest abschnittsweise eine hohlzylindrische Formgebung besitzen.

Wie bereits erwähnt, kann der als Welle ausgebildeten Betätigungseinrichtung wahlweise ein eigener Aktor zugeordnet sein, über welchen die Welle angesteuert bzw. gedreht werden kann. Denkbar ist hierbei, dass der eigene Aktor an und/oder im Bereich der oberen Aufhängung positioniert ist. Beispielsweise kann eine Drehachse der Welle durch den eigenen Aktor und/oder durch einen Schwerpunkt des Aktors verlaufen. Der Aktor kann somit ggf. über ein zwischengeordnetes kardanisch wirkendes Gelenk an die mindestens eine als Welle ausgebildete Betätigungseinrichtung angeflanscht sein. Insbesondere kann der Aktor drehfest mit der oberen Aufhängung in Verbindung stehen.

Bei weiteren Ausführungsformen kann die Linearführung als weitere Welle ausgebildet sein, die mit dem Manipulator drehfest in Verbindung steht, so dass durch eine Rotationsbewegung der weiteren Welle der Manipulator gedreht werden kann. Insbesondere können hierbei die wenigstens eine als Welle ausgebildete Betätigungseinrichtung sowie die als weitere Welle ausgebildete Linearführung unabhängig voneinander gedreht werden. Weiter können die wenigstens eine als Welle ausgebildete Betätigungseinrichtung sowie die als weitere Welle ausgebildete Linearführung in etwa ineinander fallende oder nahe beieinander liegende Drehachsen besitzen.

Zudem können die ein oder mehreren Mittel wenigstens zwei gegenüberliegende Klemmbacken umfassen, deren relativer Abstand zum Greifen und Freigeben von Artikeln über die mindestens eine als Welle ausgebildete Betätigungseinrichtung vorgegeben werden kann. Beispielsweise kann es sein, dass lediglich eine der gegenüberliegenden Klemmbacken über die wenigstens eine als Welle ausgebildete Betätigungseinrichtung aktiv bewegt wird, wohingegen keine aktive Bewegung der jeweiligen gegenüberliegenden Klemmbacke über die wenigstens eine Betätigungseinrichtung bewirkt wird. In denkbaren weiteren Ausführungsformen kann die Vorrichtung ein oder mehrere Übertragungselemente besitzen, welche eine rotierende Bewegung der wenigstens einen als Welle ausgebildeten Betätigungseinrichtung in eine aktive Verstellung sämtlicher der wenigstens zwei gegenüberliegenden Klemmbacken überführen. Die jeweiligen Stückgüter oder Artikel können mittels der Klemmbacken erfasst, gegriffen und nachfolgend durch eine Bewegung des Manipulators versetzt und positioniert und/oder ausgerichtet werden. Wie an anderen Stellen mehrfach erwähnt, werden hierbei die Stückgüter in aller Regel auf der Horizontalfördereinrichtung bzw. innerhalb des Erfassungsbereiches transportiert, durch die Vorrichtung bzw. den Manipulator erfasst und gegriffen und auf der Horizontalfördereinrichtung verschoben, versetzt, positioniert und/oder neu ausgerichtet. Wahlweise können die Stückgüter oder Artikel hierbei gegenüber einer Transportgeschwindigkeit der Horizontalfördereinrichtung verzögert oder beschleunigt und ggf. gedreht und/oder schräg zu einer Förderrichtung der Horizontalfördereinrichtung versetzt werden.

Weiter kann der als Welle ausgebildeten mindestens einen Betätigungseinrichtung und den ein oder mehreren Mitteln ein Getriebe mit wenigstens einer Übersetzungsstufe zwischengeordnet sein. Hierdurch kann die Ansteuerung der ein oder mehreren Mittel zum Greifen von Artikeln mit hoher Genauigkeit erfolgen, wobei das über die Welle zum Greifen von Artikeln aufzubringende Drehmoment gering gehalten werden kann.

Die erfindungsmäße Vorrichtung mit dem Deltakinematik-Roboter zur Steuerung, Bewegung und Handhabung des erwähnten Manipulators eignet sich für zahlreiche Ausführungsvarianten des erfindungsgemäßen Verfahrens zur Handhabung von Stückgütern, Artikeln, Gebinde oder dergleichen. Hierbei können Merkmale, welche vorhergehend zu diversen Ausführungsformen der erfindungsgemäßen Vorrichtung beschrieben wurden, bei denkbaren Ausführungsformen des erfindungsgemäßen Verfahrens vorgesehen sein. Auch können Merkmale, welche nachfolgend zu diversen Ausführungsformen des erfindungsgemäßen Verfahrens beschrieben werden, bei denkbaren Ausführungsformen der erfindungsgemäßen Vorrichtung vorgesehen sein.

Die nachfolgend beschriebenen Varianten des erfindungsgemäßen Verfahrens werden mit einer Vorrichtung umgesetzt, welche eine obere Aufhängung umfasst, an der wenigstens drei drehbar angetriebene Stellarme befestigt sind. Die wenigstens drei Stellarme bestehen jeweils aus wenigstens zwei relativ zueinander schwenkbaren Armabschnitten und können unabhängig voneinander betätigt bzw. unabhängig voneinander verstellt werden. Die jeweilige Verstellung kann über eine Steuerungseinheit vorgegeben werden. Weiter besitzt die Vorrichtung, die zur Umsetzung des erfindungsgemäßen Verfahrens geeignet ist, einen Manipulator, welcher ein oder mehrere Mittel zum Greifen der Artikel umfasst und mit den wenigstens drei Stellarmen mechanisch gekoppelt ist, so dass durch eine Bewegung eines oder mehrerer der wenigstens drei Stellarme eine Position des Manipulators vorgegeben werden kann. Auch kann diese Vorrichtung eine Linearführung umfassen, die mit dem Manipulator und der Aufhängung über jeweils ein kardanisch wirkendes Gelenk in Verbindung steht. Hinzu kommt mindestens eine als Welle ausgebildete Betätigungseinrichtung welche die Linearführung durchsetzt, insbesondere in ungefähr koaxialer Anordnung. Somit ist die als Welle ausgebildete Betätigungseinrichtung zumindest abschnittsweise in der Linearführung aufgenommen. Weiter können über die mindestens eine als Welle ausgebildete Betätigungseinrichtung die ein oder mehreren Mittel zum temporären Greifen und Freigeben von Artikeln angesteuert werden, wobei die als Welle ausgebildete Betätigungseinrichtung zur Ansteuerung der ein oder mehreren Mittel relativ zur Linearführung gedreht wird.

In besonders bevorzugten Ausführungsformen kann die Linearführung als weitere Welle ausgebildet sein, die mit dem Manipulator drehfest in Verbindung steht. Der Manipulator kann durch eine Rotationsbewegung der weiteren Welle gemeinsam mit der weiteren Welle gedreht werden. Bei einer Rotationsbewegung der weiteren Welle kann somit der Manipulator mit der Welle um den gleichen Drehwinkel gedreht werden.

Weiter kann es sein, dass der Manipulator durch eine Rotationsbewegung der weiteren Welle um 360° und/oder mehr als 360° gedreht wird. Sofern Artikel mittels des Manipulators um etwas mehr als 180° gedreht werden sollen, kann es sinnvoll sein, nach Freigabe der Artikel den Manipulator mit gleicher Drehrichtung um insgesamt 360° weiter zu drehen und hierbei in die ursprüngliche Drehposition zurückzuführen. Bei Ausführungsformen mit möglicher Drehung des Manipulators um 360° ist das Verfahren mit erhöhtem Durchsatz einer Handhabung von Artikeln durchführbar. Hierbei kann vorgesehen sein, dass im Rahmen des Verfahrens der Manipulator lediglich in einer Drehrichtung gedreht wird, während durchgehend kein Drehen mit umgekehrter Drehrichtung erfolgt.

Insbesondere kann die als Welle ausgebildete Betätigungseinrichtung eine zur Linearführung koaxiale Orientierung besitzen und diese bei einer Positionierung des Manipulators über einen oder mehrere der wenigstens drei Stellarme durchgehend beibehalten. Sofern die Linearführung als weitere Welle ausgebildet ist, können die weitere Welle und die als wenigstens eine Welle ausgebildete Betätigungseinrichtung ineinander fallende oder in etwa ineinander fallende Drehachsen besitzen.

Zudem kann vorgesehen sein, dass die als Welle ausgebildete Betätigungseinrichtung mit den ein oder mehreren Mitteln über ein Getriebe mit wenigstens einer Übersetzungsstufe in Verbindung steht, wobei das Getriebe ein Drehmoment der als Welle ausgebildeten Betätigungseinrichtung auf eine Stellbewegung der ein oder mehreren Mittel überträgt.

In besonders bevorzugten Ausführungsformen können die ein oder mehreren Mittel wenigstens zwei sich gegenüberliegende Klemmbacken umfassen, die bei relativer Drehbewegung zwischen Welle und Linearführung relativ zueinander verfahren bzw. bewegt werden. Jede der Klemmbacken kann über biegeweiche Kontaktelemente verfügen, die bei Greifen von Artikeln mit den jeweiligen Artikeln kraftbeaufschlagt in Anlage gesetzt werden.

Auch kann es sein, dass die wenigstens eine als Welle ausgebildete Betätigungseinrichtung über einen Aktor angesteuert wird, der drehfest auf der oberen Aufhängung aufsitzt.

Wie bei allen Ausführungsformen können die Stückgüter während ihrer Handhabung auf einer Horizontalfördereinrichtung transportiert werden und hierbei vom Manipulator gegriffen werden. Nach Greifen kann der Manipulator ein Drehen und/oder einen seitlichen Versatz schräg zur Transportrichtung der Horizontalfördereinrichtung und/oder eine Verzögerung und/oder Beschleunigung der jeweiligen gegriffenen Artikel gegenüber einer Transportgeschwindigkeit der Horizontalfördereinrichtung bewirken.

Während das mindestens eine Stückgut erfasst und in eine neue Zielposition und/oder Zielausrichtung überführt wird, ist gemäß einer bevorzugten Ausführungsform vorgesehen, dass die jeweils nicht erfassten Stückgüter der geschlossenen Formation unterbrechungsfrei und/oder mit unveränderter Transportgeschwindigkeit weitertransportiert werden. Das gilt typischerweise zumindest solange, bis das erfasste Stückgut in seine Zielposition und/oder Zielausrichtung gebracht wurde, so dass das nächst folgende Stückgut vom zwischenzeitlich zur Formation zurückbewegten Manipulator erfasst und in seine jeweilige Zielposition und/oder Zielausrichtung gebracht werden kann. Dieser Vorgang wiederholt sich so lange, bis die verschiedenen Zielpositionen und/oder Zielausrichtungen der nacheinander positionierten und/oder ausgerichteten Stückgüter eine definierte bzw. gewünschte Anordnung bzw. Gruppierung bilden. Diese Anordnung bzw. Gruppierung kann insbesondere ein Lagenbild darstellen, das es bspw. ermöglicht, die solchermaßen zusammengestellten Stückgüter in Lagen zu stapeln und/oder zu palettieren.

Gemäß einer Ausführungsform der vorliegenden Erfindung wird wenigstens ein zuvorderst transportiertes Stückgut aus der geschlossenen Formation klemmend erfasst, von der geschlossenen Formation räumlich abgetrennt und in eine definierte relative Zielposition und/oder Zielausrichtung gegenüber nachfolgenden Stückgütern der Formation gebracht. Vorzugsweise bzw. häufig werden auch zwei oder mehr als zwei hintereinander transportierte Stückgüter gleichzeitig erfasst und entsprechend manipuliert bzw. in die jeweiligen Zielpositionen gebracht. Insbesondere ist der Manipulator der oben beschriebenen Vorrichtung entsprechend zum klemmenden Entgegennehmen sowie zum Abtrennen und Überführen in eine Zielposition und/oder Zielausrichtung einer bestimmten Anzahl bzw. einer bestimmten Maximalanzahl jeweiliger in der geschlossenen Formation zuvorderst positionierter bzw. positionierbarer Stückgüter ausgebildet.

Nachdem das erfasste Stückgut bzw. die erfassten Stückgüter seine/ihre Zielpositionen und/oder Zielausrichtungen erreicht und/oder eingenommen haben, werden sie vorzugsweise ohne Unterbrechung und/oder ohne Änderung ihrer Geschwindigkeit und/oder ohne Änderung der Transportrichtung weiter transportiert und beispielsweise einer Verpackungsvorrichtung, einer Palettierstation und/oder anderen weiterverarbeitenden Vorrichtungen zugeführt.

Bei dem jeweiligen Manipulationsschritt zum Erreichen der Zielposition und/oder Zielausrichtung wird dem wenigstens einem erfassten Stückgut gegenüber einer Transportgeschwindigkeit der geschlossenen Formation wenigstens eine weitere Geschwindigkeits- und/oder Richtungskomponente aufgeprägt. Dies erfolgt insbesondere im Erfassungsbereich des Manipulators der Vorrichtung. Die Änderung der Geschwindigkeit und/oder der Richtung des mindestens einen erfassten Stückgutes wird diesem insbesondere durch den Manipulator aufgeprägt. Dieser kann zusätzlich zum Drehen des mindestens einen erfassten Stückgutes ausgebildet sein. Beispielsweise befindet sich der oben beschriebene Greiferkopf an einem Drehgelenk und kann durch Rotation um einen definierten Winkel von beispielsweise 90° die Ausrichtung der zwischen den Klemmbacken erfassten Stückgüter verändern.

Gemäß einer alternativen Ausführungsform der Erfindung werden die erfassten Stückgüter, nachdem sie ihre Zielposition und/oder Zielausrichtung erreicht und/oder eingenommen haben, vorzugsweise ohne Unterbrechung, jedoch ggf. mit veränderter Geschwindigkeit und/oder veränderter Transportrichtung weiter transportiert und beispielsweise einer Verpackungsvorrichtung, einer Palettierstation oder anderen weiterverarbeitenden Vorrichtungen zugeführt.

Dieser Weitertransport kann beispielsweise über im Erfassungsbereich des Manipulators und der relativen Zielposition zugeordnete geeignete Mittel erfolgen. So kann vorgesehen sein, dass im Erfassungsbereich des Manipulators an der Zielposition ein zusätzliches Fördermittel, beispielsweise ein weiteres Förderband angeordnet ist, das sich mit einer anderen Geschwindigkeit als die Transporteinrichtung für die in Formation ankommenden Stückgüter bewegt. Weiterhin oder alternativ kann vorgesehen sein, dass sich ein solches weiteres Fördermittel in einer Bewegungsrichtung bewegt, die in einem Winkel zur Transportrichtung der Transporteinrichtung ausgerichtet ist.

Je nach der mittels der beschriebenen Manipulationsschritte erzeugten Anordnung kann es sich dabei auch um eine Vorgruppierung gehandelt haben, die eine weitere Zusammenschiebung der Stückgüter erfordert, um eine palettierfähige Lagenanordnung zu erhalten. Durch dieses Zusammenschieben werden die Lücken aufgehoben, die bei einer solchen Vorgruppierung ggf. noch zwischen einzelnen, mehreren oder auch allen Stückgütern untereinander bestehen können. Da diese Lücken normalerweise einer stabilen Palettierung hinderlich sind, werden sie nach der Vorgruppierung noch entfernt/aufgehoben.

Gemäß einer Ausführungsform der Erfindung werden die in einer Reihe ohne Abstände oder ggf. - zumindest an einigen Stellen - mit minimalen und/oder variablen Abständen unmittelbar aufeinanderfolgenden Stückgüter als geschlossene Formation mittels wenigstens einer Transporteinrichtung in einen Erfassungsbereich mindestens eines Manipulators transportiert, der zur Erfassung jeweils wenigstens eines Stückgutes, zur räumlichen Abtrennung des wenigstens einen Stückgutes und zu dessen Überführung in die definierte relative Zielposition und/oder Zielausrichtung gegenüber den nachfolgenden Stückgütern der Formation vorbereitet und ausgestattet ist, wobei sich der mindestens eine Manipulator oder ein zur Entgegennahme bzw. Erfassung von Stückgütern ausgebildeter Teil des mindestens einen Manipulators zumindest beim Erfassen des wenigstens einen Stückgutes und/oder bei dessen Freigabe in der Zielposition und/oder Zielausrichtung mit einer Geschwindigkeit bewegt, die annähernd bzw. exakt der Transportgeschwindigkeit entspricht, mit der sich die geschlossene Formation bewegt. Insbesondere in dem dazwischen liegenden Zeitraum kann der Manipulator eine geänderte Geschwindigkeit und/oder eine andere Bewegungsrichtung ausführen. Mit dem Begriff des dazwischen liegenden Zeitraums kann sowohl die Positionierungsfahrt auf dem Weg zur Zielposition und/oder Zielausrichtung als auch eine Rückbewegung des vom Stückgut bzw. von den Stückgütern befreiten Manipulators gemeint sein, nachdem dieser die Stückgüter bzw. das wenigstens eine Stückgut an der Zielposition abgesetzt hat und sich bereit macht, das nächste Stückgut bzw. die nächsten Stückgüter von der geschlossenen Formation aufzunehmen. Bei dieser Rückbewegung kann der Manipulator im Rahmen seiner Beweglichkeit nahezu beliebige Wege und/oder Geschwindigkeiten nehmen, solange sichergestellt ist, dass er nicht mit bereits positionierten bzw. ausgerichteten Stückgütern und/oder mit Stückgütern der geschlossenen Formation kollidiert.

Bei der Bewegungsfahrt von der Aufnahme wenigstens eines Stückguts von der Formation zur Zielposition und/oder Zielausrichtung kann die Geschwindigkeit des Manipulators in diesem Zeitfenster bspw. gegenüber der Transportgeschwindigkeit der Formation erhöht sein, während die Bewegung des Manipulators in einer Bewegungsrichtung erfolgt, die in einer Flucht zur Transportrichtung der Formation ausgebildet ist. Das mindestens eine vom Manipulator erfasste Stückgut wird dann in seiner Zielposition in Flucht zur Formation angeordnet und weist einen Abstand zu derselben auf.

Ist die Geschwindigkeit des Manipulators bzw. des die Stückgüter erfassenden beweglichen Teil des Manipulators gegenüber der Transportgeschwindigkeit der Formation erhöht und weist die Bewegungsrichtung eine zusätzliche Komponente orthogonal oder schräg zur Transportrichtung der Formation auf, dann wird das mindestens eine vom Manipulator bzw. von dem die Stückgüter erfassenden beweglichen Teil des Manipulators erfasste Stückgut in eine Zielposition im Erfassungsbereich des Manipulators bewegt, die sich beabstandet und seitlich verschoben zur Formation befindet.

Entspricht die Geschwindigkeit des Manipulators bzw. des die Stückgüter erfassenden beweglichen Teil des Manipulators der Transportgeschwindigkeit der Formation und weist die Bewegungsrichtung eine zusätzliche Komponente orthogonal oder schräg zur Transportrichtung der Formation auf, dann wird das mindestens eine vom Manipulator bzw. von dem die Stückgüter erfassenden beweglichen Teil des Manipulators erfasste Stückgut in eine Zielposition im Erfassungsbereich des Manipulators bzw. des beweglichen Manipulatorteils bewegt, in der sich das Stückgut seitlich verschoben zur Formation befindet, wobei in Transportrichtung gesehen kein oder nur ein geringer Relativabstand zur Formation besteht bzw. entstanden ist.

Vorzugsweise bzw. wahlweise wird bzw. werden in mehreren zeitlich aufeinander folgenden Manipulationsschritten jeweils wenigstens ein transportiertes Stückgut aus der geschlossenen Formation klemmend erfasst, von der geschlossenen Formation räumlich abgetrennt und in eine jeweilige definierte relative Zielposition und/oder Zielausrichtung gegenüber den nachfolgenden Stückgütern der Formation gebracht. Gemäß einer Ausführungsform der Erfindung wird dabei aus mehreren nacheinander erfassten Stückgütern bzw. Stückgütergruppen mindestens eine zweite Reihe an Stückgütern ausgebildet, die sich anschließend beabstandet zur Formation vorzugsweise mit derselben Geschwindigkeit wie die Formation weiterbewegt. Die Beabstandung kann beispielsweise als Abstand zwischen zwei fluchtenden Reihen an Stückgütern ausgebildet sein. D.h., die vom Manipulator erfassten Stückgüter werden durch diesen kurzzeitig beschleunigt und insbesondere mit gegenüber der Transportgeschwindigkeit der Formation erhöhter Geschwindigkeit in Transportrichtung bewegt, so dass sich zwischen den durch den Manipulator bewegten Stückgütern und den Stückgütern der Formation eine Lücke ausbildet.

Gemäß einer weiteren Ausführungsform der Erfindung wird dabei aus mehreren nacheinander erfassten Stückgütern bzw. Stückgütergruppen mindestens eine zweite Reihe an Stückgütern ausgebildet, die sich anschließend seitlich beabstandet zur Formation vorzugsweise mit derselben Geschwindigkeit wie die Formation weiterbewegt.

Alternativ werden in mehreren zeitlich aufeinander folgenden Manipulationsschritten aus der Formation abgetrennte Stückgüter beziehungsweise Stückgutgruppen derartig in jeweilig definierte relative Zielpositionen gebracht, dass daraus eine Gruppierung für eine palettierfähige Lage oder Teillage gebildet wird.

Gemäß einer weiteren Ausführungsform der Erfindung ist vorgesehen, dass die Stückgüter mittels wenigstens einer vorzugsweise unterbrechungsfrei und/oder mit kontinuierlicher Geschwindigkeit angetriebenen Horizontalfördereinrichtung der Vorrichtung bzw. Handhabungsvorrichtung in den Erfassungsbereich des Manipulators der Vorrichtung und/oder in die Zielposition und/oder Zielausrichtung innerhalb des Erfassungsbereichs des Manipulators gelangen. Dieser Horizontalfördereinrichtung, die sich normalerweise zumindest über einen kurzen Wegabschnitt vor dem Erfassungsbereich und/oder zumindest über einen kurzen Wegabschnitt hinter dem Erfassungsbereich des Manipulators erstreckt, ist typischerweise mindestens eine Transportvorrichtung vorgeordnet.

Insbesondere werden die in mindestens einer Reihe bzw. als Formation ankommende Stückgüter mittels der erwähnten, vorzugsweise unterbrechungsfrei und/oder mit kontinuierlicher Transportgeschwindigkeit angetriebenen mindestens einen Transporteinrichtung zum Erfassungsbereich des Manipulators und/oder zur Horizontalfördereinrichtung befördert und/oder an diese übergeben. Wahlweise können auch zwei oder mehr solche Transporteinrichtungen, die insbesondere parallel angeordnet sein können, eingesetzt werden.

Vorzugsweise ist die Horizontalfördereinrichtung dem Erfassungsbereich des mindestens einen Manipulators zugeordnet und/oder korrespondiert zumindest weitgehend mit dem Erfassungsbereich des Manipulators. Gemäß einer Ausführungsform der Erfindung erzeugt die Horizontalfördereinrichtung einen kontinuierlichen Vorschub in Transportrichtung der Formation. Weiterhin ist vorgesehen, dass sich die Horizontalfördereinrichtung mit konstanter Geschwindigkeit bewegt bzw. läuft, wobei die Geschwindigkeit der Horizontalfördereinrichtung annähernd oder exakt mit der Transportgeschwindigkeit der mindestens einen Transporteinrichtung und somit mit der Transportgeschwindigkeit der in der geschlossenen Formation befindlichen Stückgüter übereinstimmen kann. Bei der Horizontalfördereinrichtung kann es sich beispielsweise analog zur Transporteinrichtung um einen Endlosförderer, eine Fördermatte o.ä. handeln, auf deren Oberseite die Stückgüter transportiert werden. Wie erst nachfolgend aus den Figuren deutlich werden wird, kann es sich bei der Horizontalfördereinrichtung wahlweise auch um einen sog. Transporttisch, Gleittisch oder Gruppiertisch o. dgl. handeln, der für die weitgehend oder annähernd konstante Bewegung der darauf befindlichen Stückgüter und/oder der darauf mittels des Manipulators in die jeweilige Zielposition verschobenen und/oder in die jeweilige Zielausrichtung gedrehten Stückgüter sorgen kann. Alternativ kann vorgesehen sein, dass die Horizontalfördereinrichtung beispielsweise aus mehreren nebeneinander angeordneten Förderbändern besteht, die sich alle mit gleicher Geschwindigkeit bewegen.

Auch müssen Transporteinrichtung und Horizontalfördereinrichtung nicht zwingend durch zwei voneinander unabhängig angetriebene Förderer gebildet werden. Stattdessen kann wahlweise auch vorgesehen sein, dass es sich hierbei nur um räumlich voneinander getrennte und in Förderrichtung aneinander anschließende Bereiche eines einzigen Förderers handelt. Ein erster Transportbereich dient in diesem Fall insbesondere dem Heranführen der zumindest weitgehend abstandslos in mindestens einer Reihe als Formation angeordneten Stückgüter. Ein zweiter Manipulationsbereich bzw. Horizontalförderbereich dient dann insbesondere der Manipulation von mindestens einem Stückgut der Formation bzw. einer Gruppe von benachbarten Stückgütern der Formation durch den Manipulator. Wichtig ist in diesem Zusammenhang, dass sich Stückgüter der Formation, die sich zwar im Erfassungsbereich des Manipulators befinden, aber durch diesen (noch) nicht erfasst und bearbeitet werden, annähernd kontinuierlich und vorzugsweise mit gleichbleibender Geschwindigkeit weiterbewegen.

Im Zusammenhang der vorliegenden Beschreibung ist die Horizontalfördereinrichtung oftmals in Wechselwirkung und/oder im räumlichen oder funktionellen Zusammenhang mit den jeweiligen Zielpositionen für die Stückgüter definiert. Aus diesem Grund ist auch oftmals, im Interesse einer Vermeidung von Unklarheiten, in der Beschreibung die Zielposition exakt definiert und ihr Zusammenhang mit der Horizontalfördereinrichtung beschrieben. Auf diese Weise wird an einigen Stellen klargestellt, dass die Zielpositionen und/oder -ausrichtungen normalerweise mittels der Stellbewegungen des Manipulators erreicht werden. Dies kann entweder auf direktem Wege erfolgen. Die endgültigen Zielpositionen können jedoch auch indirekt erreicht werden, indem bspw.

vom Manipulator erfasste Stückgüter als Schieber für bereits vorpositionierte Stückgüter eingesetzt werden. Auch hierbei wirkt der Manipulator als Positionierungswerkzeug, jedoch unter Zwischenschaltung von erfassten und anschließend ebenfalls zu positionierenden Stückgütern.

Gemäß einer Ausführungsform der Erfindung bewegt sich der mindestens eine Manipulator oder ein zur Überführung des mindestens einen Stückgutes in die Zielposition und/oder Zielausrichtung vorgesehener Teil des mindestens einen Manipulators mit annähernd gleicher bzw. mit gleicher Geschwindigkeit gegenüber der wenigstens einen vorzugsweise unterbrechungsfrei angetriebenen Horizontalfördereinrichtung bei vollständiger Überführung des mindestens einen Stückgutes in die Zielposition und/oder Zielausrichtung. Dies gilt vorzugsweise zumindest während der Erfassung des Stückgutes bzw. der Stückgüter und unmittelbar vor und nach diesem Zeitpunkt, was auch als "Aufsynchronisieren" des Manipulators auf die sich bewegenden Stückgüter der Formation bezeichnet werden kann.

In diesem Fall sowie generell im Zusammenhang der vorliegenden Erfindung kann es sich bei dem zur Überführung des mindestens einen Stückgutes in die Zielposition und/oder Zielausrichtung vorgesehenen Teil des Manipulators beispielsweise um einen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. gestellfest gelagert sind. Eine solche - auch als Parallelkinematik- Anordnung bekannte - Manipulatoraufhängung bzw. -anordnung ermöglicht die gewünschte Beweglichkeit des Kopfes (auch: des Manipulators), der die Stückgüter in der gewünschten Weise erfassen, verschieben, positionieren, platzieren, drehen etc. kann, um die Zielpositionen und/oder Zielausrichtungen für die Stückgüter anfahren zu können.

Ebenso denkbar sind jedoch auch andere geeignete Manipulatorkonfigurationen, bspw. solche mit Portalroboter-Führungen oder ähnlichem. Diese anderen Manipulatorkonfigurationen können sich wahlweise auf einzelne, mehrere oder alle Ausführungsvarianten beziehen, die im Zusammenhang der vorliegenden Erfindung erwähnt sind.

Da sich die Horizontalfördereinrichtung vorzugsweise mit derselben Geschwindigkeit wie die Transporteinrichtung bewegt, entspricht die Geschwindigkeit des Manipulators bzw. des beweglichen Teil des Manipulators, der die jeweiligen Stückgüter erfasst und positioniert zumindest zum Zeitpunkt der Aufnahme, Übernahme bzw. des Erfassens des jeweiligen Stückgutes oder der mehreren Stückgüter der Transportgeschwindigkeit der Formation und/oder der Geschwindigkeit der Horizontalfördereinrichtung bzw. der Transportgeschwindigkeit der Transporteinrichtung. In diesem Fall prägt der Manipulator bzw. der die Stückgüter erfassende bewegliche Teil des Manipulators den erfassten Stückgütern insbesondere nur eine zusätzliche Bewegungskomponente senkrecht oder schräg zur Transportrichtung auf, wodurch die erfassten Stückgüter seitlich zur Formation bzw. in seitliche Richtung gegenüber der Längserstreckungsrichtung der Formation verschoben werden, wobei in Transportrichtung typischerweise kein oder nur ein geringer Relativabstand zur Formation ausgebildet wird. Wenn im vorliegenden Zusammenhang von einer senkrechten Bewegungskomponente die Rede ist, so bezieht sich dies auf die sich aktuell in Transportrichtung bewegenden Teile, weshalb hier von einer vektoriellen Geschwindigkeitskomponente senkrecht zur Hauptbewegungsrichtung der Formation zu sprechen ist.

Gemäß einer Ausführungsform schließt sich die unterbrechungsfrei angetriebene Horizontalfördereinrichtung in Transportrichtung unmittelbar an die wenigstens eine Transporteinrichtung an, und die Geschwindigkeiten der wenigstens einen vorzugsweise unterbrechungsfrei angetriebenen Horizontalfördereinrichtung und die Transportgeschwindigkeit der wenigstens einen Transporteinrichtung stimmen näherungsweise oder exakt überein. Die mindestens eine Transporteinrichtung kann beispielsweise durch mindestens ein Zuförderband oder eine Mehrzahl von parallelen Zuförderbändern gebildet sein, die vorzugsweise unmittelbar an die Horizontalfördereinrichtung münden und insbesondere den oben genannten ersten Transportbereich bilden. In dem ersten Transportbereich erfolgt erfindungsgemäß - und im Gegensatz zum bekannten Stand der Technik - normalerweise keine Vorgruppierung der Stückgüter, sondern diese erfolgt gleichzeitig mit der Positionierung durch Erfassen, Verschieben und/oder Drehen, Erreichen der Zielpositionen und/oder Zielausrichtungen und anschließendes Lösen des Manipulators von den jeweils positionierten und/oder ausgerichteten Stückgütern. Aus der gesamten Beschreibung wird somit deutlich, dass eine Vorgruppierung im herkömmlichen Sinne, die sich von dem Vorgang der Lagenbildung deutlich erkennen und/oder abgrenzen ließe, gar nicht stattfindet, sondern im Bewegungsverlauf zwischen der Abtrennung der jeweiligen Stückgüter von der Formation und der Erreichung der Zielpositionen aufgelöst ist.

Insbesondere ist bei der verwendeten Vorrichtung eine räumliche Trennung zwischen dem ersten Transportbereich und dem sogenannten zweiten Manipulationsbereich vorgesehen, wobei diese Bereiche jedoch vorzugsweise räumlich unmittelbar aneinandergrenzen und in Transportrichtung unmittelbar aufeinander folgen.

Der Manipulationsbereich entspricht dabei weitgehend dem Erfassungsbereich des Manipulators der Vorrichtung bzw. des mit den Stückgütern in Kontakt gebrachten bzw. unmittelbar wechselwirkenden Bestandteils des Manipulators. Verfahrensgemäß ist vorgesehen, dass die Stückgüter der Formation erst im Bereich der vorzugsweise unterbrechungsfrei und/oder mit kontinuierlicher Geschwindigkeit angetriebenen Horizontalfördereinrichtung, d.h. im zweiten Manipulationsbereich, in den Erfassungsbereich des Manipulators gelangen. Wie oben erwähnt, erfolgt die Gruppierung von Stückgütern der Formation allenfalls erst im Manipulationsbereich bzw. im Bereich der Horizontalfördereinrichtung bzw. im Erfassungsbereich des Manipulators, sofern nicht davon ausgegangen wird, dass die Vorgruppierung ein nicht separat erkennbarer Teil der Manipulationsvorgänge ist. Weiterhin kann innerhalb des Erfassungsbereichs des mindestens einen Manipulators jeweils in einem einzigen, insbesondere unterbrechungsfreien Manipulationsschritt jeweils mindestens ein durch den wenigstens einen Manipulator erfasstes Stückgut in die Zielposition und/oder Zielausrichtung überführt, geschoben und/oder gedreht werden.

Wie es zuvor und an mehreren anderen Stellen der vorliegenden Beschreibung bereits verschiedentlich betont wurde, werden die sog. Takte, d.h. die Lagen- und/oder Teillagenanordnungen der Stückgüter, wahlweise auch die hierzu vorbereitenden Anordnungen bzw. sog. Vorgruppierungen, bei der vorliegenden Erfindung erst im eigentlichen Manipulationsmodul gebildet, insbesondere durch das beginnende Abgreifen und anschließende Positionieren der Stückgüter innerhalb des Erfassungsbereichs des Manipulators. Diese Beschränkung der Manipulations-, Positionierungs- und/oder Ausrichtungsvorgänge, denen die Stückgüter unterzogen werden, auf den Erfassungsbereich bzw. auf den Bewegungsraum des Manipulators wird zusätzlich dadurch unterstützt, dass sich die vorzugsweise unterbrechungsfrei angetriebene Horizontalfördereinrichtung in Transportrichtung unmittelbar an die wenigstens eine Transporteinrichtung anschließt, und dass die Geschwindigkeiten der wenigstens einen vorzugsweise unterbrechungsfrei angetriebenen Horizontalfördereinrichtung und die Transportgeschwindigkeit der wenigstens einen Transporteinrichtung näherungsweise oder exakt überein stimmen. Wie es weiter oben bereits erwähnt wurde, kann die mindestens eine Transporteinrichtung gemäß einer Ausführungsvariante der erfindungsgemäßen Vorrichtung bzw. des erfindungsgemäßen Verfahrens durch ein bspw. endlos umlaufendes Zuförderband oder eine Mehrzahl von solchen parallelen Zuförderbändern gebildet sein, die räumlich und/oder funktionell insbesondere unmittelbar an die Horizontalfördereinrichtung münden und somit den oben genannten ersten Transportbereich bilden. Dieser erste Transportbereich kann sich in wichtigen Aspekten vom bekannten Stand der Technik unterscheiden, da hier erfindungsgemäß noch keine Vorgruppierung bzw. Taktbildung der Stückgüter stattfindet. Vielmehr ist bei der vorliegenden Erfindung vorgesehen, dass die Vorgruppierung bzw. Taktbildung im Wesentlichen gleichzeitig mit der Positionierung durch Erfassen, Verschieben und/oder Drehen, Erreichen der Zielpositionen und/oder Zielausrichtungen und anschließendes Lösen des Manipulators von den jeweils positionierten und/oder ausgerichteten Stückgütern innerhalb des sogenannten Gruppiermoduls, das insbesondere durch die Horizontalfördereinrichtung und den oberhalb der Horizontalfördereinrichtung angeordnete mindestens eine Manipulator gebildet wird, erfolgt. Damit wird deutlich, dass eine Vorgruppierung bzw. Taktbildung im herkömmlichen Sinne, die sich von dem Vorgang der Lagenbildung deutlich erkennbar abgrenzen ließe, bei der vorliegenden Erfindung nicht in identifizierbarer Weise stattfindet, sondern dass eine Vorgruppierung allenfalls im Bewegungsverlauf zwischen der Abtrennung der jeweiligen Stückgüter von der Formation und der Erreichung der jeweiligen Zielpositionen aufgelöst ist.

Die erfindungsgemäß bevorzugte räumliche Trennung zwischen dem ersten Transportbereich und dem sogenannten zweiten Manipulationsbereich, wobei diese Bereiche jedoch vorzugsweise räumlich unmittelbar aneinandergrenzen und in Transportrichtung unmittelbar aufeinander folgen, ermöglichen eine schnellere Manipulation und Positionierung der Stückgüter aus geschlossenen Formationen, ohne dass dies mit Nachteilen hinsichtlich einer Positionierungsgenauigkeit verbunden wäre. Dies wird im Wesentlichen dadurch ermöglicht bzw. unterstützt, indem der Manipulationsbereich weitgehend mit dem Erfassungsbereich des Manipulators der Vorrichtung bzw. des mit den Stückgütern in Kontakt gebrachten bzw. unmittelbar wechselwirkenden Bestandteils des Manipulators übereinstimmt bzw. Teil dieses Bereichs ist. Wie ebenfalls bereits erwähnt, kann das Verfahren vorsehen, dass die Stückgüter der Formation erst im Bereich der vorzugsweise unterbrechungsfrei und/oder mit kontinuierlicher Geschwindigkeit angetriebenen Horizontalfördereinrichtung, d.h. im zweiten Manipulationsbereich, in den Erfassungsbereich des Manipulators gelangen. Wie oben erwähnt, erfolgt die Gruppierung von Stückgütern der Formation normalerweise erst im Manipulationsbereich bzw. im Bereich der Horizontalfördereinrichtung bzw. im Erfassungsbereich des Manipulators. Je nach dem gewählten Grad der Zergliederung der gesamten Manipulierungsvorgänge könnte allenfalls davon ausgegangen werden, dass die Vorgruppierung ein nicht separat erkennbarer Teil der Manipulationsvorgänge ist.

Die erfindungsgemäße Vorrichtung kann in einer von zahlreichen denkbaren Ausführungsvarianten genau einen Manipulator sowie wenigstens zwei Transporteinrichtungen umfassen. Über diese wenigstens zwei Transporteinrichtungen können jeweils unmittelbar aufeinanderfolgende Stückgüter einer jeweiligen Reihe annähernd ohne oder ohne Beabstandung als geschlossene Formation in den Erfassungsbereich des Manipulators transportiert werden. Der Manipulator kann auf diese Weise in Abhängigkeit von einer jeweiligen Bereitstellungssituation mindestens ein Stückgut selektiv aus einer in seinen Erfassungsbereich transportierten geschlossenen Formation klemmend entgegennehmen, abtrennen und in die jeweilige Zielposition und/oder Zielausrichtung überführen. Dieser Vorgang kann sich in beliebiger Aufeinanderfolge bzw. Häufigkeit wiederholen.

Bei der erfindungsgemäßen Vorrichtung können die wenigstens zwei Transporteinrichtungen insbesondere annähernd unterbrechungsfrei und vorzugsweise mit gleichbleibender Transportgeschwindigkeit angetrieben werden. Weiterhin kann die Vorrichtung zumindest eine Horizontalfördereinrichtung umfassen, der die jeweilige Zielposition für das mindestens eine Stückgut zugeordnet ist. Außerdem kann es von Vorteil sein, dass die zumindest eine Horizontalfördereinrichtung der erfindungsgemäßen Vorrichtung unterbrechungsfrei und vorzugsweise mit gleichbleibender Geschwindigkeit angetrieben wird. Zudem kann es von Vorteil sein, wenn die Transportgeschwindigkeit der Transporteinrichtungen und die Geschwindigkeit der Horizontalfördereinrichtung, die in diesem Fall der Transportgeschwindigkeit für die Stückgüter entsprechen, gleich oder annähernd gleich sind.

Bei einem Verfahren, indem hintereinander bewegte Stückgüter dem in mehreren Reihen in den Erfassungsbereich mindestens eines Manipulators transportiert werden, kann es vorteilhaft sein, wenn die mittels der wenigstens zwei geschlossenen Formationen zum Manipulator transportierten Stückgüter je nach Zweckmäßigkeit und/oder Fördersituation in jeweils gegeneinander versetzter und/oder quer zu einer Transportrichtung nicht fluchtender Anordnung transportiert werden. Insbesondere können Sie in Transportrichtung in unterschiedlichen Vorschubpositionen positioniert sein. In solchen Fördersituationen kann es sinnvoll sein, wenn der Manipulator jeweils wenigstens ein Stückgut von derjenigen der wenigstens zwei geschlossenen Formationen der jeweiligen Reihen abgreift, für welches Stückgut ein zurückzulegender Weg zu seiner jeweiligen Zielposition und/oder -ausrichtung im Zusammenhang mit der anzuordnenden Vorgruppierung und/oder Lagenanordnung für die auszubildende palettierfähige Lage gegenüber einem Weg für andere zu erfassende Stückgüter minimal ist.

Ebenso kann mit einer solchen versetzten oder quer zur Transportrichtung nicht fluchtenden Anordnung der Stückgüter der zwei oder mehr parallelen Reihen eine zeitlich versetzte Anlieferung der Stückgüter auf den mindestens zwei Reihen gemeint sein. So kann der Vorschub auf einer der zwei oder mehr Reihen bspw. früher starten als der der anderen Reihe bzw. der anderen Reihen. In solchen Fördersituation können bedarfsweise von den zwei oder mehr Reihen auch jeweils unterschiedliche Mengen an Stückgütern abgegriffen werden. Eine weitere sinnvolle Randbedingung kann hierbei darin bestehen, dass ggf. längere Manipulatorwege in Kauf genommen werden können, wenn das jeweils zu erfassende Stückgut schon im Erfassungsbereich weiter fortgeschritten ist. Je nach Positionierungsfortschritt kann es zudem sinnvoll sein, auch dann längere Wege für den Manipulator in Kauf zu nehmen, wenn das allmählich sich füllende Lagenbild der auszubildenden palettierfähigen Lage dies erforderlich bzw. im Einzelfall sogar unverzichtbar macht.

Bei einer alternativen Ausführungsvariante der erfindungsgemäßen Vorrichtung ist mehr als ein Manipulator zur Handhabung und Positionierung der in mindestens einer Reihe, über mindesten eine Transporteinrichtung in Transportrichtung einlaufenden Stückgüter vorhanden. Diese Variante der Vorrichtung umfasst mehrere Manipulatoren für Stückgüter sowie auch mehrere Transporteinrichtungen mit parallelen Transportrichtungen. Über diese mehreren Transporteinrichtungen werden jeweils unmittelbar aufeinanderfolgende Stückgüter einer jeweiligen Reihe annähernd ohne Beabstandung als geschlossene Formation in jeweilige Erfassungsbereiche der mehreren Manipulatoren transportiert, so dass sämtliche Erfassungsbereiche der mehreren Manipulatoren jeweils mindestens eine Reihe mit einer geschlossenen Formation an transportierten Stückgütern erreichen können. Wenn in diesem Zusammenhang von mehreren Transporteinrichtungen die Rede ist, so umfasst diese Definition eine Variante, bei der zwei oder mehr Reihen mit geschlossenen Formationen an Stückgütern auf einer gemeinsamen Transporteinrichtung nebeneinander transportiert und zu den zwei oder mehr Manipulatoren bzw. zu deren Erfassungsbereichen befördert werden. Zudem sind die mehreren Manipulatoren jeweils zum klemmenden Erfassen bzw. Entgegennehmen sowie zum Abtrennen und Überführen jeweils mindestens eines Stückgutes aus der in seinen jeweiligen Erfassungsbereich transportierten geschlossenen Formation ausgebildet.

Vorteilhafterweise können die Erfassungsbereiche der mehreren Manipulatoren zumindest bereichsweise senkrecht zu den Transportrichtungen der mehreren zueinander benachbarten Transporteinrichtungen ausgebildet sein, was jedoch keinesfalls zwingend der Fall sein muss. Die Ausrichtungen können auch andere Winkel aufweisen oder prinzipiell unbestimmt bzw. variabel sein.

Außerdem kann bei einer weiteren Ausführungsvariante der erfindungsgemäßen Vorrichtung vorgesehen sein, dass sich Erfassungsbereiche der mehreren Manipulatoren bereichsweise überschneiden, wobei mittels mindestens einer der mehreren Transporteinrichtungen unmittelbar aufeinanderfolgende Stückgüter der jeweiligen Reihe annähernd ohne Beabstandung als geschlossene Formation in den sich überschneidenden Bereich der mehreren Manipulatoren transportierbar sind. Zudem kann vorgesehen sein, dass die Manipulatoren mit den sich überschneidenden Erfassungsbereichen zum klemmenden Entgegennehmen sowie zum Abtrennen und Überführen in eine jeweilige Zielposition und/oder Zielausrichtung der jeweiligen als geschlossene Formation in den sich überschneidenden Bereich transportierten Stückgüter aufeinander abgestimmt sind.

Die erfindungsgemäße Vorrichtung kann optional eine Steuerungseinrichtung umfassen, welche mit den mehreren Manipulatoren in Verbindung steht, wobei die Steuerungseinrichtung Informationen zu einer aus einer Vielzahl an Stückgütern zu bildenden Gruppierung für eine palettierfähige Lage besitzt. Dabei kann zudem vorteilhaft sein, wenn die jeweiligen Zielpositionen und/oder Zielausrichtungen der Stückgüter einen Teil der Informationen bilden und dem jeweiligen mindestens einen Stückgut eine bestimmte Lage und/oder relative Orientierung in der jeweiligen Gruppierung zuordnen. Zusätzlich oder optional kann zudem vorgesehen sein, dass die mehreren Manipulatoren aufeinander abgestimmt unter Berücksichtigung der Informationen über die Steuerungseinrichtung zum jeweiligen klemmenden Entgegennehmen sowie zum Abtrennen und Überführen in eine jeweilige Zielposition und/oder Zielausrichtung mindestens eines jeweiligen Stückgutes aus der mittels der mehreren Transporteinrichtungen in die Erfassungsbereiche transportierten geschlossenen Formationen angesteuert werden können.

Alternativ zu der zuvor beschriebenen Vorrichtung kann diese wahlweise auch eine Steuerungseinrichtung umfassen, welche mit den mehreren Manipulatoren in Verbindung steht, wobei die Steuerungseinrichtung Informationen zu einer aus einer Vielzahl an Stückgütern zu bildenden Reihe oder mehreren aus einer Vielzahl an Stückgütern zu bildenden Reihen besitzt, wobei die jeweiligen Zielpositionen und/oder Zielausrichtungen der Stückgüter einen Teil der Informationen bilden und dem jeweiligen mindestens einen Stückgut eine bestimmte Lage und/oder relative Orientierung für die jeweilige zu bildende eine Reihe oder die jeweiligen zu bildenden mehreren Reihen zuordnen, und wobei die mehreren Manipulatoren aufeinander abgestimmt unter Berücksichtigung der Informationen über die Steuerungseinrichtung zum jeweiligen klemmenden Entgegennehmen sowie zum Abtrennen und Überführen in eine jeweilige Zielposition und/oder Zielausrichtung mindestens eines jeweiligen Stückgutes aus der mittels der mehreren Transporteinrichtungen in die Erfassungsbereiche transportierten geschlossenen Formation angesteuert werden können.

Bei der erfindungsgemäßen Vorrichtung kann wahlweise nur ein Manipulator vorgesehen sein, was an anderer Stelle der vorliegenden Beschreibung näher erläutert ist. Es können jedoch alternativ auch mehrere Manipulatoren vorhanden sein, die jeweils zum klemmenden Entgegennehmen sowie zur Abtrennung und Überführung in eine jeweilige Zielposition und/oder Zielausrichtung einer bestimmten Anzahl jeweiliger in der geschlossenen Formation zuvorderst positionierter Stückgüter ausgebildet sind. Außerdem können die mehreren Manipulatoren jeweils zum Drehen mindestens eines Stückgutes der geschlossenen Formation ausgebildet sein.

Wie zuvor anhand des wenigstens einen Manipulators einer Variante der Vorrichtung erwähnt, können auch die mehreren Manipulatoren jeweils z.B. als Parallelkinematik- Roboter ausgebildet oder jeweils Teil eines solchen sein.

Bei einer alternativen und/oder ergänzenden Ausführungsvariante der erfindungsgemäßen Vorrichtung kann der mindestens eine innerhalb des Erfassungsbereiches beweg-, verschieb- und/oder rotierbare Manipulator oder Abschnitt des Manipulators zum Bilden einer palettierfähigen Lage aus Stückgütern oder einer Vorgruppierung für eine palettierfähige Lage aus Stückgütern zum Durchführen mehrerer zeitlich aufeinanderfolgender Schritte ausgebildet sein. Bei diesen Schritten wird jeweils wenigstens ein Stückgut über den mindestens einen Manipulator klemmend erfasst, aus der geschlossenen Formation durch seitliche Rotation aus einer geradlinigen Bewegungsbahn der geschlossenen Formation jeweils räumlich abgetrennt und mittels des mindestens einen Manipulators in eine jeweilige Zielposition und/oder Zielausrichtung überführt.

Bei dieser Vorrichtung kann der mindestens eine Manipulator vorzugsweise eine bestimmte Aufnahmekapazität für mehrere Stückgüter besitzen und für die mehreren Schritte jeweils abgestimmt auf die zu bildende palettierfähige Lage oder Vorgruppierung einer palettierfähigen Lage zur Erfassung einer jeweiligen bestimmten Anzahl an Stückgütern ansteuerbar sein. Die jeweilige Anzahl an Stückgütern kann für unterschiedliche Positionierungsschritte entweder der Aufnahmekapazität des Manipulators entsprechen oder geringer sein als die Aufnahmekapazität.

Für die leichtere Handhabbarkeit der Stückgüter kann es von Vorteil sein, wenn der mindestens eine Manipulator-wie oben ausführlich beschrieben - zwei sich gegenüberliegende Klemm- und/oder Greifmittel zum jeweiligen Erfassen der bestimmten Anzahl an Stückgütern und Freigeben der jeweiligen bestimmten Anzahl an Stückgütern in der Zielposition und/oder Zielausrichtung besitzt.

Die Vorrichtung kann alternativ oder zusätzlich auch vorsehen, dass der mindestens eine innerhalb des Erfassungsbereiches beweg-, verschieb- und/oder rotierbare, zumindest teilweise durch einen Deltakinematik-Roboter gebildeten und/oder einen solchen Deltakinematik-Roboter aufweisende Manipulator zum Bilden einer palettierfähigen Lage aus Stückgütern oder einer Vorgruppierung für eine palettierfähige Lage aus Stückgütern zum Durchführen mehrerer zeitlich aufeinanderfolgender Schritte ausgebildet ist. Bei diesen Schritten kann jeweils wenigstens ein Stückgut über den mindestens einen Manipulator klemmend erfasst, aus der geschlossenen Formation unter gleichzeitiger Distanzierung in Transportrichtung und unter zumindest kurzzeitiger Beschleunigung mit einer Bewegungskomponente parallel zu einer geradlinigen Bewegungsbahn der geschlossenen Formation und/oder durch seitliche Rotation aus einer geradlinigen Bewegungsbahn der geschlossenen Formation jeweils räumlich abgetrennt und mittels des mindestens einen Manipulators in eine jeweilige Zielposition und/oder Zielausrichtung überführt werden.

In diesem Zusammenhang kann der mindestens eine Manipulator insbesondere eine bestimmte Aufnahmekapazität für mehrere Stückgüter besitzen und für die mehreren Schritte jeweils abgestimmt auf die zu bildende palettierfähige Lage oder Vorgruppierung einer palettierfähigen Lage zur Erfassung einer jeweiligen bestimmten Anzahl an Stückgütern ansteuerbar sein, wobei diese Anzahl für unterschiedliche Positionierungsschritte der Aufnahmekapazität entsprechen oder geringer sein kann als die maximale Aufnahmekapazität des Manipulators für Stückgüter. Um die Stückgüter zu erfassen und manipulieren zu können, kann der mindestens eine Manipulator bspw. zwei sich gegenüberliegende Klemm- und/oder Greifmittel des Manipulators zum jeweiligen Erfassen der bestimmten Anzahl an Stückgütern und Freigeben der jeweiligen bestimmten Anzahl an Stückgütern in der Zielposition und/oder Zielausrichtung aufweisen. Sollen die Stückgüter in mehreren Reihen gleichzeitig erfasst werden, kann es sich auch bspw. um einen Doppelgreifer oder um einen Mehrfachgreifer handeln, der mehr als zwei Klemm- und/oder Greifmittel aufweist, die relativ zueinander beweglich und/oder zumindest paarweise gegeneinander zustellbar sind.

Außerdem kann die Vorrichtung vorsehen, dass der mindestens eine Manipulator zum klemmenden Erfassen sowie zum Abtrennen und Überführen in eine Zielposition und/oder Zielausrichtung einer bestimmten Anzahl jeweiliger in der geschlossenen Formation zuvorderst positionierter Stückgüter ausgebildet ist.

Weitere Varianten der erfindungsgemäßen Vorrichtung finden sich nachfolgend beschrieben. Wie an anderer Stelle bereits erwähnt, können diese Varianten für sich oder in Kombination mit anderen Varianten - kumulativ oder alternativ - gesehen werden. So sieht eine Variante der Vorrichtung vor, dass der mindestens eine Manipulator zum klemmenden Erfassen wenigstens eines einem zuvorderst angeordneten Stückgut der geschlossenen Formation nacheilenden Stückgutes ausgebildet ist, so dass der mindestens eine Manipulator das zuvorderst angeordnete Stückgut zunächst oder zumindest vorläufig ohne Erfassung an seiner Stelle bzw. in seiner Bewegung belässt. Zudem ist bei dieser Variante der mindestens eine Manipulator zum Schieben des zuvorderst angeordneten Stückgutes in eine jeweilige für das zuvorderst angeordnete Stückgut vorgesehene Zielposition und/oder Zielausrichtung ausgebildet.

Generell kann bei den meisten der hier beschriebenen Verfahrensschritte bzw. bei den meisten der beschriebenen Optionen der erfindungsgemäßen Vorrichtung bzw. des erfindungsgemäßen Verfahrens die Option des Schiebens von bereits positionierten und/oder nach einer Drehung oder Teildrehung neu ausgerichteten Stückgütern hinzukommen. Damit ist gemeint, dass der Manipulator zunächst ein einzelnes Stückgut innerhalb des Erfassungsbereiches positioniert und/oder nach einer Drehung oder Teildrehung neu ausrichtet, sich vom Stückgut löst und ein weiteres Stückgut von der geschlossenen Formation holt und erfasst, in aller Regel ein in Transportrichtung zuvorderst befindliches Stückgut. Mit Hilfe dieses im Manipulator gehaltenen und/oder geklemmten Stückgutes und/oder mit Hilfe von Teilen des Manipulators kann das zuvor bereits im Erfassungsbereich positionierte, d.h. auf der Horizontalfördereinrichtung stehend in Transportrichtung weiterbeförderte Stückgut in gewünschter Weise verschoben werden, ohne dass es hierzu gesondert vom Manipulator erfasst, geklemmt und/oder gegriffen werden müsste. Mit der Option des Schiebens von Stückgütern kann ebenso gemeint sein, dass der Manipulator zunächst zwei, drei oder mehr Stückgüter gleichzeitig innerhalb des Erfassungsbereiches und damit auf der Horizontalfördereinrichtung positioniert und/oder nach einer gemeinsamen Drehung oder Teildrehung neu ausrichtet, sich von diesen Stückgütern löst und ein weiteres Stückgut von der geschlossenen Formation holt und erfasst, in aller Regel ein in Transportrichtung zuvorderst befindliches Stückgut. Mit Hilfe dieses im Manipulator gehaltenen und/oder geklemmten Stückgutes und/oder mit Hilfe von Teilen des Manipulators können die zuvor bereits im Erfassungsbereich positionierten, d.h. auf der Horizontalfördereinrichtung stehend in Transportrichtung weiterbeförderten Stückgütern in gewünschter Weise verschoben werden, ohne dass sie hierzu gesondert vom Manipulator erfasst, geklemmt und/oder gegriffen werden müssten.

Mit der Option des Schiebens von Stückgütern kann jedoch ebenso gemeint sein, dass der Manipulator zunächst zwei, drei oder mehr Stückgüter gleichzeitig innerhalb des Erfassungsbereiches und damit auf der Horizontalfördereinrichtung positioniert und/oder nach einer gemeinsamen Drehung oder Teildrehung neu ausrichtet, sich von diesen Stückgütern löst und ein weiteres Stückgut von der geschlossenen Formation holt und erfasst, in aller Regel ein in Transportrichtung zuvorderst befindliches Stückgut. Mit Hilfe dieses im Manipulator gehaltenen und/oder geklemmten Stückgutes und/oder mit Hilfe von Teilen des Manipulators kann zumindest eines der zuvor bereits im Erfassungsbereich positionierten, d.h. auf der Horizontalfördereinrichtung stehend in Transportrichtung weiterbeförderten Stückgütern in gewünschter Weise verschoben werden, ohne dass dieses eine Stückgut oder zwei oder drei von den zuvor positionierten Stückgüter hierzu gesondert vom Manipulator erfasst, geklemmt und/oder gegriffen werden müssten. Schließlich kann mit der Option des Schiebens von Stückgütern wahlweise auch gemeint sein, dass der Manipulator zunächst zwei, drei oder mehr Stückgüter gleichzeitig innerhalb des Erfassungsbereiches und damit auf der Horizontalfördereinrichtung positioniert und/oder nach einer gemeinsamen Drehung oder Teildrehung neu ausrichtet, sich von diesen Stückgütern löst und zwei oder drei oder mehre weitere Stückgüter von der geschlossenen Formation holt und erfasst, in aller Regel die in Transportrichtung zuvorderst befindlichen Stückgüter. Mit Hilfe dieser im Manipulator gehaltenen und/oder geklemmten Stückgüter und/oder mit Hilfe von Teilen des Manipulators können die zuvor bereits im Erfassungsbereich positionierten, d.h. auf der Horizontalfördereinrichtung stehend in Transportrichtung weiterbeförderten Stückgütern in gewünschter Weise verschoben werden, ohne dass sie hierzu gesondert vom Manipulator erfasst, geklemmt und/oder gegriffen werden müssten.

Wahlweise kann auch nur ein einzelnes Stückgut oder ein Teil der zuvor positionierten Stückgüter nachträglich verschoben werden.

Wenn im vorliegenden Zusammenhang von einem Verschieben oder einem nachträglichen Verschieben von zuvor bereits positionierten und/oder vom Manipulator innerhalb des Erfassungsbereiches abgestellten und/oder neu ausgerichteten Stückgütern die Rede ist, so umfasst dies wahlweise auch jegliche Winkelveränderungen gegenüber der zuvor eingenommenen Position, d.h. jegliche Neuausrichtungen der Stückgüter durch nachträgliche schiebende und/oder drehende Einwirkungen durch den Manipulator und/oder mittels im Manipulator erfasste, geklemmte und/oder gehaltene Stückgüter, wie dies zuvor bereits anhand mehrerer Varianten erläutert wurde.

Wie es sich von selbst versteht, ist bei allen diesen genannten Verfahrensvarianten des Schiebens und/oder mehrmaligen Einwirkens auf die Stückgüter der mindestens eine Manipulator zum Schieben des zuvor bereits positionierten Stückgutes bzw. der zuvor bereits positionierten Stückgüter in eine jeweilige für das zuvor bereits positionierte und/oder neu ausgerichtete Stückgut vorgesehene neue Zielposition und/oder erneute Zielausrichtung ausgebildet.

Für alle beschriebenen Verfahrens- und/oder Vorrichtungsvarianten der vorliegenden Erfindung kann optional gelten, dass der mindestens eine Manipulator wahlweise bzw. bedarfsweise auch mit einer vertikalen Richtungskomponente angehoben und zur Entgegennahme des mindestens einen Stückgutes mit einer vertikalen Richtungskomponente abgesenkt werden kann. In diesem Fall können die Stückgüter zumindest während des Positionierungsvorganges zumindest phasenweise den berührenden Kontakt zur Oberfläche der Horizontalfördereinrichtung verlieren, was ggf. zur Reibungsreduzierung und/oder zur Herstellung definierter und reproduzierbarer Widerstände gegen alle Positionierungsbewegungen sinnvoll sein kann. Da sich Reibungseffekte allen Trägheitskräften bei den Manipulatorbewegungen überlagern, sofern die Stückgüter nicht angehoben, sondern nur verschoben werden, und da sich die Reibungskräfte je nach den veränderlichen Umgebungsbedingungen und ggf. sich verändernden Oberflächenbeschaffenheiten an den Grenzflächen der sich relativ zueinander bewegenden Teile ändern können, während die Trägheitskräfte im Wesentlichen nur von den bewegten Massen und Schwerpunkten der Stückgüter abhängig sind, kann ein zumindest phasenweises Anheben der Stückgüter zu einer exakteren Berechenbarkeit der aufzubringenden Kräfte und Momente sowie insbesondere der bei den Manipulationsbewegungen auftretenden Kräfte und Momente beitragen.

Für alle beschriebenen Varianten der vorliegenden Erfindung, ob Verfahrensvarianten oder Vorrichtungsvarianten, kann als weitere Option vorgesehen sein, dass der mindestens eine Manipulator wahlweise bzw. bedarfsweise auch in vertikaler Richtung auf eine Höhe oberhalb des Höhenniveaus der zu erfassenden und/oder zu positionierenden und/oder auszurichtenden Stückgüter angehoben und zur Entgegennahme des mindestens einen weiteren Stückgutes aus dieser Höhe wieder abgesenkt werden kann. Auf diese Weise können neu erfasste Stückgüter von nahezu beliebigen Positionen aus der geschlossenen Formation herausgehoben und über weitere Stückgüter gehoben und anschließend positioniert werden, sofern diese aus der geschlossenen Formation zu erfassenden Stückgüter sich bereits im Erfassungsbereich des Manipulators und damit in dessen Reichweite befinden. Außerdem können auf diese Weise erfasste Stückgüter über bereits positionierte Stückgüter hinwegbewegt und in Transportrichtung vor diesen bereits positionierten Stückgütern abgestellt und positioniert und/oder in gewünschter Weise gedreht und/oder ausgerichtet werden.

Außerdem kann der mindestens eine Manipulator zum Überführen des mindestens einen Stückgutes in seine jeweilige Zielposition und/oder Zielausrichtung und zum Schieben des zuvorderst angeordneten Stückgutes in seine jeweilige Zielposition und/oder Zielausrichtung linear und fluchtend zu einer Förderrichtung der wenigstens einen Transporteinrichtung bewegbar ausgebildet sein.

Schließlich kann eine weitere Vorrichtungsvariante eine Steuerungseinrichtung aufweisen bzw. umfassen, über welche der mindestens eine Manipulator zum klemmenden Erfassen des mindestens einen Stückgutes, zum räumlichen Abtrennen des mindestens einen Stückgutes von der geschlossenen Formation sowie zum Bringen des mindestens einen Stückgutes in die definierte Zielposition und/oder Zielausrichtung ansteuerbar ist, wobei die Steuerungseinrichtung Informationen zu einer aus einer Vielzahl an Stückgütern zu bildenden Gruppierung für eine palettierfähige Lage aufweist bzw. abgespeichert hat, und wobei die jeweiligen Zielpositionen und/oder Zielausrichtungen der Stückgüter einen Teil der Informationen bilden und dem jeweiligen mindestens einen Stückgut sowie dem jeweiligen zuvorderst angeordneten Stückgut eine jeweilige bestimmte Lage und/oder relative Orientierung in der jeweiligen Gruppierung zuordnen.

Bei dem erfindungsgemäßen Verfahren ist vorgesehen, dass in mehreren zeitlich aufeinanderfolgenden Schritten jeweils wenigstens ein transportiertes Stückgut aus der geschlossenen Formation erfasst, von der geschlossenen Formation durch geradlinige Beschleunigung in oder ungefähr in einer Längserstreckungsrichtung der geschlossenen Formation und/oder durch eine Rotation aus einer geradlinigen Bewegungsbahn der geschlossenen Formation jeweils räumlich abgetrennt und mittels mindestens eines Manipulators in eine jeweilige definierte relative Zielposition und/oder -ausrichtung gegenüber nachfolgenden Stückgütern gebracht wird. Hierbei wird dem wenigstens einem erfassten Stückgut gegenüber einer Transportgeschwindigkeit der geschlossenen Formation wenigstens eine weitere Geschwindigkeits- und/oder Richtungs- und/oder Drehbewegungskomponente aufgeprägt. Hierbei ist zu beachten, dass die Geschwindigkeitskomponente nicht negativ gegenüber der Geschwindigkeit der Stückgüter in der Formation sein darf und die Richtungskomponente nicht entgegen der Transportrichtung der Stückgüter in der Formation gerichtet sein darf. Ansonsten bestünde eine Kollisionsgefahr zwischen dem erfassten Stückgut und dem nachfolgenden, nunmehr zuvorderst befindlichen Stückgut der geschlossenen Formation. Zum Drehen des mindestens einen erfassten Stückgutes kann der Manipulator der Vorrichtung beispielsweise als Greiferkopf an einem Drehgelenk ausgebildet sein und durch Rotation um einen definierten Winkel von beispielsweise 90° die Ausrichtung der zwischen den Klemmbacken erfassten Stückgüter verändern.

Gemäß einer weiteren Ausführungsform eines Verfahrens ist vorgesehen, dass das wenigstens eine transportierte Stückgut unter gleichzeitiger Drehbewegung um einen Winkel von zumindest näherungsweise 90° oder von zumindest näherungsweise 180° in die definierte relative Zielposition und/oder Zielausrichtung gegenüber den nachfolgenden Stückgütern gebracht wird. Das Verfahren kann weiterhin vorsehen, dass die Drehbewegung um eine vorzugsweise in etwa vertikale Achse erfolgt, welche sich zwischen dem jeweiligen wenigstens einen klemmend erfassten Stückgut und der jeweiligen definierten Zielposition befindet.

Zudem kann wenigstens ein zuvorderst transportiertes Stückgut aus der geschlossenen Formation klemmend erfasst und um einen Winkel von zumindest näherungsweise 90° oder von zumindest näherungsweise 180° um die Achse gedreht werden, wobei sich diese Achse insbesondere zwischen dem jeweiligen wenigstens einen klemmend erfassten Stückgut und der jeweiligen definierten Zielposition befinden kann. Es kann zudem optional vorgesehen sein, dass die Achse der Drehbewegung im Verlauf der Drehbewegung zumindest zeit- und/oder abschnittsweise in Richtung der jeweiligen definierten Zielposition bewegt wird. Wahlweise kann die Achse im Verlauf der Drehbewegung zumindest zeitweise in Richtung der jeweiligen definierten Zielposition mit einer Geschwindigkeit bewegt werden, die größer ist als eine Transportgeschwindigkeit der geschlossenen Formation. Außerdem kann es ggf. sinnvoll sein, dass die Achse im Verlauf der Drehbewegung zumindest zeitweise in einer bestimmten Position verweilt.

Eine weitere Ausführungsvariante des Verfahrens sieht vor, dass die Achse im Verlauf der Drehbewegung zumindest zeitweise in Richtung der jeweiligen definierten Zielposition mit einer Geschwindigkeit bewegt wird, die größer ist als die Transportgeschwindigkeit der geschlossenen Formation, wobei zeitlich anschließend die Achse im Verlauf der Drehbewegung zumindest zeitweise in einer bestimmten Position verweilt.

Das Verfahren kann wahlweise vorsehen, dass zeitlich aufeinander folgend mehrmals wenigstens ein transportiertes Stückgut aus der geschlossenen Formation klemmend erfasst, von der geschlossenen Formation räumlich abgetrennt und in eine jeweilige definierte relative Zielposition und/oder -ausrichtung gegenüber nachfolgenden Stückgütern gebracht wird, woraus resultierend aus mehreren Stückgütern eine Vorgruppierung oder eine Gruppierung für eine palettierfähige Lage oder Teillage gebildet wird.

Die Drehbewegungen des wenigstens einen Manipulators können bei wenigstens zwei aufeinanderfolgenden Schritten zum jeweiligen Verbringen von Stückgütern von der geschlossenen Formation in die jeweils vorgesehenen Zielpositionen und/oder Zielausrichtungen mit jeweils gleichsinnigem Drehsinn erfolgen, insbesondere oder wahlweise unter Weiterdrehung des Manipulators über einen Drehwinkel von 180° hinaus. Insbesondere kann der mindestens eine Manipulator einer Vorrichtung bzw. Handhabungsvorrichtung zum Umgang mit in einer Reihe hintereinander bewegten Stückgütern das wenigstens eine transportierte Stückgut zum Überführen in die definierte relative Zielposition und/oder -ausrichtung mit einer Drehbewegung um einen Winkel von zumindest näherungsweise 90° oder von zumindest näherungsweise 180° beaufschlagen. Hinzu kommt, dass der mindestens eine Manipulator für die Drehbewegung eine vorzugsweise in etwa vertikale Achse bereitstellt und zur gegenüber der Achse versetzten klemmenden Entgegennahme des mindestens einen Stückgutes ausgebildet ist. Außerdem kann vorgesehen sein, dass der mindestens eine Manipulator zumindest zeitweise mit der Drehbewegung überlagert zusammen mit der Achse und dem jeweiligen klemmend entgegengenommenen mindestens einen Stückgut in Richtung der jeweiligen Zielposition bewegbar ausgebildet ist.

Wahlweise kann der mindestens eine Manipulator zumindest zeitweise mit der Drehbewegung überlagert zusammen mit der Achse und dem jeweiligen klemmend entgegengenommenen mindestens einen Stückgut in Richtung der jeweiligen Zielposition mit einer Geschwindigkeit bewegbar sein, wobei diese Geschwindigkeit größer ist als eine Transportgeschwindigkeit der geschlossenen Formation. Außerdem kann der mindestens eine Manipulator zum klemmenden Entgegennehmen sowie zum Abtrennen und Überführen in eine Zielposition und/oder -ausrichtung einer bestimmten Anzahl jeweiliger in der geschlossenen Formation zuvorderst positionierter Stückgüter ausgebildet sein.

Vorzugsweise kann weiterhin vorgesehen sein, dass die Vorrichtung bzw. die Handhabungsvorrichtung eine Steuerungseinrichtung zum Ansteuern des Manipulators umfasst, die insbesondere durch eine prozessorgesteuerte Steuerungseinheit gebildet sein kann, die mit variablen und/oder programmierbaren Steuerungsprogrammen ausgestattet sein kann. Insbesondere steuert diese Steuerungseinrichtung den Manipulator derart, dass dieser mindestens ein Stückgut von einer geschlossenen Formation klemmend erfasst, das mindestens eine erfasste Stückgut von der Formation räumlich abtrennt und in die jeweilige definierte Zielposition und/oder Zielausrichtung bringt. Wahlweise steuert diese Steuerungseinrichtung auch zwei oder mehr Manipulatoren derart, dass diese jeweils mindestens ein erfasstes Stückgut von der jeweiligen geschlossenen Formation klemmend und/oder form- und /oder kraftschlüssig erfassen, das jeweils mindestens eine erfasste Stückgut von der jeweiligen Formation räumlich abtrennen und in die jeweiligen definierten Zielpositionen und/oder Zielausrichtungen bringen.

Die Steuerungseinrichtung enthält Informationen zu einer großen Variantenvielzahl; bzw. in der Steuerungseinrichtung können insbesondere Informationen zu einer aus einer Vielzahl an Stückgütern zu bildenden Gruppierung für eine palettierfähige Lage oder auch für unterschiedliche Lagenbilder abgespeichert sein. Hierbei bilden die jeweiligen Zielpositionen und/oder Zielausrichtungen der Stückgüter einen Teil der Informationen, die dem jeweiligen mindestens einen Stückgut eine bestimmte Lage und/oder relative Orientierung in der jeweiligen Gruppierung zuordnen.

Gemäß einer alternativen und/oder ergänzenden Ausführungsform sind in der Steuerungseinrichtung Informationen zu einer aus einer Vielzahl an Stückgütern zu bildenden Anordnung mit mindestens einer zweiten Reihe aus mehreren Stückgütern hinterlegt. Hierbei bilden die jeweiligen Zielpositionen und/oder Zielausrichtung der Stückgüter einen Teil der Informationen, die dem jeweiligen mindestens einen Stückgut eine bestimmte Lage und/oder relative Orientierung in der jeweiligen zweiten Reihe zuordnen.

Ein besonderer Vorteil des Verfahrens und der Vorrichtung besteht darin, dass der Manipulator eine Gruppierung und/oder Ausrichtung von mindestens einem Stückgut aus einer Formation von lückenlos und kontinuierlich zugeführten Stückgütern in einem einzigen Manipulationsschritt durchführen kann. Es kann somit auf herkömmlicherweise bekannte Vorrichtungen verzichtet werden, bei denen erst Stückgütergruppen von einem Zulauf abgetrennt und/oder distanziert und anschließend gedreht und/oder seitlich verschoben und/oder in definierten Zielpositionen angeordnet werden, wobei die Abtrennung einzelner Stückgüter oder Stückgut- Gruppen aus der abkommenden Formation durch den Manipulator selbst oder auch durch separate Vorgruppierungselemente erfolgen kann.

Damit unterscheidet sich die vorliegende Erfindung von aus dem Stand der Technik bekannten Portalroboter- Systemen, die ebenfalls palettierfähige Lagenbilder herstellen können. Bei diesen bekannten Palettierungsvarianten, die insbesondere mit Portalrobotersystemen arbeiten, erfolgt eine Vorgruppierung in der Regel, bevor die Stückgüter den Erfassungsbereich des Portalsystems erreichen, da solche Portalrobotersysteme eine lückenlose Anlieferung von Stückgütern/Gebinden aus Gründen der Begrenzung der maximalen Arbeitsgeschwindigkeit des Portalsystems normalerweise nicht sinnvoll verarbeiten. Demgegenüber hat die vorliegende Erfindung den besonderen Vorteil, dass sie die Vorgruppierung und die Positionierung für die Lagenbildung in einem integrierten (übergangslos) einzigen Positionierungsschritt schafft, was einen nicht unwesentlichen Teil des angestrebten Zeitgewinns gegenüber den aus dem Stand der Technik bekannten Varianten ausmacht.

Mit dem erfindungsgemäßen Verfahren und der erfindungsgemäßen Vorrichtung können somit Betriebskosten im laufenden Verpackungs- und/oder Palettierungsbetrieb sowie auch Systemkosten eingespart werden, da weniger Antriebe im Stückgut- Zulauf benötigt werden. Zudem kann die Leistung und somit der Durchsatz gegenüber den herkömmlich bekannten Systemen deutlich erhöht werden.

Abschließend wird darauf hingewiesen, dass Aspekte von Abwandlungen der zuvor anhand von zahlreichen Ausführungsvarianten beschriebenen erfindungsgemäßen Vorrichtung gleichermaßen auf das ebenfalls zuvor anhand von zahlreichen Ausführungsvarianten beschriebene erfindungsgemäße Verfahren bzw. auf eine der Ausführungsvarianten oder auch auf Kombinationen mehrerer dieser Ausführungsvarianten zu lesen sein können. Damit haben alle diese der Vorrichtung zugeordneten Aspekte, Abwandlungen und Varianten gleichermaßen als für die Verfahrensvarianten offenbarte Aspekte, Abwandlungen, Varianten und/oder Erfindungsdetails zu gelten. Umgekehrt gilt in gleicher Weise, dass Aspekte von Abwandlungen des zuvor anhand von zahlreichen Ausführungsvarianten beschriebenen erfindungsgemäßen Verfahrens gleichermaßen auf die ebenfalls zuvor anhand von zahlreichen Ausführungsvarianten beschriebene erfindungsgemäße Vorrichtung bzw. auf eine der Ausführungsvarianten oder auch auf Kombinationen mehrerer dieser Ausführungsvarianten zu lesen sein können. Damit haben alle diese dem Verfahren zugeordneten Aspekte, Abwandlungen und Varianten gleichermaßen als für die Vorrichtungsvarianten offenbarte Aspekte, Abwandlungen, Varianten und/oder Erfindungsdetails zu gelten.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figur 1 zeigt schematisch die Zusammenstellung von Stückgütern als Lage.

Figuren 2 bis 44 zeigen schematisch einen zeitlichen Ablauf eines erfindungsgemäßen Verfahrens zum Umgang mit in zwei parallelen Reihen hintereinander bewegten Stückgütern durch eine entsprechende Handhabungsvorrichtung zum Vorbereiten einer Lage von Stückgütern gemäß Figur 1.

Für gleiche oder gleich wirkende Elemente der Erfindung werden jeweils identische Bezugszeichen verwendet. Ferner werden der Übersicht halber nur Bezugsziffern in den einzelnen Figuren verwendet, die für die Beschreibung der jeweiligen Figur erforderlich sind. Die zeichnerisch dargestellten Ausführungsformen stellen lediglich Beispiele dar, wie die erfindungsgemäße Vorrichtung und das erfindungsgemäße Verfahren ausgestaltet sein können und stellen keine abschließende Begrenzung der Erfindung bzw. der erfinderischen Gedanken dar.

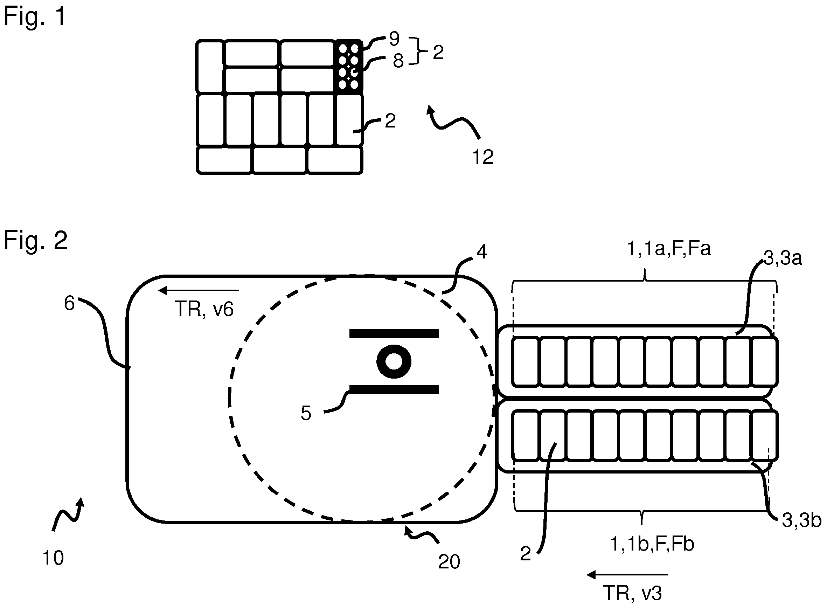

Figur 1 zeigt schematisch die Zusammenstellung von Stückgütern 2 als Lage 12, wie sie beispielsweise für die Palettierung und weitere Verarbeitung zusammengestellt werden soll. Im dargestellten Ausführungsbeispiel werden die Stückgüter 2 durch jeweils acht Flaschen 8 gebildet, die mittels einer Schrumpffolie 9 zu Gebinden zusammenfasst sind.

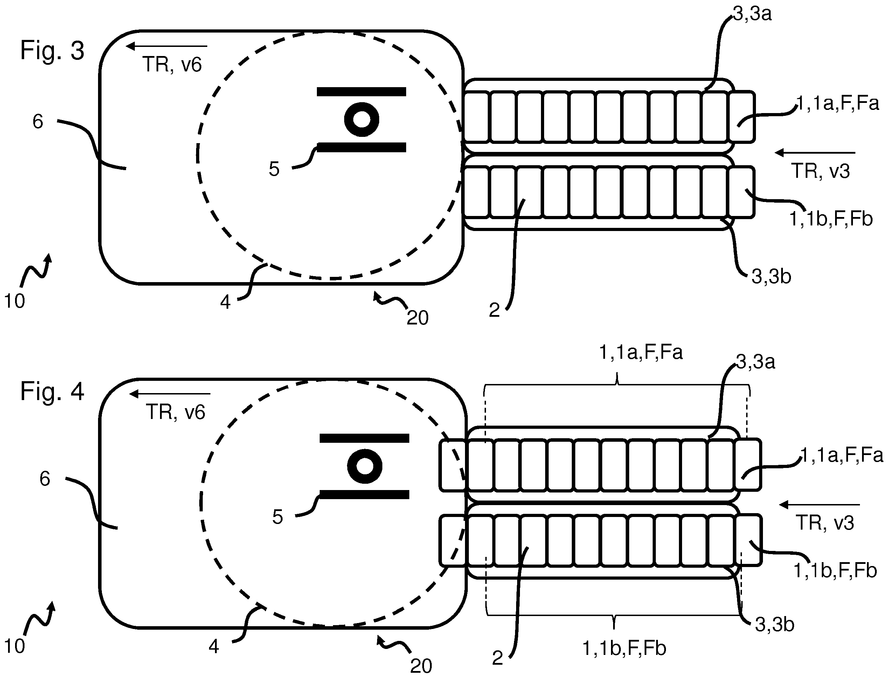

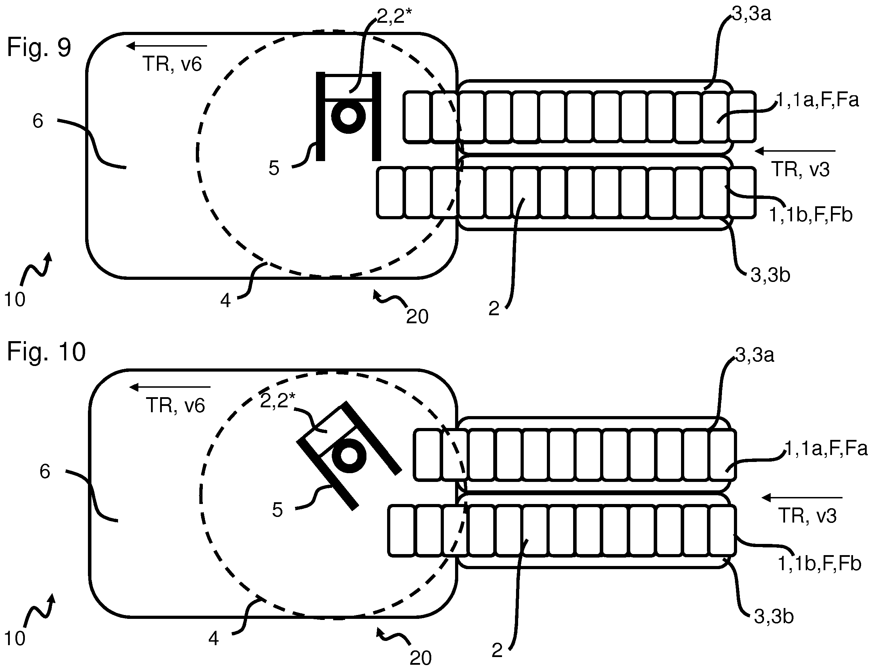

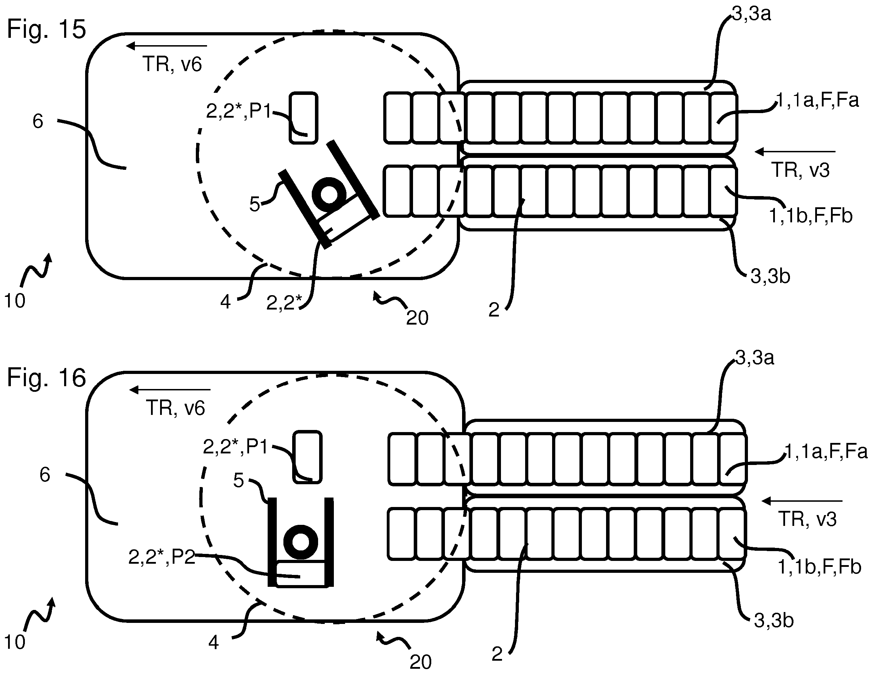

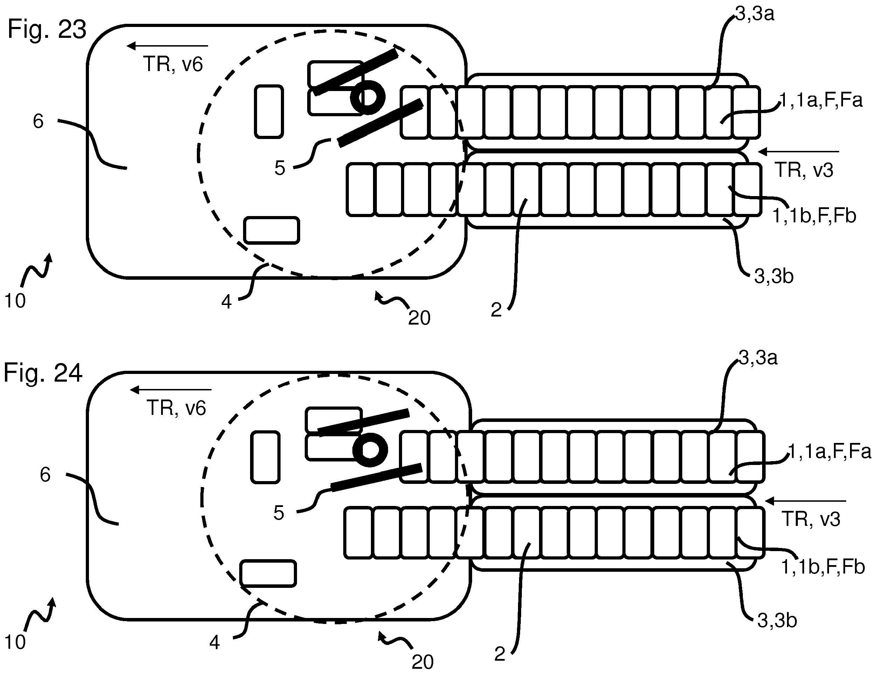

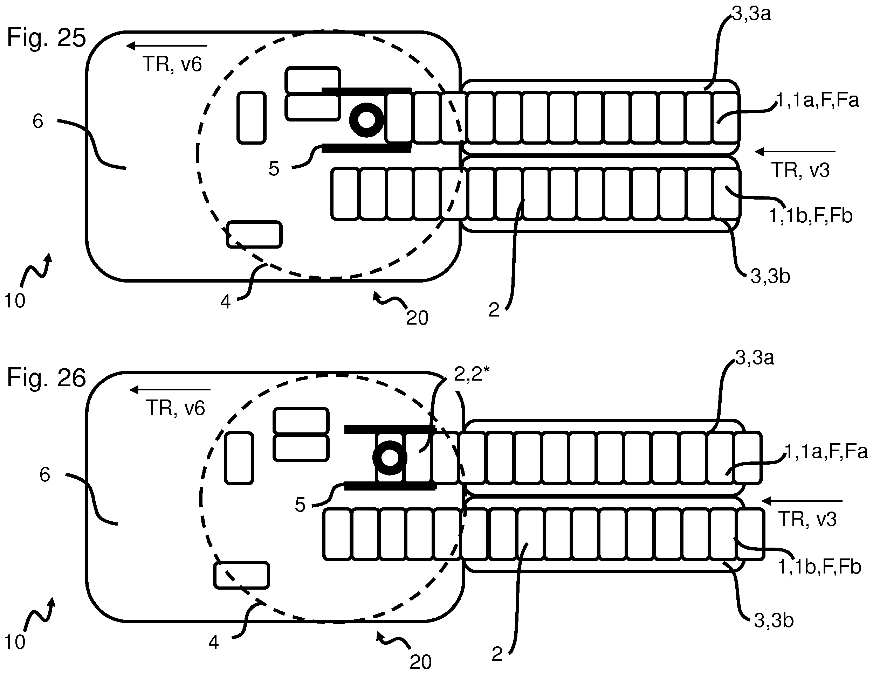

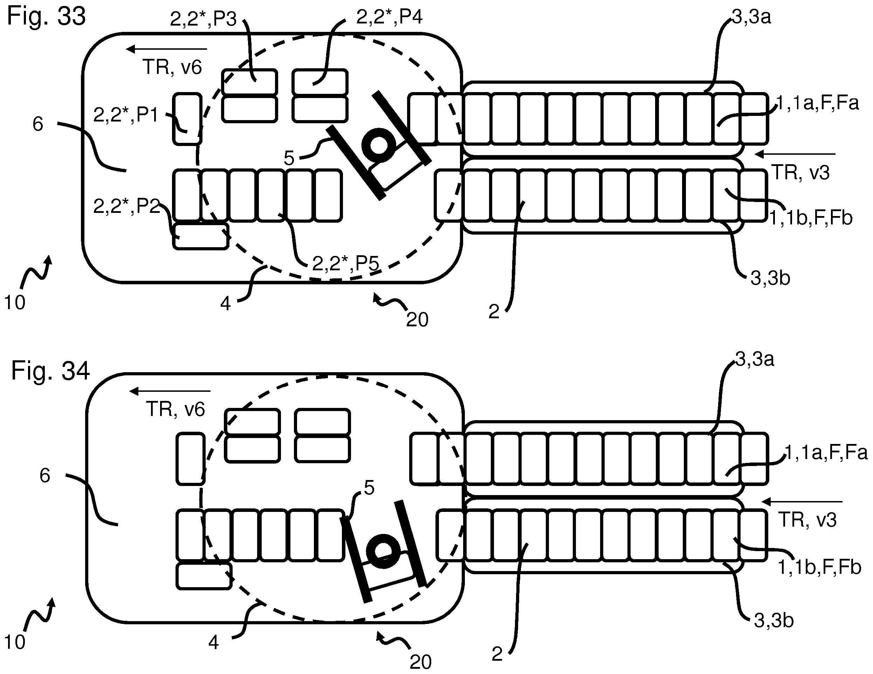

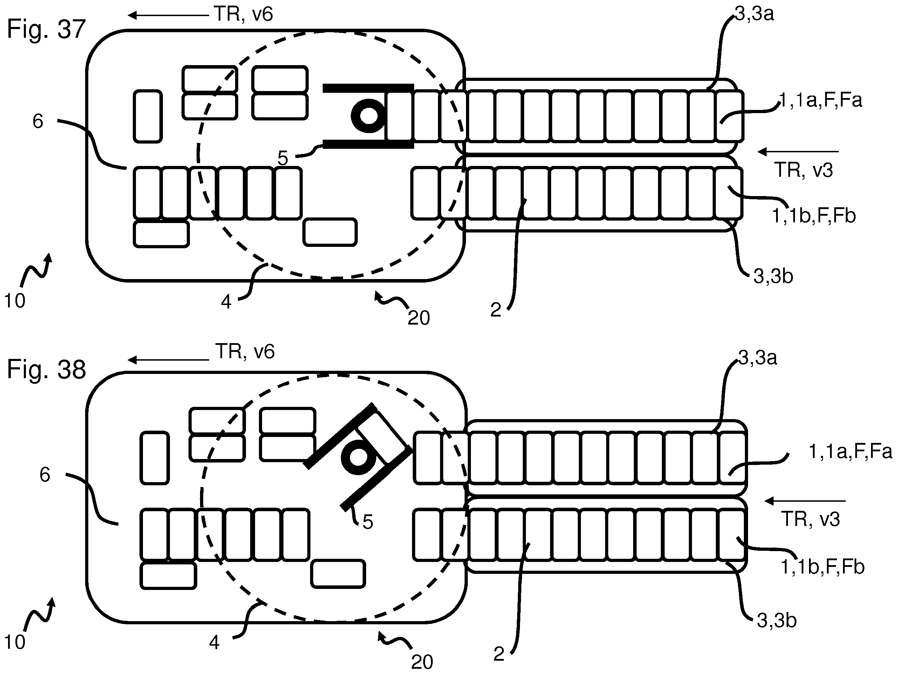

Figuren 2 bis 44 zeigen schematisch einen zeitlichen Ablauf eines erfindungsgemäßen Verfahrens zum Umgang mit in zwei parallelen Reihen 1, 1a, 1b hintereinander bewegten Stückgütern 2 durch eine entsprechende Handhabungsvorrichtung 10 zum Vorbereiten einer Lage 12 von Stückgütern 2 gemäß Figur 1.

Die Handhabungsvorrichtung 10 umfasst zwei parallel angeordnete erste Transporteinrichtungen 3, 3a, 3b, über welche unmittelbar aufeinanderfolgende Stückgüter 2 in einer zwei parallelen Reihen 1, 1a, 1b unterbrechungsfrei und/oder mit kontinuierlicher Transportgeschwindigkeit v3 in einen Erfassungsbereich 4 mindestens eines beweg-, verschieb- und/oder rotierbaren Manipulators 5 der Handhabungsvorrichtung 10 transportiert werden. Insbesondere ist vorgesehen, dass den zwei parallelen ersten Transporteinrichtungen 3a, 3b genau ein Erfassungsbereich 4 eines Manipulators 5 der Handhabungsvorrichtung 10 zugeordnet ist. Die Transporteinrichtungen 3a, 3b werden beispielsweise jeweils durch ein Förderband oder eine andere geeignete Fördereinrichtung gebildet, auf der die Stückgüter 2 vorzugsweise einreihig transportiert werden, wobei zwischen jeweils direkt aufeinander folgenden Stückgütern 2 keine bzw. nur eine geringfügige, gegebenenfalls prozessbedingte, Lücke besteht. Die Stückgüter 2 laufen somit in jeder der Reihen 1a, 1b jeweils in einer sogenannten geschlossenen Formation F, Fa, Fb wie in den Figuren 2ff. dargestellt, insbesondere gut sichtbar in den Figuren 2 bis 7, kontinuierlich in den Erfassungsbereich 4 des Manipulators 5 ein.

Die Figuren 2 bis 42 verdeutlichen insbesondere den in Transportrichtung TR lückenlos weitergeführten Transport der Reihen 1, 1a, 1b bzw. Formationen F, Fa, Fb im Erfassungsbereich 4 der Handhabungsvorrichtung 10. Insbesondere werden die Stückgüter 2 der jeweiligen Reihe 1a, 1b im Erfassungsbereich 4 ohne Unterbrechung und mit unveränderter Transportgeschwindigkeit weitertransportiert. Dem Erfassungsbereich 4 ist insbesondere eine Horizontalfördereinrichtung 6 zugeordnet, die sich mit einer Geschwindigkeit v6 bewegt. Insbesondere entspricht die Geschwindigkeit v6 der Horizontalfördereinrichtung 6 der Transportgeschwindigkeit v3 der Transporteinrichtungen 3a, 3b. Die in parallelen Reihen 1a, 1b über die Transporteinrichtungen 3a, 3b ankommenden Stückgüter 2 werden durch den Staudruck der nachfolgenden Stückgüter 2 auf die Horizontalfördereinrichtung 6 übergeschoben und dort unterbrechungsfrei weiter befördert.

Weiterhin ist möglich, dass die Stückgüter 2 mehrreihig, insbesondere in mehreren Parallelreihen 1a, 1b, auf einer einzigen, gemeinsamen Transporteinrichtung 3 (nicht dargestellt) zum Erfassungsbereich 4 des Manipulators 5 hin transportiert werden. Die Parallelreihen 1a, 1b können dabei beabstandet zueinander oder weitgehend ohne Abstand zueinander auf der Transporteinrichtung 3 transportiert werden.

Die Horizontalfördereinrichtung 6 und der oberhalb der Horizontalfördereinrichtung 6 angeordnete mindestens eine Manipulator 5 werden zusammen auch als Gruppiermodul 20 der Handhabungsvorrichtung 10 bezeichnet.

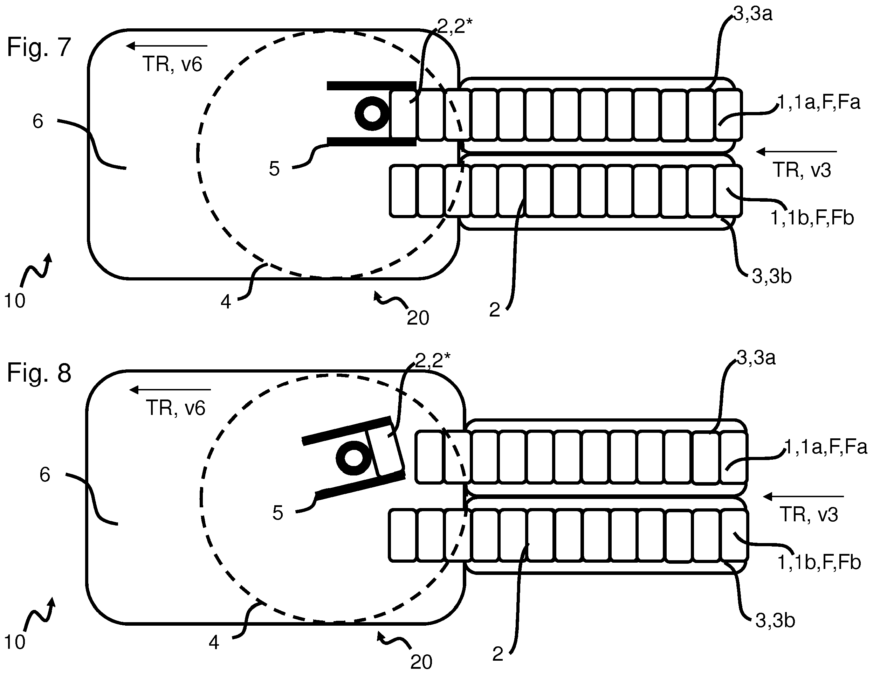

Der Manipulator 5 ist zum klemmenden Entgegennehmen von Stückgütern 2, 2* innerhalb des Erfassungsbereichs 4 ausgebildet. Wie in Figur 7 dargestellt, greift der Manipulator 5 zuerst ein Stückgut 2 aus der über die Transporteinrichtung 3a einlaufenden geschlossenen Formation Fa. Die vom Manipulator 5 erfassten Stückgüter 2 werden nachfolgend zur Unterscheidung von den in Formation F angeordneten Stückgütern 2 mit dem Bezugszeichen 2* bezeichnet. Der Manipulator 5 trennt das erfasste Stückgut 2* von der einreihigen Formation Fa ab und überführt das abgetrennte Stückgut 2* wie in den Figuren 7 bis 11 dargestellt in eine erste Zielposition P1 und/oder Zielausrichtung. Dabei wird das erfasste Stückgut 2* durch den Manipulator 5 zum einen in Transportrichtung TR von der Formation Fa der Stückgüter 2 beabstandet, zudem wird das erfasste Stückgut 2* gegenüber den Stückgütern 2 der Formation Fa um 180° verdreht.

Insbesondere erfolgt die Drehbewegung um eine vorzugsweise in etwa vertikale Achse, die sich zwischen dem jeweiligen wenigstens einen klemmend erfassten Stückgut 2* und der Zielposition P1 befindet.

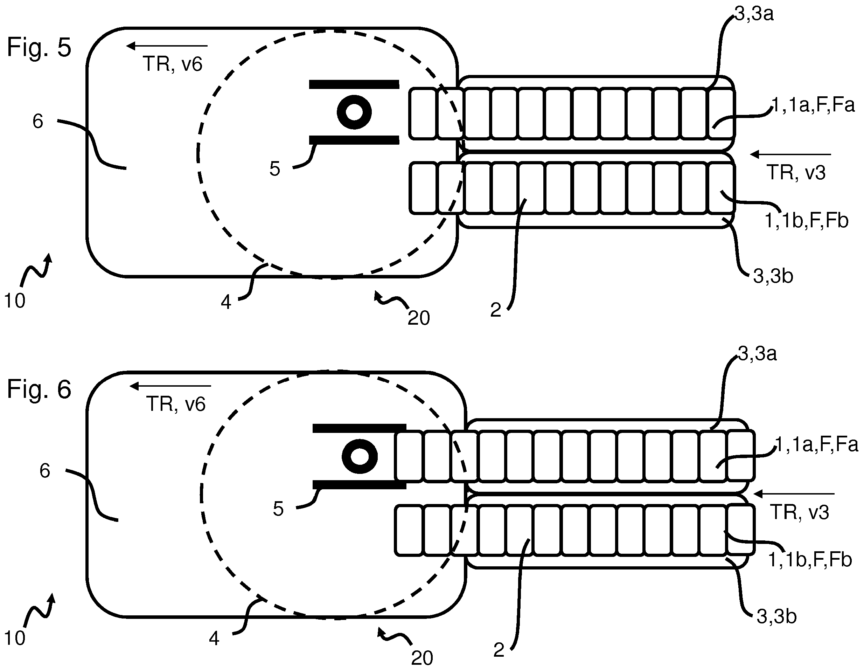

Die 180° Drehung ist insbesondere in Bezug auf die Einsparung von Weg und Zeit optimiert, insbesondere im Zusammenhang mit einer asymmetrischen Erfassung von Stückgütern 2, 2* bzw. mit einem asynchronen Abgreifen von Stückgütern 2, 2*. Bei dem in den Figuren 6 bis 11 dargestellten Abgreifen eines Stückgutes 2, 2* durch einen Manipulator 5, der gemäß dem dargestellten Ausführungsbeispiel bis zu drei Stückgüter 2 erfassen kann, ist wenigstens eine erste vertikale Symmetrieebene des durch den Manipulator 5 erfassten Stückguts 2, 2* beabstandet von einer zweiten vertikalen Symmetrieebene, die durch den Manipulator 5 bzw. durch dessen Klemm- und/oder Greifmittel definiert ist, was im vorliegenden Zusammenhang auch als sog. asynchrones oder asymmetrisches Abgreifen bezeichnet wird.

Wenn im vorliegenden Zusammenhang von vertikalen Symmetrieebenen die Rede ist, die sich in erster Linie auf die Positionierungen der Stückgüter 2, 2* bzw. deren Relativpositionen zum Manipulator 5 bzw. zu dessen Klemm- und/oder Greifmitteln beziehen, so sind diese vertikalen Symmetrieebenen definitionsgemäß senkrecht oder ungefähr senkrecht zu einer Horizontalförderebene der Horizontalfördereinrichtung 6 orientiert. Sinnvollerweise sind diese Symmetrieebenen, d.h. die erste Symmetrieebene, zweite und ggf. weitere Symmetrieebenen, auch senkrecht zur horizontal verlaufenden Transportrichtung TR und/oder in etwa senkrecht zu einer Längserstreckungsrichtung der geschlossenen Formation F orientiert. Sofern sich der Leser diese Transportrichtung TR als horizontalen Vektorpfeil vergegenwärtigt, der parallel zur horizontalen Auflageebene der Horizontalfördereinrichtung 6 sowie parallel zur normalerweise ebenfalls horizontal oder abschnittsweise horizontal verlaufenden Transporteinrichtung 3 verläuft, so durchstößt dieser Vektorpfeil die senkrecht stehenden Symmetrieebenen ebenfalls im Wesentlichen senkrecht. Wie erwähnt, sind diese mindestens zwei Symmetrieebenen - eine bezieht sich auf die Stückgüter 2, die andere auf den Manipulator 5 - in einem gewissen Abstand, sofern der Manipulator 5 unsymmetrisch oder einseitig beladen ist. Falls die Symmetrieebenen zusammenfallen oder ungefähr zusammenfallen, liegt der Sonderfall des vollständig beladenen und/oder symmetrisch bzw. mittig beladenen Manipulators 5 vor.

Aufgrund des häufig asynchron erfolgenden Abgreifens von Stückgütern 2, 2* aus der geschlossenen und/oder getakteten Formation F der zum Erfassungsbereich 4 geförderten Stückgutreihen 1 können bestimmte sinnvolle Einschränkungen hinsichtlich der dem Abgreifen und Erfassen der Stückgüter 2 aus der Formation F unmittelbar folgenden Bewegungsabläufe des Manipulators 5 definiert werden. Sofern der Greiferkopf des Manipulators 5 in der beschriebenen unsymmetrischen Weise bzw. in sog. asynchroner Bestückung mit Stückgütern 2, 2* beladen ist, womit die Distanzierung der jeweiligen ersten bzw. zweiten Symmetrieebenen - dies sind die jeweiligen vertikalen Symmetrieebenen, die in etwa senkrecht zur Transportrichtung TR bzw. zur Längserstreckungsrichtung der Stückgutformation orientiert sind - gemeint ist, ist bei einer Verschiebung nach links bzw. nach rechts, der ggf. jeweils eine Rotation überlagert sein kann, nicht jede Rotationsrichtungsvariante sinnvoll durchführbar, da dies unter Umständen zu einem unnötig langen Verschiebeweg führen könnte, der vom Manipulator 5 insgesamt auszuführen wäre.

Bei dem gemäß Figur 7 unsymmetrisch mit einem Stückgut 2, 2* beladenen Manipulator 5 kann es vorteilhaft sein, dass der Manipulator 5, um das Stückgut 2, 2* in einer Flucht zur Formation Fa zu beabstanden, dieses nicht durch eine Beschleunigung in Transportrichtung TR verschiebt. Stattdessen führt der Manipulator 5 - wie in den Figuren 8 bis 11 dargestellt - eine Rotation um 180° um eine senkrecht zur horizontalen Auflageebene der Horizontalfördereinrichtung 6 ausgebildeten Drehachse aus. Dadurch wird das erfasste Stückgut 2, 2* in einer Zielposition P1 befördert, die sich in einer Flucht beabstandet vor der Formation Fa befindet. Gegebenenfalls wird diese Drehung des Manipulators 5 zusätzlich durch eine Verschiebung des Manipulators 5 in Transportrichtung TR oder entgegen der Transportrichtung TR überlagert, um die definierte Zielposition P1 exakt einzustellen. Gegebenenfalls erfolgt kurzzeitig eine Beschleunigung des Manipulators 5 in Transportrichtung TR bevor die Drehung einsetzt, um einer Kollision des Manipulators 5 und der vom Manipulator erfassten Stückgüter 2, 2* mit den nachfolgenden Stückgütern 2 der Formation Fa zu vermeiden.

Durch die Drehung des Manipulators 5 muss dieser keine oder nur eine geringe Bewegung in oder entgegen zur Transportrichtung TR ausführen. Dies ist vorteilhaft, da der Manipulator diese Wegstrecke anschließend nicht wieder in der Gegenrichtung zurücklegen muss, um weitere Stückgüter 2 aus einer der einlaufenden Formationen Fa, Fb abzugreifen. Ein weiterer Vorteil der 180° Drehung besteht darin, dass der Manipulator 5 bereits in einer Konfiguration vorliegt, in der der Manipulator 5 sofort weitere Stückgüter 2 erfassen kann, ohne dass zuerst eine Rückdrehung in eine Ausgangsstellung erfolgen muss. D.h. im nachfolgenden Verfahrensschritt können nunmehr mit dem Greiferende des Manipulators 5, das im beschriebenen Verfahrensschritt der 180° Drehung unbeladen war, weitere Stückgüter 2 abgegriffen werden. Dieser Aspekt führt ebenfalls zu einer merklichen Zeitersparnis und somit zu einem erhöhten Durchsatz bei der Produktbearbeitung.

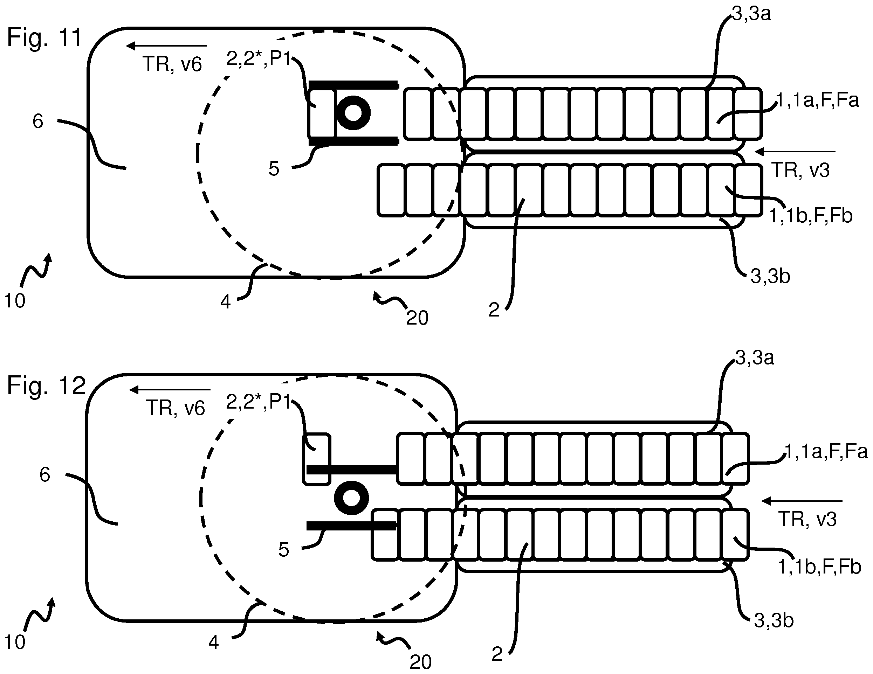

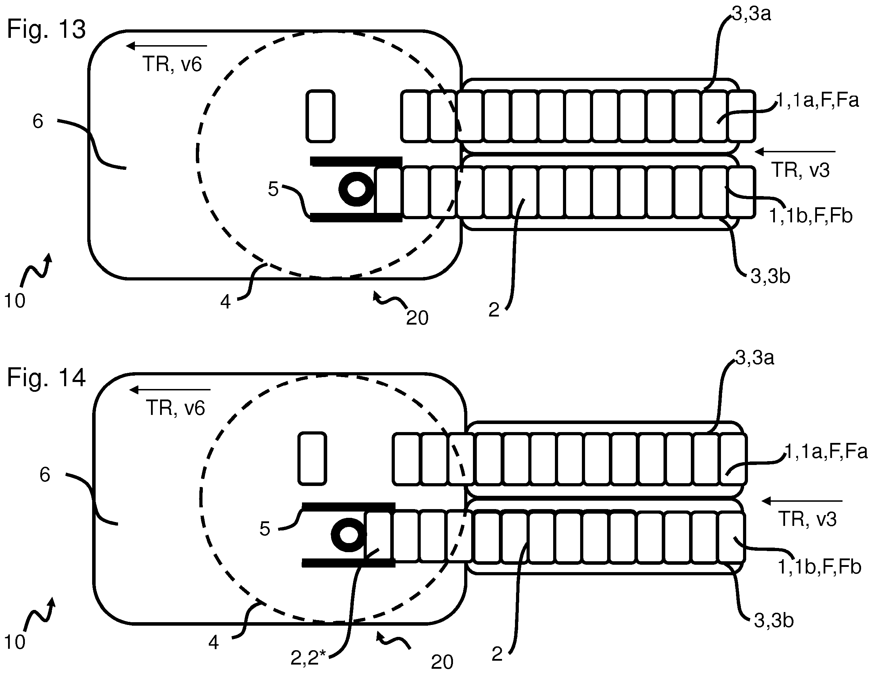

Wie in Figur 12 dargestellt, löst sich der Manipulator 5 von dem an die Zielposition P1 beförderten Stückgut 2*, um nunmehr, wie in den Figuren 13 bis 17 dargestellt, ein Stückgut 2, 2* aus der einlaufenden Formation Fb abzugreifen und dieses unter Drehung um 90° in eine Zielposition P2 und entsprechende Zielausrichtung zu befördern.

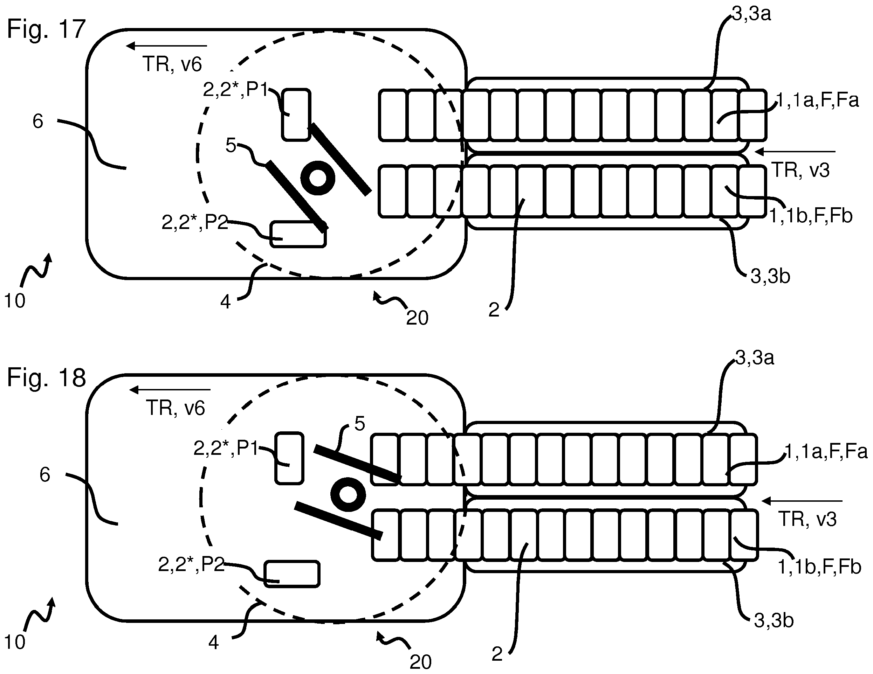

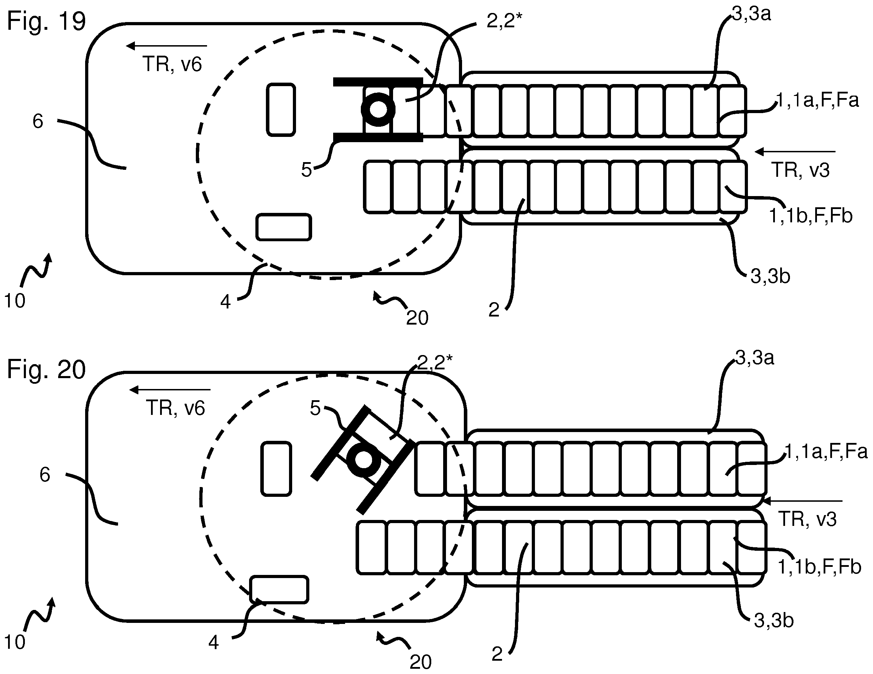

Wie in den Figuren 17 und 18 dargestellt, löst sich der Manipulator 5 von dem an die Zielposition P2 beförderten Stückgut 2*, um nunmehr, wie in den Figuren 19 bis 21 dargestellt, zwei Stückgüter 2, 2* aus der einlaufenden Formation Fa abzugreifen und diese unter Drehung um 90° in eine Zielposition P3 und entsprechende Zielausrichtung zu befördern.

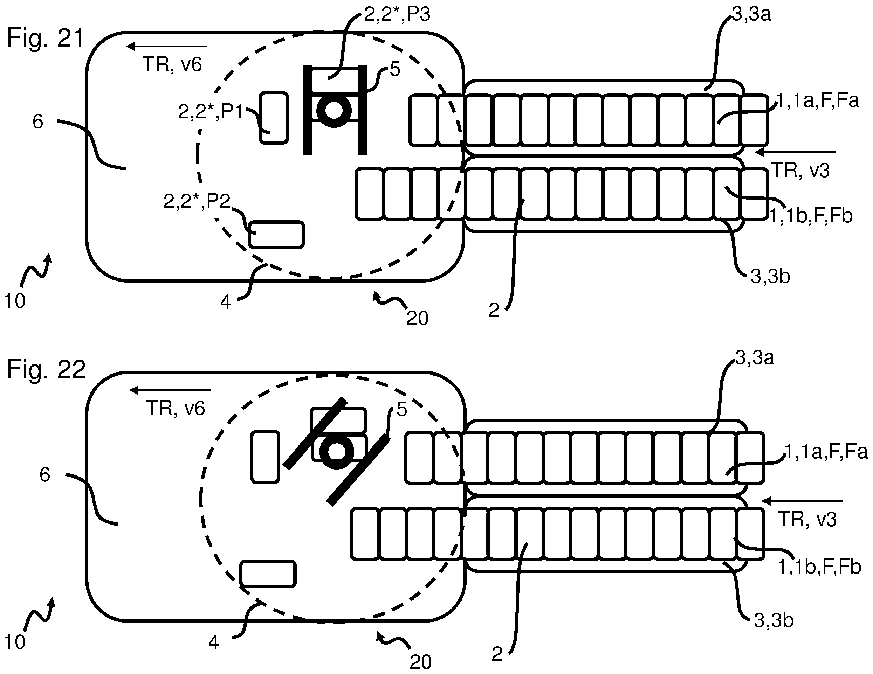

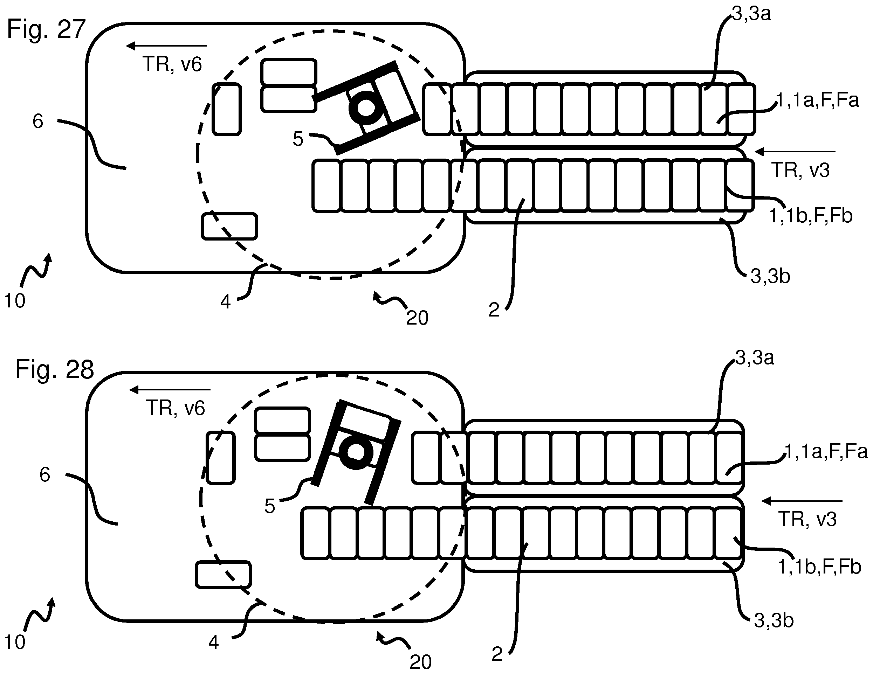

In den Figur 22 bis 26 ist dargestellt, dass sich der Manipulator 5 nunmehr wiederum zu der einlaufenden geschlossenen Formation Fa bewegt und von dieser die vordersten beiden Stückgüter 2, 2* greift und diese gemäß Figuren 27 bis 29 unter Drehung um 90° in eine Zielposition P4 und entsprechende Zielausrichtung auf der Horizontalfördereinrichtung 6 befördert.

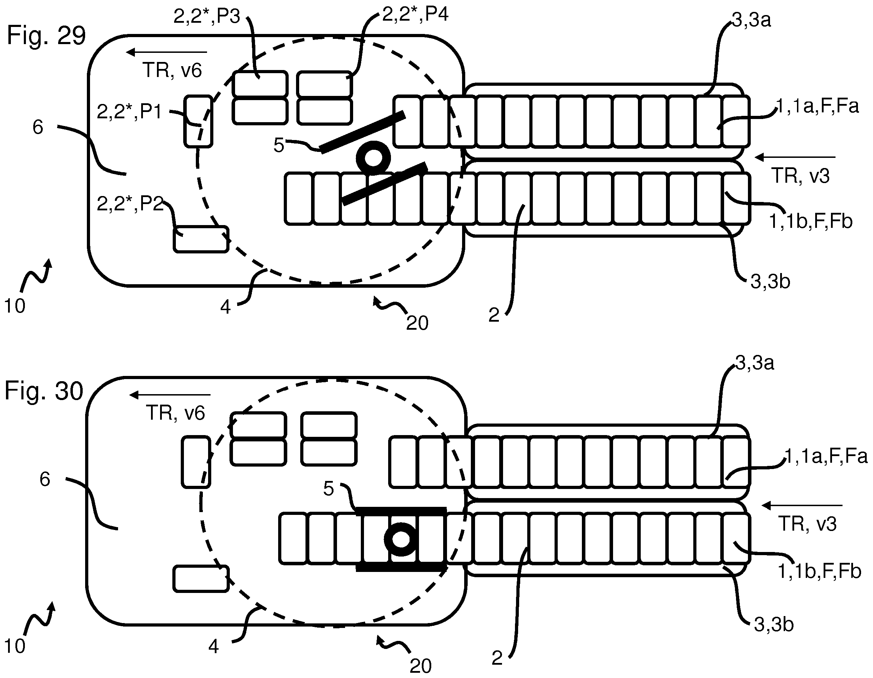

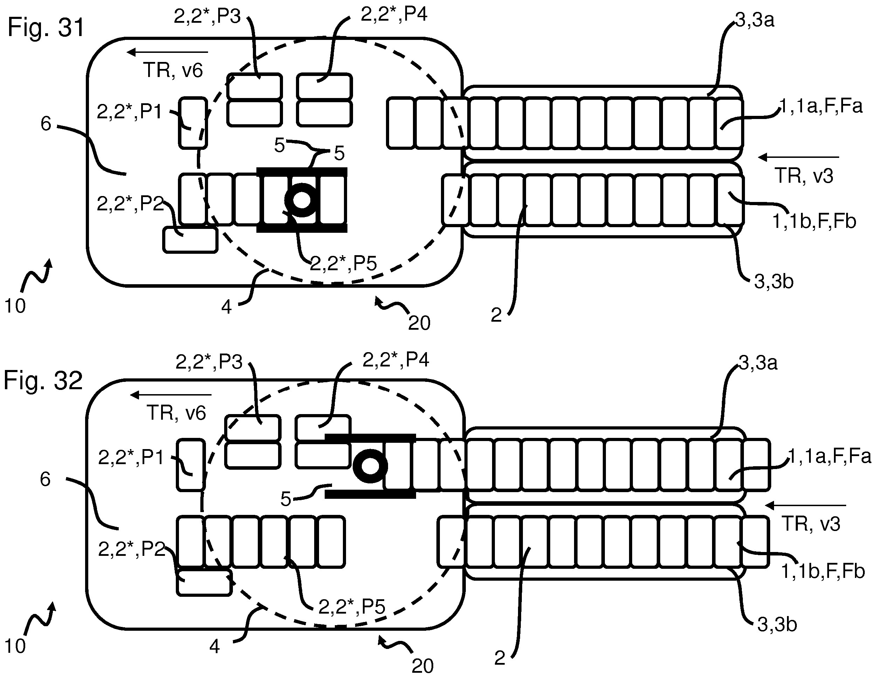

Figuren 30 und 31 stellen nunmehr einen weiteren Manipulationsschritt dar. Hierbei greift der Manipulator 5 nicht die zuvorderst einlaufenden Stückgüter 2 der geschlossenen Formation Fb. Stattdessen erfasst der Manipulator 5 das vierte, fünfte und sechste Stückgut 2 der geschlossenen Formation Fb. Insbesondere eilen den durch den Manipulator 5 erfassten Stückgütern 2* der Formation Fb somit drei weitere Stückgüter 2 voraus. Die drei klemmend durch den Manipulator 5 erfassten Stückgüter 2 werden nun von der geschlossenen Formation Fb räumlich abgetrennt und in eine definierte relative Zielposition P5 und/oder Zielausrichtung gegenüber den nachfolgenden Stückgütern 2 der Formation Fb gebracht. Dabei werden die drei vorauseilenden Stückgüter ebenfalls neu positioniert. In diesem Manipulationsschritt werden also drei Stückgüter 2, 2* vom Manipulator erfasst, aber insgesamt sechs Stückgüter 2, 2* werden in eine Zielposition P5 verschoben, wobei die nicht vom Manipulator 5 erfassten Stückgüter 2 durch einen Oberflächenkontakt zwischen einem vom Manipulator 5 erfassten Stückgut 2* und einem vom Manipulator 5 nicht erfassten Stückgut 2 in die Zielposition P5 geschoben werden.

Die insgesamt sechs Stückgüter 2, 2* gelangen insbesondere durch eine Bewegung in linearer Richtung in die Zielposition P5. Vorzugsweise sind die insgesamt sechs Stückgüter 2, 2* in ihrer Zielposition P5 in einer Flucht zur geschlossenen Formation Fb angeordnet.

Nach Erreichen der Zielposition P5 und Lösen des Manipulators 5 von der Gruppe an erfassten Stückgütern 2*(vergleiche Figur 32), wird der Oberflächenkontakt zwischen dem vom Manipulator 5 erfassten Stückgut 2* und dem vom Manipulator 5 nicht erfassten Stückgut 2 beibehalten.

In den Figur 32 bis 35 ist dargestellt, dass sich der Manipulator 5 nunmehr wiederum zu der einlaufenden geschlossenen Formation Fa bewegt und von dieser das vorderste Stückgut 2, 2* greift und unter Drehung um 90° in eine Zielposition P6 und entsprechende Zielausrichtung auf der Horizontalfördereinrichtung 6 befördert.

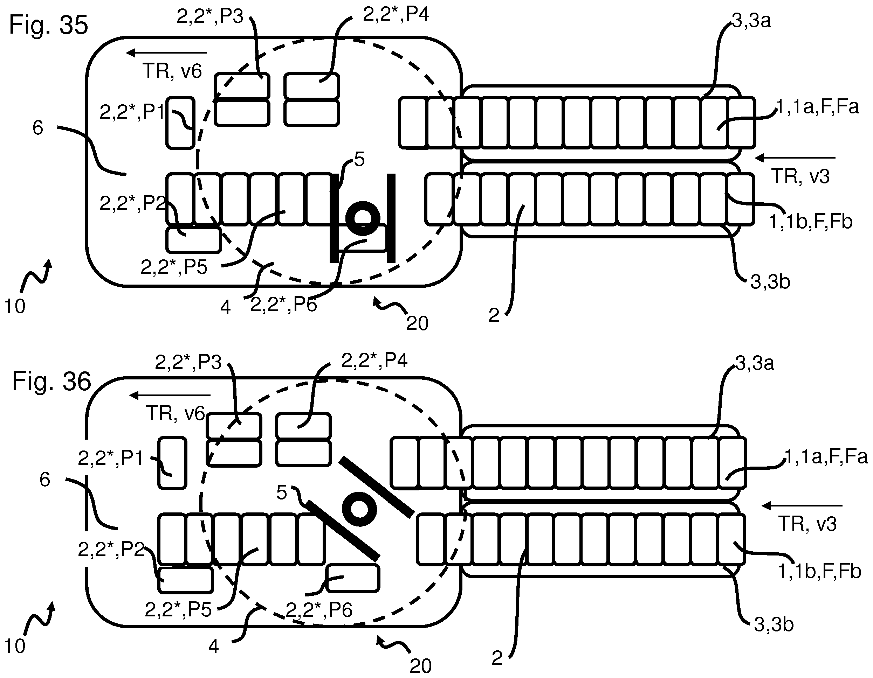

Wie in den Figur 36 bis 39 dargestellt ist, bewegt sich der Manipulator 5 anschließend zu der einlaufenden geschlossenen Formation Fa und greift von dieser das vorderste Stückgut 2, 2*, welches er unter Drehung um 180° in eine Zielposition P7 und entsprechende Zielausrichtung auf der Horizontalfördereinrichtung 6 befördert.

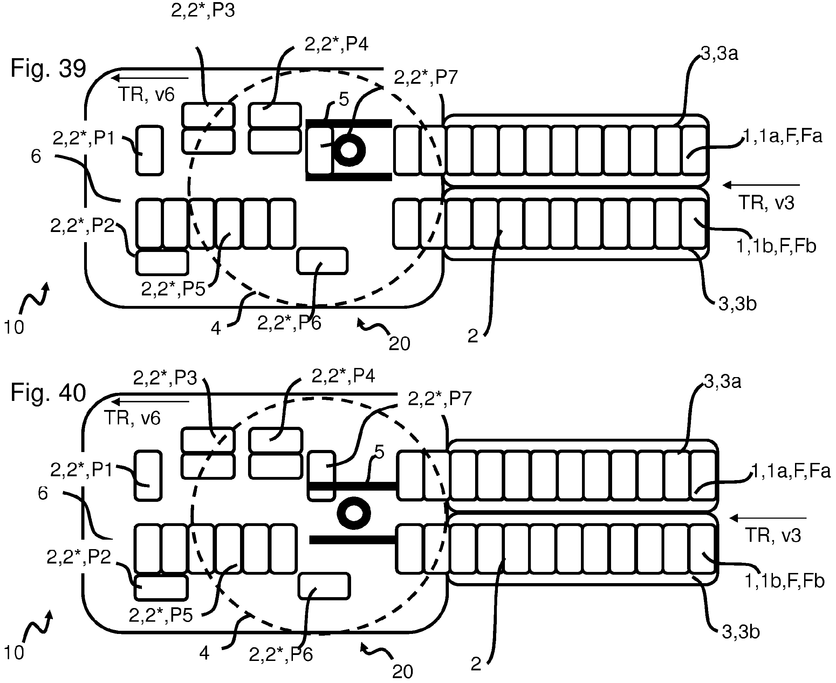

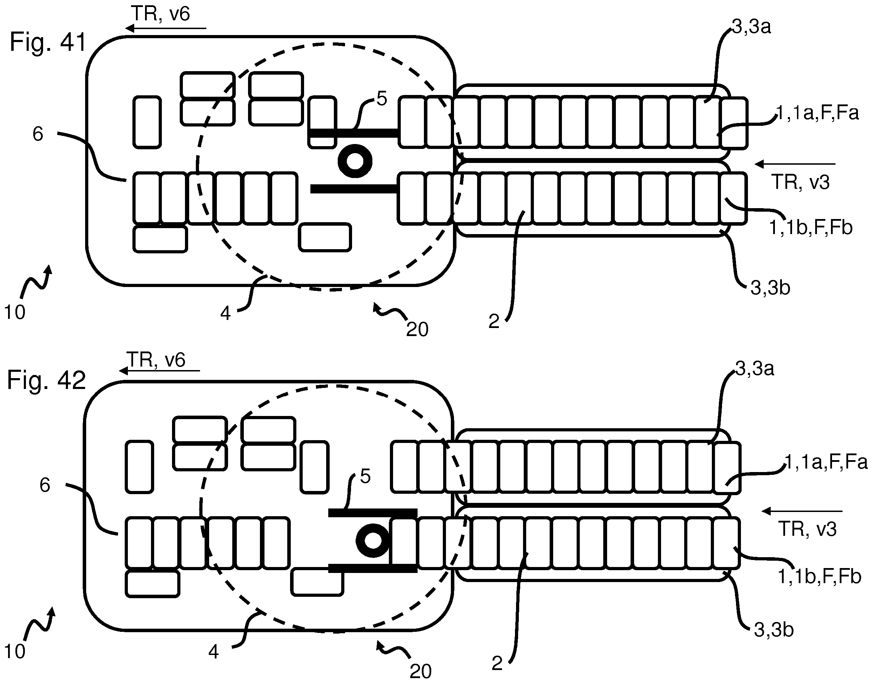

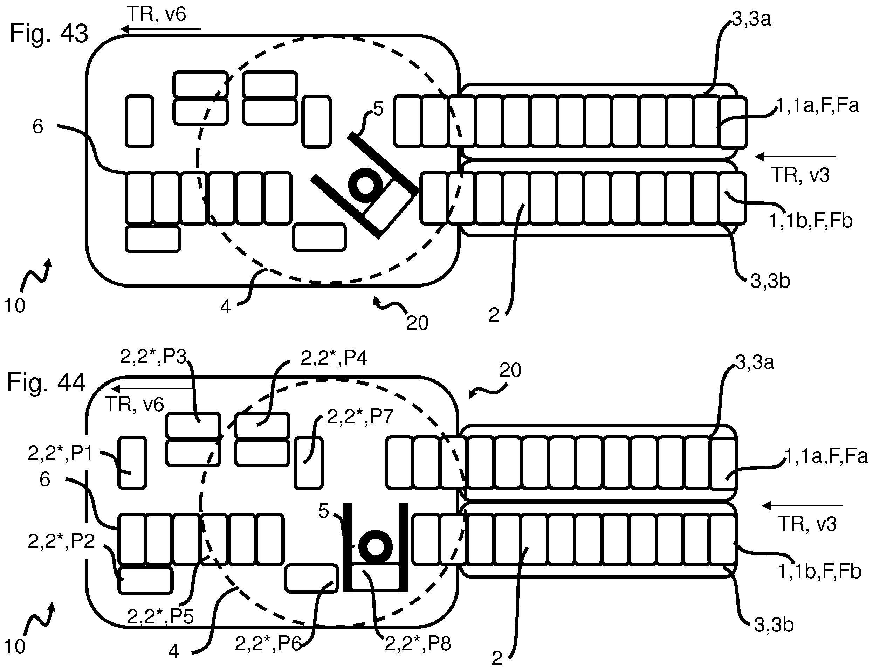

Gemäß Figuren 40, 41 löst sich der Manipulator von dem in Zielposition P7 angeordnetem Stückgut 2* und erfasst gemäß Figur 42 ein weiteres zuvorderst angeordnetes Stückgut 2, 2* der Formation Fb, um dieses unter Drehung um 90° in eine Zielposition P8 und entsprechende Zielausrichtung auf der Horizontalfördereinrichtung 6 zu befördern (vergleiche Figuren 43, 44).

Die in Figur 1 dargestellte Ziellage 12 ist somit weitgehend als lose Anordnung vorbereitet. Durch Zusammenschieben mit geeigneten Schiebern wird in einem nicht dargestellten weiteren Verfahrensschritt die gewünschte geschlossene Lage 12 erzeugt und kann für die weitere Verarbeitung beispielsweise auf eine Palette überführt werden.

Bei den beschriebenen Manipulationsschritten werden die erfassten Stückgüter 2* vorzugsweise jeweils in einem einzigen, insbesondere unterbrechungsfreien, Manipulationsschritt in die Zielposition P1 bis P8 und/oder Zielausrichtung überführt, geschoben und/oder gedreht.

Hierbei kann vorgesehen sein, dass der Manipulator 5 die erfassten Stückgüter 2* beispielsweise anhebt, zu einer Zielposition P1 bis P8 befördert und auf der Horizontalfördereinrichtung 6 innerhalb des Erfassungsbereiches 4 wieder absetzt. Alternativ kann vorgesehen sein, dass der Manipulator 5 die Stückgüter 2* auf der Horizontalfördereinrichtung 6 verschiebt, indem er insbesondere eine Geschwindigkeitskomponente und/oder eine Richtungskomponente auf die abgegriffenen Stückgüter 2* aufbringt. Insbesondere bei dem gleichzeitigen Verschieben von durch den Manipulator 5 erfassten Stückgütern und mindestens einem weiteren mit diesem in Oberflächenkontakt stehenden Stückgut 2 ist im Wesentlichen kein Anheben der erfassten Stückgüter 2* vorgesehen. Stattdessen werden diese nur auf der Horizontalfördereinrichtung 6 verschoben,

Bei den hier beschriebenen Manipulationsschritten ist insbesondere vorgesehen, dass sich der Manipulator 5 zumindest beim Erfassen des / der Stückgüter 2* und bei deren Freigabe in der jeweiligen Zielposition P1 bis P8 und Zielausrichtung mit einer Geschwindigkeit bewegt, die annähernd bzw. exakt der Transportgeschwindigkeit v3 entspricht, mit der sich die geschlossenen Formationen Fa, Fb der Stückgüter 2 bewegen.

Die Zielpositionen P1 bis P8 stellen jeweils eine Relativposition gegenüber der Formation Fa bzw. Fb dar. Da sich die Transporteinrichtungen 3a, 3b und somit die Formationen Fa, Fb mit derselben Geschwindigkeit bewegen wie die Horizontalfördereinrichtung 6, bleibt der relative Abstand zwischen den Stückgütern 2* in ihrer jeweiligen Zielposition P1 bis P8 und einem noch nicht vom Manipulator 5 erfassten Stückgut 2 der Formationen Fa, Fb im weiteren Ablauf immer gleich, obwohl sich alle Stückgüter 2, 2* kontinuierlich weiter bewegen.

In dem Zeitfenster zwischen dem Erfassen von Stückgütern 2* durch den Manipulator 5 und deren Freigabe in der jeweiligen Zielposition P1 bis P8 ist die Geschwindigkeit des Manipulators 5 gegenüber der Transportgeschwindigkeit v3 der Formationen Fa, Fb erhöht. Die Bewegungsrichtung des Manipulators 5 beim Befördern der Stückgüter 2* der Formation F in eine Zielposition P1 bis P8 ergibt sich beispielsweise aus einer ersten Bewegungskomponente parallel zur Transportrichtung TR der Formation Fb und einer zweiten Bewegungskomponente senkrecht zur Transportrichtung TR der Formation F. Dadurch können die vom Manipulator 5 erfassten Stückgüter 2* in eine definierte Zielposition im Erfassungsbereich 4 des Manipulators 5 bewegt werden, die sich in Transportrichtung TR beabstandet vor der Formation F und seitlich verschoben zur Formation F befindet. Ist die zweite Bewegungskomponente senkrecht zur Transportrichtung TR der Formation F gleich Null, dann werden die erfassten Stückgüter 2* in eine Position verschoben, die sich in einer Flucht zur jeweiligen Formation F befindet (vergleiche beispielsweise Figuren 30 und 31).

Weiterhin kann vorgesehen sein, dass sich der Manipulator um einer Drehachse dreht, die senkrecht zur Ebene der Horizontalfördereinrichtung 6 ausgebildet ist und dadurch eine entsprechende Umpositionierung der erfassten Stückgüter 2* bewirkt. In Abhängigkeit davon, ob zusätzliche Bewegungskomponenten auf den Manipulator 5 aufgebracht werden, sind die derart bewegten Stückgüter 2* in einer Flucht zur jeweiligen Formation F angeordnet (vergleiche Figuren 7 bis 11) oder aber seitlich verschoben dazu angeordnet.

Gemäß einer weiteren nicht dargestellten Ausführungsform kann vorgesehen sein, dass der Manipulator 5 nach Verschieben einer Gruppe von erfassten Stückgüter 2, 2* und gleichzeitigem Verschieben mindestens eines vom Manipulator 5 nicht erfassten Stückguts 2, das in Oberflächenkontakt mit einem der vom Manipulator 5 erfassten Stückgüter 2, 2* steht, die Gruppe im Anschluss an den Schiebeschritt weiter umsetzt. Dies kann beispielsweise dadurch ermöglicht werden, dass die erfassten Stückgüter 2, 2* mit einer weiteren Richtungskomponente beispielsweise senkrecht zur Transportrichtung TR der Formation F beaufschlagt wird. Alternativ oder zusätzlich kann eine Rotation des Manipulators 5 eine Drehung der erfassten Stückgüter 2, 2* bewirken, wobei das nicht vom Manipulator 5 erfasste Stückgut 2 diese Drehung nicht mitmacht sondern mit der Geschwindigkeit v6 der Horizontalfördereinrichtung 6 weiter transportiert wird.

Gemäß einer weiteren nicht dargestellten Ausführungsform kann vorgesehen sein, dass der Manipulator 5 nach Verschieben einer Gruppe von erfassten Stückgüter 2* und mindestens einem vom Manipulator 5 nicht erfassten Stückgut 2, das in Oberflächenkontakt mit einem erfassten Stückgut 2* steht, sich von der Gruppe löst, anschließend erneut mindestens ein Stückgut 2, 2* dieser Gruppe erfasst und dieses dreht und/oder gegenüber der Gruppe verschiebt o.ä.

Auch kann ein Manipulator 5 mit erfassten Stückgütern 2* verwendet werden, um mindestens ein bereits in einem vorhergehenden Schritt in einer Zielposition angeordnetes Stückgut 2 durch Oberflächenkontakt zwischen dem vom Manipulator 5 erfassten Stückgut 2* und dem bereits auf der Horizontalfördereinrichtung 6 in einer ersten Zielposition angeordneten Stückgut 2 in eine neue Zielposition zu verschieben. Der Manipulator 5 setzt anschließend das erfasste Stückgut 2* an der neuen Zielposition frei, so dass ein Oberflächenkontakt zwischen dem bereits in einem vorhergehenden Schritt in einer Zielposition angeordnetem Stückgut 2 und dem weiteren Stückgut 2* bestehen bleibt.

Gemäß einer weiteren nicht dargestellten Ausführungsform kann vorgesehen sein, dass der Manipulator 5 in einem ersten Schritt zunächst ein Stückgut 2 bzw. 2* erfasst und in eine erste Position bzw. Zwischenposition bringt, wonach dieses in der Zwischenposition befindliche Stückgut 2 bzw. 2* wahlweise von einem weiteren Stückgut 2 bzw. 2* oder von mehreren weiteren Stückgütern 2, 2* verschoben werden oder auch in der zunächst vom Manipulator 5 vorgegebenen ersten Position oder Zwischenposition verbleiben kann, wonach es bspw. durch erneutes Erfassen mittels des Manipulators 5 in die schließlich vorgegebene definierte Zielposition P1, P2, P3, P4, P5, P6, P7, P8 und/oder -ausrichtung gebracht werden kann. Zwischen dem Absetzen dieses Stückgutes 2 bzw. 2* und seinem erneuten Erfassen und Umsetzen, um die Zielposition P1, P2, P3, P4, P5, P6, P7, P8 zu erreichen, kann der Manipulator 5 bspw. andere Stückgüter 2, 2* erfassen, verschieben, verdrehen etc. oder auch weitere Stückgüter 2, 2* durch die zwischenzeitlich erfassten und/oder gegriffenen Stückgüter 2, 2* verschieben.

In gleicher Weise können gleichzeitig mehrere Stückgüter 2, 2* zunächst in die erste Position bzw. Zwischenposition gebracht und durch erneutes Erfassen mittels des Manipulators 5 in die jeweilige definierte Zielposition P1, P2, P3, P4, P5, P6, P7, P8 und/oder -ausrichtung gebracht werden. Auch hierbei ist es denkbar, dass der Manipulator 5 zwischen dem Absetzen dieser Stückgüter 2 bzw. 2* und ihrem erneuten Erfassen und Umsetzen, um für sie die jeweiligen Zielpositionen P1, P2, P3, P4, P5, P6, P7, P8 zu erreichen, andere Stückgüter 2, 2* erfassen, verschieben, verdrehen etc. oder auch weitere Stückgüter 2, 2* unter Verwendung der zwischenzeitlich erfassten und/oder gegriffenen Stückgüter 2, 2* verschieben kann.

Gemäß einer weiteren nicht dargestellten Ausführungsform des Verfahrens kann vorgesehen sein, dass wenigstens ein vom Manipulator 5 erfasstes Stückgut 2 zum Verschieben wenigstens eines weiteren Stückgutes 2 in eine auf dieses weitere Stückgut 2 bezogene definierte Zielposition P1, P2, P3, P4, P5, P6, P7, P8 und/oder -ausrichtung eingesetzt und anschließend das weiterhin im Manipulator befindliche Stückgut 2 in seine jeweilige definierte Zielposition P1, P2, P3, P4, P5, P6, P7, P8 und/oder -ausrichtung gebracht wird. Wahlweise kann das Verfahren auch vorsehen, dass gleichzeitig mehrere Stückgüter 2 vom Manipulator 5 erfasst und zum Verschieben eines weiteren Stückgutes 2 bzw. weiterer Stückgüter 2 in seine jeweilige definierte Zielposition P1, P2, P3, P4, P5, P6, P7, P8 und/oder -ausrichtung bzw. in deren jeweiligen definierten Zielpositionen P1, P2, P3, P4, P5, P6, P7, P8 und/oder -ausrichtungen eingesetzt und anschließend die weiterhin im Manipulator befindlichen Stückgüter 2 in ihre jeweilige definierten Zielpositionen P1, P2, P3, P4, P5, P6, P7, P8 und/oder -ausrichtungen gebracht werden. Diese Verfahrensvariante ermöglicht es, mittels gegriffenen Stückgütern 2 weitere Stückgüter 2 zu schieben und anschließend die gegriffenen Stückgüter 2 ohne Umsetzen oder Freigeben direkt in ihre jeweiligen Zielpositionen bzw. -ausrichtungen zu bringen.

Während der Positionierung der vom Manipulator 5 erfassten Stückgüter 2* werden die mindestens eine Transporteinrichtung 3 und die Horizontalfördereinrichtung 6 weiterhin konstant betrieben.

Die Geschwindigkeit v3, v6 ist dabei so gewählt, dass der Manipulator 5 innerhalb des ihm zur Verfügung stehenden Arbeitsbereichs ausreichend Zeit hat, um die Stückgüter 2* zu verschieben. Bevorzugt besteht der Manipulator 5 aus einem Deltakinematik- Roboter, um hoch dynamische Verschiebebewegungen zu realisieren und möglichst schnelle Taktzeiten zu ermöglichen.

Bei dem hier beschriebenen Verfahren werden die Gruppen an Stückgütern 2* gemäß der zu bildenden Gruppierung, Teillage oder Lage während des Gruppier- / Positionierprozesses gebildet. Insbesondere ist die Gruppenbildung und Positionierung im Rahmen eines einzigen Verfahrensschrittes und vermittels einer einzigen entsprechenden Vorrichtung (insbesondere der beweg-, verschieb- und/oder rotierbare Manipulator 5 als Teil der Vorrichtung) möglich. Dies stellt einen wesentlichen Unterschied zum Stand der Technik dar, bei dem beispielsweise durch die Anordnung geeigneter Fördermittel, die mit jeweils unterschiedlichen Geschwindigkeiten angetrieben werden, erst eine Gruppenbildung erfolgt, die anschließend in einem weiteren Verfahrensschritt entsprechend der zu bildenden Lage positioniert und/oder gedreht werden.

Insbesondere werden hier mindestens zwei parallele Reihen 1a, 1b von Stückgütern 2 kontinuierlich einem aus dem beweg-, verschieb- und/oder rotierbaren Manipulator 5 und Horizontalfördereinrichtung 6 bestehenden Gruppiermodul 20 zugeführt. Der Manipulator 5 arbeitet die Stückgüter 2 der einlaufenden Formationen Fa, Fb beispielsweise sequenziell ab, in dem er abwechselnd einzelne Stückgüter 2, 2* oder Gruppen von Stückgütern 2, 2* der Formationen Fa, Fb erfasst und in ihre Zielpositionen P1 bis P8 befördert. Alternativ kann auch vorgesehen sein, dass der Manipulator zweimal hintereinander von einer der Formationen Fa oder Fb jeweils mindestens ein Stückgut 2, 2* erfasst, abtrennt und zur Zielposition P1 bis P8 und / oder Zielausrichtung befördert. Dies führt zu einer deutlichen Erhöhung des Durchsatzes bei gleichzeitig kompakter Bauweise.

Wenn im vorliegenden Fall bzw. generell im Zusammenhang der vorliegenden Erfindung generalisierend von einem Manipulator 5 die Rede ist, kann es sich konkret bei dem zur Überführung des mindestens einen Stückgutes 2, 2*, 2a in die Zielposition P, Pa und/oder Zielausrichtung vorgesehenen Teil des Manipulators 5 beispielsweise um einen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. Gestellfest gelagert sein können. Eine solche - auch als Parallelkinematik-Anordnung bekannte - Manipulatoraufhängung bzw. Manipulatoranordnung ermöglicht die gewünschte Beweglichkeit des Kopfes (auch: des Manipulators), der die Stückgüter 2, 2*, 2a in der gewünschten Weise erfassen, verschieben, positionieren, platzieren, drehen etc. kann, um die jeweiligen Zielpositionen P, Pa und/oder Zielausrichtungen für die Stückgüter 2, 2*, 2a anfahren zu können. Ebenso denkbar sind jedoch auch andere geeignete Manipulatorkonfigurationen, bspw. solche mit Portalroboter-Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

**Bezugszeichenliste**

| 1,1a,1b | Reihe |
|---------|-------|
| 2,2* | Stückgut |
| 3,3a,3b | Transporteinrichtung |
| 4 | Erfassungsbereich |
| 5 | Manipulator |
| 6 | Horizontalfördereinrichtung |
| 8 | Flasche |
| 9 | Schrumpffolie |
| 10 | Handhabungsvorrichtung |
| 12 | Lage |
| 20 | Gruppiermodul |
| F,Fa,Fb | Formation |
| P1 bis P8 | Zielposition |
| TR | Transportrichtung |
| v3 | Transportgeschwindigkeit |
| v6 | Geschwindigkeit |

**Patentansprüche**

1. Verfahren zum Umgang mit in mindestens einer Reihe (1) hintereinander bewegten Stückgütern (2), bei dem

    - in einer Reihe (1) ohne Abstände oder mit minimalen Abständen unmittelbar aufeinanderfolgende Stückgüter (2) als geschlossene Formation (F) transportiert werden und
    - wenigstens ein transportiertes Stückgut (2) aus der geschlossenen Formation (F) klemmend erfasst, von der geschlossenen Formation (F) räumlich abgetrennt und in eine definierte relative Zielposition (P1, P2, P3, P4, P5, P6, P7, P8) und/oder Zielausrichtung gegenüber nachfolgenden Stückgütern (2) gebracht wird,

    **dadurch gekennzeichnet, dass**

    - dem wenigstens einen Stückgut (2) bei klemmender Erfassung mindestens ein weiteres nicht erfasstes und/oder aus der geschlossenen Formation (F) nicht abgetrenntes Stückgut (2) vorauseilt, und wobei

- hieraus resultierend mit dem wenigstens einen klemmend erfassten Stückgut (2) gemeinsam das mindestens eine weitere nicht erfasste Stückgut (2) in eine jeweilige mindestens eine weitere Zielposition (P1, P2, P3, P4, P5, P6, P7, P8) und/oder Zielausrichtung geschoben wird.

2. Verfahren nach Anspruch 1, bei dem das wenigstens eine Stückgut (2) durch eine Bewegung in linearer Richtung in die Zielposition (P1, P2, P3, P4, P5, P6, P7, P8) und/oder Zielausrichtung gelangt, wobei hierbei das mindestens eine weitere Stückgut (2) in ungefähr übereinstimmender, insbesondere in weitgehend oder exakt identischer linearer Richtung in die mindestens eine weitere Zielposition (P1, P2, P3, P4, P5, P6, P7, P8) und/oder Zielausrichtung geschoben wird.

3. Verfahren nach Anspruch 2, bei welchem die lineare Richtung und eine Transportrichtung (TR) der geschlossenen Formation (F) miteinander fluchten.

4. Verfahren nach einem der Ansprüche 1 bis 3, bei dem das mindestens eine weitere Stückgut (2) unter zumindest temporär aufrechterhaltenem Oberflächenkontakt vom wenigstens einen Stückgut (2) in die mindestens eine weitere Zielposition (P1, P2, P3, P4, P5, P6, P7, P8) und/oder Zielausrichtung geschoben wird.

5. Verfahren nach Anspruch 4, bei dem das wenigstens eine Stückgut (2) und das mindestens eine weitere Stückgut (2) ihren Oberflächenkontakt nach Erreichen der Zielposition (P1, P2, P3, P4, P5, P6, P7, P8) und/oder Zielausrichtung beibehalten oder zumindest in engem Abstand zueinander verbleiben.

6. Verfahren nach einem der Ansprüche 1 bis 5, bei dem zwei oder mehr als zwei hintereinander transportierte Stückgüter (2) aus der geschlossenen Formation (F) erfasst, gemeinsam räumlich abgetrennt und in eine definierte relative Zielposition (P1, P2, P3, P4, P5, P6, P7, P8) und/oder Zielausrichtung gegenüber nachfolgenden Stückgütern (2) gebracht werden und hieraus resultierend mit den zwei oder mehr als zwei hintereinander transportierten Stückgütern (2) gemeinsam das mindestens eine weitere Stückgut (2) in eine jeweilige weitere Zielposition (P1, P2, P3, P4, P5, P6, P7, P8) und/oder Zielausrichtung geschoben wird.

7. Verfahren nach einem der Ansprüche 1 bis 6, bei dem ein in einem ersten Schritt mittels des Manipulators (5) bereits erfasstes und in eine erste Position bzw. Zwischenposition gebrachtes Stückgut (2) und/oder durch Verschieben mittels eines weiteren Stückgutes in die erste Position bzw. Zwischenposition gebrachtes Stückgut (2) durch erneutes Erfassen mittels des Manipulators (5) in die definierte Zielposition (P1, P2, P3, P4, P5, P6, P7, P8) und/oder Zielausrichtung gebracht wird.

8. Verfahren nach Anspruch 7, bei dem gleichzeitig mehrere Stückgüter (2) zunächst in die erste Position bzw. Zwischenposition gebracht und durch erneutes Erfassen mittels des Manipulators (5) in die jeweilige definierte Zielposition (P1, P2, P3, P4, P5, P6, P7, P8) und/oder Zielausrichtung gebracht werden.

9. Verfahren nach einem der Ansprüche 1 bis 6, bei dem wenigstens ein vom Manipulator (5) erfasstes Stückgut (2) zum Verschieben wenigstens eines weiteren Stückgutes (2) in eine auf dieses weitere Stückgut (2) bezogene definierte Zielposition (P1, P2, P3, P4, P5, P6, P7, P8) und/oder Zielausrichtung eingesetzt und anschließend das weiterhin im Manipulator befindliche Stückgut (2) in seine jeweilige definierte Zielposition (P1, P2, P3, P4, P5, P6, P7, P8) und/oder Zielausrichtung gebracht wird.

10. Verfahren nach Anspruch 9, bei dem gleichzeitig mehrere Stückgüter (2) vom Manipulator (5) erfasst und zum Verschieben eines weiteren Stückgutes (2) bzw. weiterer Stückgüter (2) in seine jeweilige definierte Zielposition (P1, P2, P3, P4, P5, P6, P7, P8) und/oder Zielausrichtung bzw. in deren jeweilige definierte Zielpositionen (P1, P2, P3, P4, P5, P6, P7, P8) und/oder Zielausrichtungen eingesetzt und anschließend die weiterhin im Manipulator (5) befindlichen Stückgüter (2) in ihre jeweilige definierten Zielpositionen (P1, P2, P3, P4, P5, P6, P7, P8) und/oder Zielausrichtungen gebracht werden.

11. Verfahren nach einem der Ansprüche 1 bis 10, bei welchem dem wenigstens einen erfassten Stückgut (2) und dem mindestens einen weiteren Stückgut (2) gegenüber einer Transportgeschwindigkeit (v3) der geschlossenen Formation (F) wenigstens eine weitere Geschwindigkeitskomponente aufgeprägt wird.

12. Verfahren nach einem der Ansprüche 1 bis 11, bei dem zeitlich aufeinanderfolgend mehrmals wenigstens ein transportiertes Stückgut (2) aus der geschlossenen Formation (F) klemmend erfasst, von der geschlossenen Formation (F) räumlich abgetrennt und in eine jeweilige definierte relative Zielposition (P1, P2, P3, P4, P5, P6, P7, P8) und/oder Zielausrichtung gegenüber nachfolgenden Stückgütern (2) gebracht wird, woraus resultierend aus mehreren Stückgütern (2) eine Gruppierung für eine palettierfähige Lage (12) oder Teillage gebildet wird.

**13.** Vorrichtung (10) zur Durchführung eines Verfahrens zum Umgang mit in mindestens einer Reihe (1) hintereinander bewegten Stückgütern (2) nach einem der Ansprüche 1 bis 12, umfassend

- mindestens einen Manipulator (5) für Stückgüter (2),
- wenigstens eine Transporteinrichtung (3), über welche unmittelbar aufeinanderfolgende Stückgüter (2) der Reihe (1) annähernd ohne Beabstandung als geschlossene Formation (F) in einen Erfassungsbereich (4) des mindestens einen Manipulators (5) transportierbar sind,

**dadurch gekennzeichnet, dass** die Vorrichtung umfasst:

- eine Steuerungseinrichtung zum Ansteuern des Manipulators (5),
- wobei der mindestens eine Manipulator (5) zum klemmenden Entgegennehmen sowie zum Abtrennen und Überführen in eine Zielposition (P1, P2, P3, P4, P5, P6, P7, P8) und/oder Zielausrichtung mindestens eines Stückgutes (2) aus der mittels der wenigstens einen Transporteinrichtung (3) in seinen Erfassungsbereich (4) transportieren geschlossenen Formation (F) ausgebildet ist,
- und wobei der mindestens eine Manipulator (5) zum Erfassen wenigstens eines einem zuvorderst angeordneten Stückgut (2) der geschlossenen Formation (F) nacheilenden Stückgutes (2) ausgebildet ist, so dass der mindestens eine Manipulator (5) das zuvorderst angeordnete Stückgut (2) ohne Erfassung belässt,
- und wobei der mindestens eine Manipulator (5) zum Schieben des zuvorderst angeordneten, nicht vom Manipulator (5) klemmend erfassten Stückgutes (2) in eine jeweilige für das zuvorderst angeordnete Stückgut (2) vorgesehene Zielposition (P1, P2, P3, P4, P5, P6, P7, P8) und/oder Zielausrichtung ausgebildet ist.

**14.** Vorrichtung (10) nach Anspruch 13, bei welcher der mindestens eine Manipulator (5) als Parallelkinematik-Roboter ausgebildet oder Teil eines solchen ist.

**15.** Vorrichtung (10) nach Anspruch 13 oder 14, umfassend eine Steuerungseinrichtung, über welche der mindestens eine Manipulator (5) zum klemmenden Erfassen des mindestens einen Stückgutes (2), zum räumlichen Abtrennen des mindestens einen Stückgutes (2) von der geschlossenen Formation (F) sowie zum Bringen des mindestens einen Stückgutes (2) in die definierte Zielposition (P1, P2, P3, P4, P5, P6, P7, P8) und/oder Zielausrichtung ansteuerbar ist, wobei die Steuerungseinrichtung Informationen zu einer aus einer Vielzahl an Stückgütern (2) zu bildenden Gruppierung für eine palettierfähige Lage (12) aufweist bzw. abgespeichert hat, und wobei die jeweiligen Zielpositionen (P1, P2, P3, P4, P5, P6, P7, P8) und/oder Zielausrichtungen der Stückgüter (2) einen Teil der Informationen bilden und dem jeweiligen mindestens einen Stückgut (2) sowie dem jeweiligen zuvorderst angeordneten Stückgut (2) eine jeweilige bestimmte Lage (12) und/oder relative Orientierung in der jeweiligen Gruppierung zuordnen.

**Claims**

**1.** A method used to handle piece goods (2) being moved one after another in at least one row (1), in which method

- immediately consecutive piece goods (2) in a row (1) without spaces or with minimal spaces are transported as closed formation (F), and
- at least one transported piece good (2) is seized in a clamping manner from the closed formation (F), is spatially separated from the closed formation (F), and is brought into a defined relative target position (P1, P2, P3, P4, P5, P6, P7, P8) and/or target alignment in relation to subsequent piece goods (2),
**characterised in that**
- the at least one piece good (2), while it is seized in a clamping manner, is preceded by at least one further non-seized piece good (2) and/or one further piece good (2) that has not been separated from the closed formation, and wherein
- resulting herefrom, the at least one further non-seized piece good (2) is pushed together with the at least one piece good (2) seized in a clamping manner into a particular at least one further target position (P1, P2, P3, P4, P5, P6, P7, P8) and/or target alignment.

**2.** The method according to claim 1, in which the at least one piece good (2) reaches the target position (P1, P2, P3, P4, P5, P6, P7, P8) and/or target alignment by a movement in linear direction, wherein the at least one further piece good (2) is in this context pushed into the at least one further target position (P1, P2, P3, P4, P5, P6, P7, P8) and/or target alignment in an approximately corresponding, in particular, in a largely or exactly identical, linear direction.

**3.** The method according to claim 2, in which the linear direction and a transport direction (TR) of the closed formation (F) are aligned with each other.

**4.** The method according to one of the claims 1 to 3, in which the at least one further piece good (2) is pushed into the at least one further target position (P1, P2, P3, P4, P5, P6, P7, P8) and/or target alignment by the at least one piece good (2) under at least temporarily maintained surface contact.

5. The method according to claim 4, in which the at least one piece good (2) and the at least one further piece good (2) retain their surface contact or at least remain closely spaced apart from one another after reaching the target position (P1, P2, P3, P4, P5, P6, P7, P8) and/or target alignment.

6. The method according to one of the claims 1 to 5, in which two or more than two consecutively transported piece goods (2) are seized from the closed formation (F), are spatially separated together, and are brought into a defined relative target position (P1, P2, P3, P4, P5, P6, P7, P8) and/or target alignment in relation to subsequent piece goods (2), and resulting herefrom, the at least one further piece good (2) is pushed together with the two or more than two consecutively transported piece goods (2) into a particular further target position (P1, P2, P3, P4, P5, P6, P7, P8) and/or target alignment.

7. The method according to one of the claims 1 to 6, in which a piece good (2), which has already been seized by a manipulator (5) in a first step and has been brought into a first position or intermediate position, as applicable, and/or a piece good (2), which has been brought into the first position or intermediate position, as applicable, by being shifted by a further piece good (2), is brought into the defined target position (P1, P2, P3, P4, P5, P6, P7, P8) and/or target alignment by being seized again by the manipulator (5).

8. The method according to claim 7, in which a plurality of piece goods (2) are first brought simultaneously into the first position or intermediate position, as applicable, and brought into the particular defined target position (P1, P2, P3, P4, P5, P6, P7, P8) and/or target alignment by being seized again by the manipulator (5).

9. The method according to one of the claims 1 to 6, in which at least one piece good (2) seized by the manipulator (5) is used for shifting at least one further piece good (2) into a defined target position (P1, P2, P3, P4, P5, P6, P7, P8) and/or target alignment associated with this further piece good (2), and the piece good (2) still located in the manipulator is subsequently brought into the particular defined target position (P1, P2, P3, P4, P5, P6, P7, P8) and/or target alignment of the piece good (2).

10. The method according to claim 9, in which a plurality of piece goods (2) are seized simultaneously by the manipulator (5) and are used to shift a further piece good (2) or further piece goods (2), as applicable, into the particular defined target position (P1, P2, P3, P4, P5, P6, P7, P8) and/or target alignment of the piece good (2) or into the particular defined target positions (P1, P2, P3, P4, P5, P6, P7, P8) and/or target alignments of the piece goods (2), as applicable; and the piece goods (2) still located in the manipulator (5) are subsequently brought into their particular defined target positions (P1, P2, P3, P4, P5, P6, P7, P8) and/or target alignments.

11. The method according to one of the claims 1 to 10, in which at least one further velocity component in relation to a transport speed (v3) of the closed formation (F) is imparted to the at least one seized piece good (2) and to the at least one further piece good (2).

12. The method according to one of the claims 1 to 11, in which at least one transported piece good (2) is seized in a clamping manner from the closed formation (F), is spatially separated from the closed formation (F), and is brought into a particular defined relative target position (P1, P2, P3, P4, P5, P6, P7, P8) and/or target alignment in relation to subsequent piece goods (2), these steps being repeated a number of times in succession, with the result that a grouping for a palletizable layer (12) or partial layer is formed from a plurality of piece goods (2).

13. An apparatus (10) used to carry out a method according to one of the claims 1 to 12 used to handle piece goods (2) being moved one after another in at least one row (1), the apparatus (10) comprising

- at least one manipulator (5) for piece goods (2),
- at least one transport device (3) via which immediately consecutive piece goods (2) of the row (1) are transportable nearly without spaces as closed formation (F) into a seizing range (4) of the at least one manipulator (5),
**characterised in that** the apparatus comprises:
- a control device used to control the manipulator (5),
- wherein the at least one manipulator (5) is designed to receive at least one piece good (2) in a clamping manner, as well as to separate and transfer the at least one piece good (2) transported into the seizing range (4) of the manipulator (5) by the at least one transport device (3) from the closed formation (F) into a target position (P1, P2, P3, P4, P5, P6, P7, P8) and/or target alignment,
- and wherein the at least one manipulator (5) is designed to seize at least one piece good (2) succeeding the foremost arranged piece good (2) of the closed formation (F) such that the at least one manipulator (5) leaves the foremost arranged piece good (2) unseized,

- and wherein the at least one manipulator (5) is designed to push the foremost arranged piece good (2), which is not seized in a clamping manner by the manipulator (5), into a particular target position (P1, P2, P3, P4, P5, P6, P7, P8) and/or target alignment provided for the foremost arranged piece good (2).

14. The apparatus (10) according to claim 13, in which the at least one manipulator (5) is designed as parallel kinematic robot (42) or as a part thereof.

15. The apparatus (10) according to claim 13 or 14, comprising a control device via which the at least one manipulator (5) is controllable to seize the at least one piece good (2) in a clamping manner, to spatially separate the at least one piece good (2) from the closed formation (F), as well as to bring the at least one piece good (2) into the defined target position (P1, P2, P3, P4, P5, P6, P7, P8) and/or target alignment, wherein the control device has information or has information stored, as applicable, on a grouping to be formed from a multitude of piece goods (2) for a palletizable layer (12), and wherein the particular target positions (P1, P2, P3, P4, P5, P6, P7, P8) and/or target alignments of the piece goods (2) form a part of the information and assign a specific layer (12) and/or relative orientation in the particular grouping to the particular at least one piece good (2) as well as to the particular foremost arranged piece good (2).

**Revendications**

1. Procédé de manipulation de produits de détail (2) déplacés les uns derrière les autres en au moins une rangée (1), dans lequel

- des produits de détail (2) qui se suivent directement sans intervalles ou à intervalles minimaux sont transportés en tant que formation fermée (F), et
- au moins un produit de détail (2) transporté est saisi par serrage dans la formation fermée (F), est séparé spatialement de la formation fermée (F) et est amené dans une position cible (P1, P2, P3, P4, P5, P6, P7, P8) et/ou orientation cible relative(s) définie(s) par rapport à des produits de détail (2) suivants,
**caractérisé par le fait que**
- au moins un autre produit de détail (2) non pas saisi par serrage et/ou non pas séparé spatialement de la formation fermée (F) est situé en amont dudit au moins un produit de détail (2) lorsqu'il est saisi par serrage, et dans lequel,
- en résultant, ledit au moins un autre produit de détail (2) non pas saisi est poussé conjointement avec ledit au moins un produit de détail (2) saisi par serrage, dans au moins une autre position cible (P1, P2, P3, P4, P5, P6, P7, P8) et/ou orientation cible respective(s).

2. Procédé selon la revendication 1, dans lequel ledit au moins un produit de détail (2) atteint la position cible (P1, P2, P3, P4, P5, P6, P7, P8) et/ou l'orientation cible par un mouvement dans une direction linéaire, dans lequel, ce faisant, ledit au moins un autre produit de détail (2) est poussé dans ladite au moins une autre position cible (P1, P2, P3, P4, P5, P6, P7, P8) et/ou orientation cible dans une direction linéaire à peu près concordante, en particulier dans une large mesure identique ou exactement identique.

3. Procédé selon la revendication 2, dans lequel la direction linéaire et une direction de transport (TR) de la formation fermée (F) sont alignées l'une sur l'autre.

4. Procédé selon l'une quelconque des revendications 1 à 3, dans lequel ledit au moins un autre produit de détail (2) est poussé par ledit au moins un produit de détail (2) dans ladite au moins une autre position cible (P1, P2, P3, P4, P5, P6, P7, P8) et/ou orientation cible tout en maintenant au moins temporairement le contact de surface.

5. Procédé selon la revendication 4, dans lequel ledit au moins un produit de détail (2) et ledit au moins un autre produit de détail (2) maintiennent leur contact de surface après avoir atteint la position cible (P1, P2, P3, P4, P5, P6, P7, P8) et/ou l'orientation cible, ou au moins restent à distance proche l'un de l'autre.

6. Procédé selon l'une quelconque des revendications 1 à 5, dans lequel deux ou plus de deux produits de détail (2) transportés les uns derrière les autres sont saisis dans la formation fermée (F), sont séparées en commun spatialement et sont amenés dans une position cible (P1, P2 P3, P4, P5, P6, P7, P8) et/ou orientation cible relative(s) définie(s) par rapport à des produits de détail (2) suivants, et, en résultant, ledit au moins un autre produit de détail (2) est poussé conjointement avec les deux ou plus de deux produits de détail (2) transportés les uns derrière les autres, dans une autre position cible (P1, P2, P3, P4, P5, P6, P7, P8) et/ou orientation cible respective(s).

7. Procédé selon l'une quelconque des revendications 1 à 6, dans lequel un produit de détail (2) déjà saisi dans une première étape de manipulation au moyen du manipulateur (5) et amené dans une première position ou bien position intermédiaire et/ou un produit de détail (2) amené dans la première position ou bien position intermédiaire en étant déplacé au moyen d'un autre produit de détail (2) est amené dans la position cible (P1, P2, P3, P4, P5, P6, P7, P8) et/ou orientation cible définie(s) en étant saisi une nouvelle fois au moyen du manipulateur (5).

8. Procédé selon la revendication 7, dans lequel plusieurs produits de détail (2) sont amenés simultanément d'abord dans la première position ou bien position intermédiaire et sont amenés dans la position cible (P1, P2, P3, P4, P5, P6, P7, P8) et/ou orientation cible définie(s) respective(s) en étant saisis une nouvelle fois au moyen du manipulateur (5).

9. Procédé selon l'une quelconque des revendications 1 à 6, dans lequel au moins un produit de détail (2) saisi par le manipulateur (5) est utilisé pour déplacer au moins un autre produit de détail (2) dans une position cible (P1, P2, P3, P4, P5, P6, P7, P8) et/ou orientation cible définie(s) rapportée(s) à cet autre produit de détail (2), et, puis, le produit de détail (2) se trouvant toujours dans le manipulateur est amené dans sa position cible (P1, P2, P3, P4, P5, P6, P7, P8) et/ou orientation cible définie(s) respective(s).

10. Procédé selon la revendication 9, dans lequel plusieurs produits de détail (2) sont saisis en même temps par le manipulateur (5) et sont utilisés pour déplacer un autre produit de détail (2) ou bien d'autres produits de détail (2) dans sa position cible (P1, P2, P3, P4, P5, P6, P7, P8) et/ou orientation cible définie(s) respective(s) ou bien dans leurs positions cibles (P1, P2, P3, P4, P5, P6, P7, P8) et/ou orientations cibles définies respectives, et, puis, les produits de détail (2) se trouvant toujours dans le manipulateur (5) sont amenés dans leurs positions cibles (P1, P2, P3, P4, P5, P6, P7, P8) et/ou orientations cibles définies respectives.

11. Procédé selon l'une quelconque des revendications 1 à 10, dans lequel au moins une autre composante de vitesse est imposée audit au moins un produit de détail (2) saisi et audit au moins un autre produit de détail (2), par rapport à une vitesse de transport (v3) de la formation fermée (F).

12. Procédé selon l'une quelconque des revendications 1 à 11, dans lequel au moins un produit de détail (2) transporté est saisi successivement, à plusieurs reprises, par serrage dans la formation fermée (F), est séparé spatialement de la formation fermée (F) et est amené dans une position cible (P1, P2, P3, P4, P5, P6, P7, P8) et/ou orientation cible relative(s) définie(s) respective(s) par rapport à des produits de détail (2) suivants, d'où résulte qu'un groupement pour une couche palettisable (12) ou une couche partielle est formé à partir de plusieurs produits de détails (2).

13. Dispositif (10) de mise en œuvre d'un procédé de manipulation de produits de détail (2) déplacés les uns derrière les autres en au moins une rangée (1), selon l'une quelconque des revendications 1 à 12, comprenant

   - au moins un manipulateur (5) pour les produits de détail (2),
   - au moins un dispositif de transport (3) par l'intermédiaire duquel des produits de détail (2) immédiatement successifs de la rangée (1) peuvent être transportés approximativement sans espacement, en tant que formation fermée (F), dans une zone de saisie (4) dudit au moins un manipulateur (5),
   **caractérisé par le fait que** le dispositif comprend:
   - un dispositif de commande pour commander le manipulateur (5),
   - dans lequel ledit au moins un manipulateur (5) est conçu pour recevoir par serrage ainsi que pour séparer et transférer dans une position cible (P1, P2, P3, P4, P5, P6, P7, P8) et/ou orientation cible au moins un produit de détail (2) de la formation fermée (F) transportée dans sa zone de saisie (4) au moyen dudit au moins un dispositif de transport (3),
   - et dans lequel ledit au moins un manipulateur (5) est conçu pour saisir au moins un produit de détail (2) situé en aval d'un produit de détail (2) de la formation fermée (F), qui est situé en premier, de sorte que ledit au moins un manipulateur (5) laisse le produit de détail (2) situé en premier, sans saisir celui-ci,
   - et dans lequel ledit au moins un manipulateur (5) est conçu pour pousser le produit de détail (2) situé en premier et non pas saisi par serrage par le manipulateur (5), dans une position cible (P1, P2, P3, P4, P5, P6, P7, P8) et/ou orientation cible respective(s) prévue(s) pour le produit de détail (2) situé en premier.

14. Dispositif selon la revendication 13, dans lequel ledit au moins un manipulateur (5) est conçu en tant que robot à cinématique parallèle (42) ou fait partie d'un tel robot à cinématique parallèle.

15. Dispositif (10) selon la revendication 13 ou 14, comprenant un dispositif de commande par l'intermédiaire duquel ledit au moins un manipulateur (5) peut être commandé pour saisir par serrage ledit au moins un produit de détail (2), pour séparer spatialement ledit au moins un produit de détail (2) de la formation fermée (F) ainsi que pour amener ledit au moins un produit de détail (2) dans la position cible (P1, P2, P3, P4, P5, P6, P7, P8) et/ou l'orientation cible définie(s), dans lequel ledit dispositif de commande présente ou bien a stocké des informations relatives à un groupement pour une couche palettisable (12), qui est à former à partir d'une pluralité de produits de détail (2), et dans lequel les positions cibles (P1, P2, P3, P4, P5, P6, P7, P8) et/ou orientations cibles respectives des produits de détail (2) constituent une partie des informations et associent audit au moins un produit de détail (2) respectif ainsi qu'audit produit de détail (2) respectif situé en premier une position déterminée et/ou une orientation relative dans le groupement respectif.

Fig. 1

Fig. 2

EP 3 445 691 B1

Fig. 3

Fig. 4

EP 3 445 691 B1

Fig. 5

Fig. 6

Fig. 7

Fig. 8

Fig. 9

TR, v6

2,2*

3,3a

1,1a,F,Fa

TR, v3

1,1b,F,Fb

6

5

3,3b

10

4

20

2

Fig. 10

TR, v6

2,2*

3,3a

1,1a,F,Fa

TR, v3

6

5

1,1b,F,Fb

10

4

20

2

3,3b

EP 3 445 691 B1

Fig. 11

Fig. 12

Fig. 13

Fig. 14

EP 3 445 691 B1

Fig. 15

Fig. 16

Fig. 17

3,3a    1,1a,F,Fa    TR, v3    1,1b,F,Fb    3,3b

TR, v6

2,2*,P1

5

2,2*,P2

2

20

4

6

10

Fig. 18

3,3a    1,1a,F,Fa    TR, v3    1,1b,F,Fb    3,3b

TR, v6

2,2*,P1

5

2,2*,P2

2

20

4

6

10

Fig. 19

Fig. 20

EP 3 445 691 B1

Fig. 21

Fig. 22

EP 3 445 691 B1

Fig. 23

Fig. 24

Fig. 25

Fig. 26

EP 3 445 691 B1

Fig. 27

Fig. 28

EP 3 445 691 B1

Fig. 29

2,2*,P3

2,2*,P4

3,3a

TR, v6

1,1a,F,Fa

2,2*,P1

6

5

TR, v3

2,2*,P2

1,1b,F,Fb

10

4

20

2

3,3b

Fig. 30

3,3a

TR, v6

1,1a,F,Fa

6

5

TR, v3

1,1b,F,Fb

10

4

20

2

3,3b

EP 3 445 691 B1

Fig. 31

Fig. 32

Fig. 33

Fig. 34

EP 3 445 691 B1

Fig. 35

Fig. 36

Fig. 37

Fig. 38

Fig. 39

2,2*,P3

2,2*,P4

2,2*,P7

3,3a

TR, v6

5

2,2*,P1

1,1a,F,Fa

6

TR, v3

2,2*,P2

1,1b,F,Fb

2,2*,P5

3,3b

10

4

2,2*,P6

20

2

Fig. 40

2,2*,P3

2,2*,P4

2,2*,P7

3,3a

TR, v6

2,2*,P1

5

1,1a,F,Fa

6

TR, v3

2,2*,P2

1,1b,F,Fb

2,2*,P5

3,3b

10

4

2,2*,P6

20

2

EP 3 445 691 B1

Fig. 41

TR, v6

3,3a

5

6

1,1a,F,Fa

TR, v3

1,1b,F,Fb

3,3b

10

4

20

2

Fig. 42

TR, v6

3,3a

5

6

1,1a,F,Fa

TR, v3

1,1b,F,Fb

3,3b

10

4

20

2

EP 3 445 691 B1

Fig. 43

TR, v6

3,3a

6

5

1,1a,F,Fa

TR, v3

1,1b,F,Fb

10

4

20

2

3,3b

Fig. 44

2,2*,P3

2,2*,P4

20

3,3a

TR, v6

2,2*,P7

2,2*,P1

1,1a,F,Fa

6

TR, v3

2,2*,P2

5

1,1b,F,Fb

10

4

2,2*,P5

2,2*,P6

2,2*,P8

2

3,3b

EP 3 445 691 B1

**EP 3 445 691 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1456101 A2
- US 5123231 A
- EP 1927559 A1
- US 20050246056 A1
- EP 2107018 A1
- DE 102011080812 A1
- DE 102009026220 A1
- DE 102009043970 A1
- DE 102010020847 A1

- EP 1382532 A1
- DE 3151997 A1
- US 2005230221 A
- DE 1486012
- DE 102013204095 A1
- DE 102010006155 A1
- DE 102013208082 A1
- US 8210068 B1